# EUROPEAN PATENT SPECIFICATION

(11) **EP 1 733 893 B1**
(45) Date of publication and mention of the grant of the patent: **16.01.2008**
(21) Application number: 06253108.2
(22) Date of filing: 15.06.2006
(51) Int. Cl.: B41J 13/00, G03G 15/00

(54) **Automatic document feeder**
Automatische Dokumentenzuführvorrichtung
Dispositif automatique d'alimentation de documents

(30) Priority: 15.06.2005 JP 2005175332
(43) Date of publication of application: 20.12.2006
(73) Proprietor: Brother Kogyo Kabushiki Kaisha, Nagoya-shi, Aichi-ken 467-8561 (JP)
(72) Inventor: Horaguchi, Yoichi IP Dept., Brother Kogyo K. K.,, Nagoya-shi, Aichi-ken 467-8562 (JP)
(74) Representative: Smith, Samuel Leonard

(56) References cited:
- EP-A- 0 851 310
- US-A- 6 047 959
- US-A- 6 161 831
- US-A1- 2003 160 386
- US-A1- 2004 065 991

## Description

### FIELD

Illustrative aspects of the present invention relate to an automatic document feeder suited for the double-sided reading of documents.

### BACKGROUND

In the prior art, an image reading apparatus to be mounted on a copier or a scanner or a multi function device having the functions of the former is known to have an automatic document feeder called the ADF (Auto Document Feeder) for transferring the documents from an input tray through a transfer path to an output tray. There is also known an automatic document feeder for reading a document having its two first and second sides printed. In this device, the document is reversed at its leading end and trailing end by reversible rollers while it is being transferred.

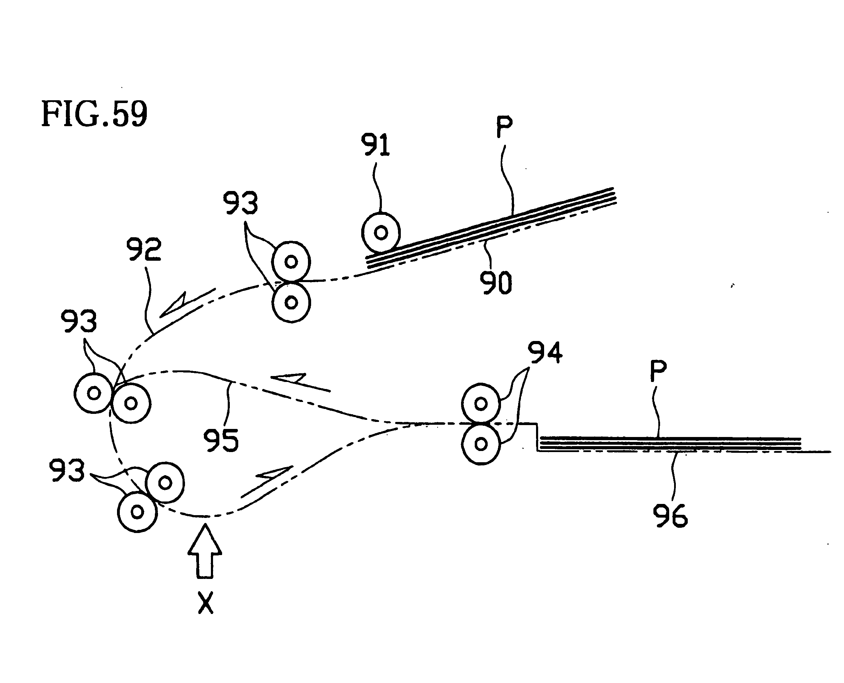

Fig. 59 shows a transfer route of the automatic document feeder of the prior art, which can perform double-sided reading. As shown, a document P placed on an input tray 90 with its first side (or first page) being directed upward is fed by a feed roller 91 to a transfer path 92. In the transfer path 92, the document P is transferred to suitably disposed transfer rollers 93 so that its first side is read while passing through a reading position X by image reading element such as a CCD or CIS. When the document P having its first side read is detected at its trailing end by the sensor, reversible rollers 94 are stopped while nipping the trailing end of the document The reversible rollers 94 reverse the transfer direction of the nipped document P to a return path 95. The document P transfers again from the return path 95 to the upstream side of the reading position X of the transfer path 92. As a result, the leading end and the trailing end of the document P are reversed. Then, the document P is transferred by the transfer rollers 93 so that its second side is read while being passed through the reading position X by the image reading element When the document P having its two sides read is detected at its trailing end by the sensor, the reversible rollers 94 are stopped again while nipping the trailing end of the document The document P having transferred again from the return path 95 into the transfer path 92 is reversed again at its leading end and the trailing end entering a state in which the first side opposes the reading position X. Then, the document P is transferred through the transfer path 92 and then is discharged with its first side being in a downward direction relative to an output tray 96. As a result, the document P has both its sides read, and is discharged to the output tray 96 with the same side of the document facing upward as when the document was placed on the input tray 90.

In the automatic document feeder of JP-A-8-133551 of performing the double-sided reading, the return path 95 for returning the document is formed, as shown, to connect the downstream side of the reading position X of the transfer path 92 near the output tray 96 with the upstream side of the reading position X of the transfer path 92 near the curved portion. As a result, the transfer path 92 and the return path 95 are arranged to overlap over the reading position X. Considering the curved shape for the smooth transfer of the document P and the arrangements of the transfer rollers 93 or the sensor or the like for detecting the document P, the device space above the reading position X is enlarged making it difficult to reduce the device size.

When the document P is sent to the return path 95, as described hereinbefore, a portion of the document P when nipped by the reversible rollers 94 is temporarily discharged onto the output tray 96. The protruded portion of the document P sticks to the output tray 96 so that it comes into contact with the document P which has been discharged to the output tray 96 after the image reading. The documents P on the output tray 96 are stacked in the discharged state. Therefore, the documents have their stacked state disturbed when contacting the portion of the document P discharged when returned. As a result, the document P may fall down from the output tray 96. In the case of performing the two returns, the portion of the document P discharged for the return makes two contacts with the document P on the output tray 96 so that the disturbance of the documents P on the output tray 96 is intensified When the transfer path 92 is made of a member of synthetic resin, the document P is charged during transfer while making contact with the member making the transfer path 92, so that the documents P easily contact with each other. As a result, the problem that the documents P contact each other on the output tray 96 is more serious.

### SUMMARY

Illustrative aspects of the present invention relate to an automatic document feeder suited for the double-sided reading of documents. According to at least some illustrative aspects, an automatic document feeder includes an input tray configured to receive a document; an output tray positioned one of above and below the input tray; and transfer elements for transferring a document from the input tray to the output tray. An input transfer path may be configured to guide a document during transfer from the input tray passed a scanning point to an end point positioned above the input tray. An output transfer path may be configured to guide the document during transfer from the end point passed the scanning point to the output tray.

### BRIEF DESCRIPTION OF THE DRAWINGS

Fig. 1 is a longitudinal section showing a configuration of an image reading apparatus according to illustrative aspects of the present invention;

Fig. 2 is an enlarged view showing a configuration of a first branching position according to at least one illustrative aspect of the invention;

Fig. 3 is an enlarged view showing a configuration of a second branching position according to at least one illustrative aspect of the invention;

Fig. 4 is an enlarged view showing a configuration of a first front sensor according to at least one illustrative aspect of the invention;

Fig. 5 is a schematic diagram for explaining the image reading actions of the image reading apparatus according to at least one illustrative aspect of the invention;

Fig. 6 is a schematic diagram for explaining the image reading actions of the image reading apparatus according to at least one illustrative aspect of the invention;

Fig. 7 is a schematic diagram for explaining the image reading actions of the image reading apparatus according to at least one illustrative aspect of the invention;

Fig. 8 is a schematic diagram for explaining the image reading actions of the image reading apparatus according to at least one illustrative aspect of the invention;

Fig. 9 is a schematic diagram for explaining the image reading actions of the image reading apparatus according to at least one illustrative aspect of the invention;

Fig. 10 is a schematic diagram for explaining the image reading actions of the image reading apparatus according to at least one illustrative aspect of the invention;

Fig. 11 is a schematic diagram for explaining the image reading actions of the image reading apparatus according to at least one illustrative aspect of the invention;

Fig. 12 is a schematic diagram for explaining the image reading actions of the image reading apparatus according to at least one illustrative aspect of the invention;

Fig. 13 is a schematic diagram for explaining the image reading actions of the image reading apparatus according to at least one illustrative aspect of the invention;

Fig. 14 is a schematic diagram for explaining the image reading actions of the image reading apparatus according to at least one illustrative aspect of the invention;

Fig. 15 is a schematic diagram for explaining the image reading actions of the image reading apparatus according to at least one illustrative aspect of the invention;

Fig. 16 is a schematic diagram for explaining the image reading actions of the image reading apparatus according to at least one illustrative aspect of the invention;

Fig. 17 is a schematic diagram for explaining the image reading actions of the image reading apparatus according to at least one illustrative aspect of the invention;

Fig. 18 is a schematic diagram for explaining the image reading actions of the image reading apparatus according to at least one illustrative aspect of the invention;

Fig. 19 is a schematic diagram for explaining the image reading actions of the image reading apparatus according to at least one illustrative aspect of the invention;

Fig. 20 is a schematic diagram showing a major configuration of an image reading apparatus according to illustrative aspects of the invention;

Fig. 21 is an enlarged view showing a configuration of a first branching position according to at least one illustrative aspect of the invention;

Fig. 22 is an enlarged view showing the configuration of the first branching position according to at least one illustrative aspect of the invention;

Fig. 23 is an view showing the configuration of the first branching position according to at least one illustrative aspect of the invention;

Fig. 24 is a schematic diagram for explaining the image reading actions of the image reading apparatus according to at least one illustrative aspect of the invention;

Fig. 25 is a schematic diagram for explaining the image reading actions of the image reading apparatus according to at least one illustrative aspect of the invention;

Fig. 26 is a schematic diagram for explaining the image reading actions of the image reading apparatus according to at least one illustrative aspect of the invention;

Fig. 27 is a schematic diagram for explaining the image reading actions of the image reading apparatus according to at least one illustrative aspect of the invention;

Fig. 28 is a schematic diagram for explaining the image reading actions of the image reading apparatus according to at least one illustrative aspect of the invention;

Fig. 29 is a schematic diagram for explaining the image reading actions of the image reading apparatus according to at least one illustrative aspect of the invention;

Fig. 30 is a schematic diagram showing a major configuration of an image reading apparatus according to illustrative aspects of the invention;

Fig. 31 is an enlarged view showing a configuration of an intersecting position according to at least one illustrative aspect of the invention;

Fig. 32 is a schematic diagram for explaining the image reading actions of an image reading apparatus according to at least one illustrative aspect of the invention;

Fig. 33 is a schematic diagram for explaining the image reading actions of the image reading apparatus according to at least one illustrative aspect of the invention;

Fig. 34 is a schematic diagram for explaining the image reading actions of the image reading apparatus according to at least one illustrative aspect of the invention;

Fig. 35 is a schematic diagram for explaining the image reading actions of the image reading apparatus according to at least one illustrative aspect of the invention;

Fig. 36 is a schematic diagram for explaining the image reading actions of the image reading apparatus according to at least one illustrative aspect of the invention;

Fig. 37 is a schematic diagram for explaining the image reading actions of the image reading apparatus according to at least one illustrative aspect of the invention;

Fig. 38 is a schematic diagram for explaining the image reading actions of the image reading apparatus according to at least one illustrative aspect of the invention;

Fig. 39 is a schematic diagram showing a major configuration of an image reading apparatus according to illustrative aspects of the invention;

Fig. 40 is an enlarged view showing a configuration of an intersecting position according to at least one illustrative aspect of the invention;

Fig. 41 is an enlarged view showing the configuration of a third branching position according to at least one illustrative aspect of the invention;

Fig. 42 is a schematic diagram for explaining the image reading actions of an image reading apparatus according to at least one illustrative aspect of the invention;

Fig. 43 is a schematic diagram for explaining the image reading actions of the image reading apparatus according to at least one illustrative aspect of the invention;

Fig. 44 is a schematic diagram for explaining the image reading actions of the image reading apparatus according to at least one illustrative aspect of the invention;

Fig. 45 is a schematic diagram for explaining the image reading actions of the image reading apparatus according to at least one illustrative aspect of the invention;

Fig. 46 is a schematic diagram for explaining the image reading actions of the image reading apparatus according to at least one illustrative aspect of the invention;

Fig. 47 is a schematic diagram for explaining the image reading actions of the image reading apparatus according to at least one illustrative aspect of the invention;

Fig. 48 is a schematic diagram for explaining the image reading actions of the image reading apparatus according to at least one illustrative aspect of the invention;

Fig. 49 is a schematic diagram showing a major configuration of an image reading apparatus according to illustrative aspects of the invention;

Fig. 50 is an enlarged view showing the configuration of a fourth branching position according to at least one illustrative aspect of the invention;

Fig. 51 is an enlarged view showing the configuration of a branching position according to at least one illustrative aspect of the invention;

Fig. 52 is a schematic diagram for explaining the image reading actions of the image reading apparatus according to at least one illustrative aspect of the invention;

Fig. 53 is a schematic diagram for explaining the image reading actions of the image reading apparatus according to at least one illustrative aspect of the invention;

Fig. 54 is a schematic diagram for explaining the image reading actions of the image reading apparatus according to at least one illustrative aspect of the invention;

Fig. 55 is a schematic diagram for explaining the image reading actions of the image reading apparatus according to at least one illustrative aspect of the invention;

Fig. 56 is a schematic diagram for explaining the image reading actions of the image reading apparatus according to at least one illustrative aspect of the invention;

Fig. 57 is a schematic diagram for explaining the image reading actions of the image reading apparatus according to at least one illustrative aspect of the invention;

Fig. 58 is a schematic diagram for explaining the image reading actions of the image reading apparatus according to at least one illustrative aspect of the invention; and

Fig. 59 is a diagram showing the schematic configuration of the image reading apparatus of the prior art.

### DETAILED DESCRIPTION

Illustrative aspects of the present invention will be described with suitable reference to the accompanying drawing. These aspects merely provide examples of the invention, and it is needless to say that the aspects can be suitably modified without departing from the gist of the invention.

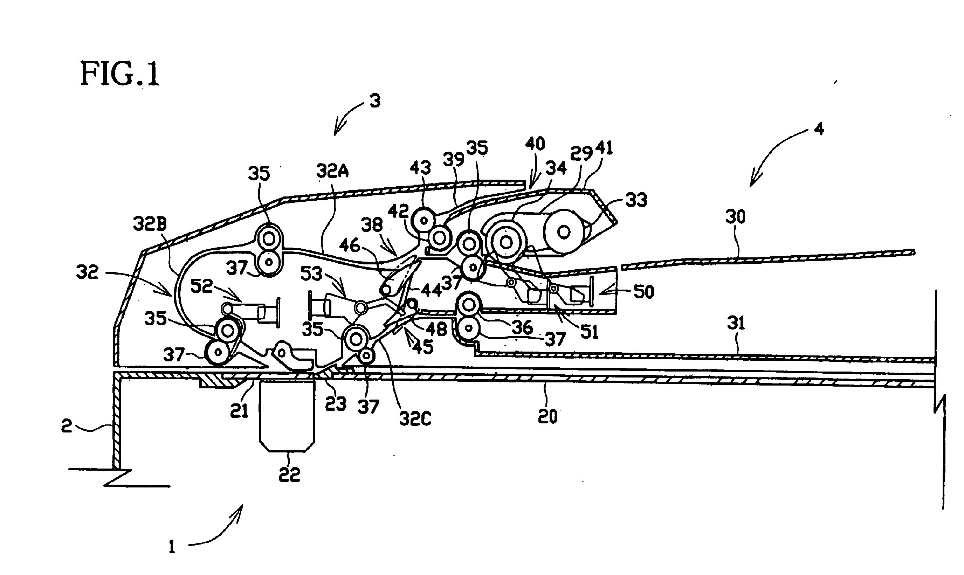

Fig. 1 shows a major configuration of an image reading apparatus 1 according to aspects of the present invention. This image reading apparatus 1 is realized as an image reading unit for reading the image of a document, for example, in a copier, a facsimile machine, a scanner or a multi-function apparatus (MFD), which integrally combines the functions of each of the aforementioned devices.

In the image reading apparatus 1, as shown in Fig. 1, a document cover 4having an auto document feeder (ADF) 3 is hinged to a document placing table 2 functioning as an FBS (Flatbet Scanner). This ADF 3 constitutes an automatic document feeder according to aspects of the invention.

At the document placing table 2, there are arranged platen glass plates 20 and 21 on the top side opposing the document holding cover 4. When this document cover 4is opened, the platen glass plates 20 and 21 are exposed as the upper face of the document placing table 2. When the document cover 4is closed, on the other hand, the entirety of the upper face of the document placing table 2 including the platen glass plates 20 and 21 is covered. In the document placing table 2, there is mounted an image reading unit 22 (or image reading means) that opposes the platen glass plates 20 and 21.

The document rests on the platen glass plate 20 when the image reading apparatus 1 is used as the FBS and may be made of a transparent glass plate, for example. At the center of the upper face of the document placing table 2, there is formed an opening for exposing the platen glass plate 20 to the outside, so that the area of the platen glass plate 20 exposed from that opening serves as the image reading area in the FBS.

The platen glass plate 21 serves as the reading position when the ADF 3 of the image reading apparatus 1 is used, and may be made of a transparent glass plate, for example. The platen glass plate 21 extends in the depth direction of Fig. 1 to correspond to the length of the image reading unit 22 in the primary scanning direction.

Between the platen glass plate 20 and the platen glass plate 21, there is interposed a positioning member 23. This positioning member 23 is an elongated flat plate member that is extended like the platen glass plate 21 in the depth direction of Fig. 1. The positioning member 23 is used as a document positioning reference when the document is placed on the platen glass plate 20 or the document placing table of the FBS. The positioning member 23 is provided on its upper face with marks indicating the center position and the two end positions of various document sizes such as A4 size or B5 size. The upper face of the positioning member 23 is provided with a guide face, which is caused by the ADF 3 to direct up (or to deflect) the document passing on the platen glass plate 21 and to return to the ADF 3.

The image reading unit 22 is the so-called "image sensor" for irradiating the document optically from a light source through the platen glass plates 20 and 21 so that the reflected light from the document is condensed by a lens onto a light receiving element and converted into electric signals. The image reading unit 22 can use a contact type CIS (Contact Image Sensor) image sensor or a reducing optical system CCD (Charge Coupled Device). Moreover, the image reading unit 22 is enabled by a belt drive mechanism acting as a scanning mechanism to scan below the platen glass plates 20 and 21, and is scanned by the driving force of a carriage motor to reciprocate in parallel with the platen glass plates 20 and 21.

The document cover 4is provided with the ADF 3 for feeding the document continuously from a input tray 30 through a transfer path 32 to a output tray 31. In the transfer process performed by the ADF 3, the document passes over the platen glass plate 21 so that its image can be read by the image reading unit 22 positioned below the platen glass plate 21.

As shown in Fig. 1, the document cover 4is provided with two vertical stages of the input tray 30 and the output tray 31 such that the input tray 30 is located on the upper side. The document, the image of which is read by the ADF 3, is placed on the input tray 30. Documents are placed on the input tray 30 so that their leading ends in the paper feeding directions are inserted into the transfer path 32 with their first sides being directed upward.

The output tray 31 is positioned at a vertical distance from the lower side of the input tray 30, and is made integral with the upper face of the document holding cover 4. Therefore, the document is held, as it is discharged from the ADF 3, on the discharge tray 31 such that its first side is directed downward while being separated from any other documents on the input tray 30.

Inside of the ADF 3, as shown, the transfer path 32, which is generally U-shaped in a longitudinally sectional view, is formed to connect the input tray 30 and the output tray 31. This transfer path 32 of the members forming the ADF body and the guide plates is formed into a continuous passage of a predetermined width for the document to pass therethrough. Specifically, the transfer path 32, which is generally U-shaped in the longitudinally sectional view, extends from the input tray 30 to one end side of the document cover 4(i.e., the left hand side of the drawing), continuously curves to turn downward to the reading position of the platen glass plate 21 and extends from the reading position to the output tray 31. The transfer path 32 is coarsely composed of three portions of an upper-side portion 32A and the lower-side portion 32C forming the two upper and lower straight portions of the U-shape, and a curved portion 32B curved to continue the upper-side portion 32A and the lower-side portion 32C. This transfer path 32 is the document transfer route commonly used for single-side reading and double-side reading of the document by the ADF 3.

In the transfer path 32, there is arranged transfer means for transferring the document Specifically, this transfer means is constructed, as shown, of a pick-up roller 33, a separation roller 34, transfer rollers 35 and a discharge roller 36, which are individually disposed in the transfer path 32, and pinch rollers 37 urged to abut against those rollers. Here, the configuration of the individual rollers and so on making up the transfer means is presented by way of example, and another well-known transfer means could naturally be made by modifying the number and/or arrangement of the rollers.

In the vicinity of the most upstream portion of the transfer path 32, there is disposed the pick-up roller 33 and the separation roller 34. The pick-up roller 33 is rotatably positioned on the leading end portion of an arm 29, which is disposed coaxially with the rotation axis of the separation roller 34. On the other hand, the separation roller 34 is rotationally disposed at a position spaced in the feeding direction from the pick-up roller 33 so as to abut against the opposing face of the transfer path 32. These pick-up roller 33 and separation roller 34 are rotationally driven by the driving force transmitted from a transfer motor, and the arm 29 is also rocked by the driving force transmitted from the transfer motor. Moreover, the pick-up roller 33 and the separation roller 34 are provided with an equal diameter and rotated at an equal circumferential speed. At a position opposing the separation roller 34, there is arranged a separation pad, which is urged to abut against the roller face of the separation roller 34 to separate the document by the friction.

The transfer rollers 35 are arranged at predetermined positions in the transfer path 32. Specifically, the predetermined positions are located just downstream of the separation roller 34, at the upper-side portion 32A of the transfer path 32 and at the lower-side portion 32C of the transfer path 32, that is, the transfer rollers 35 are arranged at the four portions just upstream and downstream of the reading position. However, this arrangement is just one example, and it goes without saying that the arrangement of the transfer rollers 35 could be suitably changed. These transfer rollers 35 are rotationally driven by the driving force transmitted from the transfer motor.

At the opposing positions of the individual transfer rollers 35, there are individually disposed the pinch rollers 37. These individual pinch rollers 37 have their pins elastically urged by springs to abut against the roller faces of the individual transfer rollers 35. As these transfer rollers 35 rotate, the pinch rollers 37 follow to rotate. By these pinch rollers 37, the document is pushed onto the transfer roller 35 so that the rotating force of the transfer roller 35 is transmitted to the document.

The discharge roller 36 is arranged near the most downstream portion of the transfer path 32 and is rotationally driven like the transfer roller 35 by the driving force coming from the transfer motor. At the opposing position of the discharge roller 36, there is arranged the pinch roller 37, which is elastically urged by a spring to abut against the discharge roller 36.

At the upper-side portion 32A of the transfer path 32, there is formed a bidirectional path 39 for again transferring the document, the first side of which has been read at the reading position, to the transfer path 32. Specifically, the bidirectional path 39 is branched from a first branching position 38 of the upper-side portion 32A of the transfer path 32, located upstream of the reading position, obliquely upward to the input tray 30. Moreover, the bidirectional path 39 has its terminal end 40 opened to the upper face of the ADF 3. The transfer route formed by the bidirectional path 39 has a distance set shorter than the length of the document of the largest size in the transfer direction so that the document having entered the bidirectional path 39 partially protrudes over the terminal end 40 to outside the ADF 3. This makes it unnecessary to keep the distance of the transfer route of the bidirectional path 39 equal to or longer than the largest document readable in the feeding direction.

By thus forming the bidirectional path 39 obliquely upward from the upper-side portion 32A of the transfer path 32 toward the input tray 30, the upper-size space of the input tray 30 can be effectively exploited. Moreover, the transfer route of the transfer path 32 from the side of the input tray 30 to the side of the reading position and the transfer route from the bidirectional path 39 to the transfer path 32 on the side of the reading position intersect at an acute angle at the first branching position 38. Therefore, the document does not proceed at the first branching position 38 from the transfer path 32 on the side of the input tray 30 into the bidirectional path 39, and the document returned from the bidirectional path 39 does not proceed into the transfer path 32 on the side of the input tray 30. This makes it simple to configure the guide (or a guide flap 46) for guiding the document to a predetermined transfer route at the first branching position 38. Here, the bidirectional path 39 is used to reverse the surface and back of the document after it has been read, so that the document before it is read is not guided from the first branching position 38 to the bidirectional path 39. Therefore, the transfer of the document is not adversely affected even if the transfer route from the transfer path 32 on the side of the input tray 30 to the first branching position 38 and the transfer route from the bidirectional path 39 to the first branching position 38 intersect at an acute angle.

On the side of the input tray 30 from the terminal end 40 of the bidirectional path 39, there is formed a document supporting portion 41, which continues from that terminal end 40. The document supporting portion 41 supports the document protruding from the terminal end 40 of the bidirectional path 39, and forms a casing for the ADF 3 on the upper side of the pick-up roller 33 and the separation roller 34. This casing of the ADF 3 is formed to cover the pick-up roller 33 and the separation roller 34, and the document supporting portion 41 constructed as the casing is extended from the terminal end 40 toward the input tray 30 to extend to the upstream of the paper feeding position by the pick-up roller 33 and the separation roller 34. In double-sided reading, therefore, the document having entered the bidirectional path 39 and protruding from the terminal end 40 to the outside of the ADF 3 does not hang down to the downstream side (on the left hand side of the drawing) from the feeding position of the documents stacked on the input tray 30, so that it is not disturbed at the feeding position.

On the bidirectional path 39, there is arranged a reversible roller 42. This reversible roller 42 is rotationally driven forward and backward when the driving force from the transfer motor is transmitted. At a position opposing the reversible roller 42, on the other hand, there is disposed a pinch roller 43. This pinch roller 43 has its shaft elastically urged by a spring to abut against the roller face of the reversible roller 42 so that it rotates following the rotation of the reversible roller 42. By this pinch roller 43, the document is pushed onto the reversible roller 42 so that the rotating force of the reversible roller 42 is transmitted to the document The reversible roller 42 and pinch roller 43 reverse the transfer direction of the document.

At the lower-side portion 32C of the transfer path 32 and on the downstream side of the reading position, there is formed a bypass 44 for guiding the document having its first side read at the reading position, in the double-sided reading case, to the bidirectional path 39. Specifically, the bypass 44 is branched from a second branching position on the lower-side portion 32C of the transfer path 32 and on the downstream side of the reading position, and is directed obliquely upward to merge into the first branching position 38. By thus arranging the first branching position 38, as branched from the transfer path 32, which is U-shaped in the lateral direction, to the bidirectional path 39, at the upper-side portion 32A of the transfer path 32 and by arranging the second branching position 45, as branched from the downstream side of the reading position to the bypass 44 to be connected to the bidirectional path 39, at the lower-side portion 32C of the transfer path 32, the configuration of the curved portion 32B of the transfer path 32 can be simplified.

Moreover, the transfer route from the bypass 44 to the bidirectional path 39 is substantially straight, but the transfer route from the bypass 44 to the transfer path 32 on the side of the input tray 30 is bent so that the document transferred from the bypass 39 to the first branching position 38 proceeds not to the transfer path 32 on the side of the input tray 30 but straight to the bidirectional path 39. As a result, the configuration of the guide (i.e., a guide flap 46) for guiding the document at the first branching position 38 to a predetermined transfer route is simplified.

Moreover, the transfer route to be formed by the bidirectional path 39 from the reading position of the transfer path 32 through the bypass 44 is formed into an S-shape in the longitudinally sectional view. This shape makes the transfer of the document from the reading position of the transfer path 32 through the bypass 44 to the bidirectional path 39 smoother thereby to prevent the paper from jamming at the first branching position 38, the second branching position 45 and so on. Moreover, the transfer route to be formed by the bidirectional path 39 from the upper-side portion 32A of the straight portion of the U-shape of the transfer path 32 through the first branching position 38 is also formed into an S-shape in the longitudinally sectional view. As a result, the transfer of the document from the bidirectional path 39 through the first branching position 38 to the upper-side portion 32A of the transfer path 32 is smoother to prevent the paper from jamming at the first branching position 38 and so on. By forming the two transfer routes into the S-shape, as described above, the configuration of the guide (i.e., the guide flap 46) at the first branching position 38 is simplified.

Moreover, the length of the loop-shaped transfer route extending from the first branching position 38 of the transfer path 32 through the reading position and the second branching position 45 and further from the bypass 44 to the first branching position 38 is set longer than the transfer-direction length of the largest readable document For example, the largest readable document has a transfer-direction length of 297 mm for the A4 size, 11 inches for the letter size, and 14 inches for the legal size. Therefore, the length of the aforementioned loop-shaped transfer route is set longer than those lengths. In double-sided reading, therefore, when the leading end of the document passes through the reading position and proceeds to the first branching position 38, the trailing end of the document never fails to pass through the first branching position 38 so that the first branching position 38 can be prevented from experiencing paper jamming or the like.

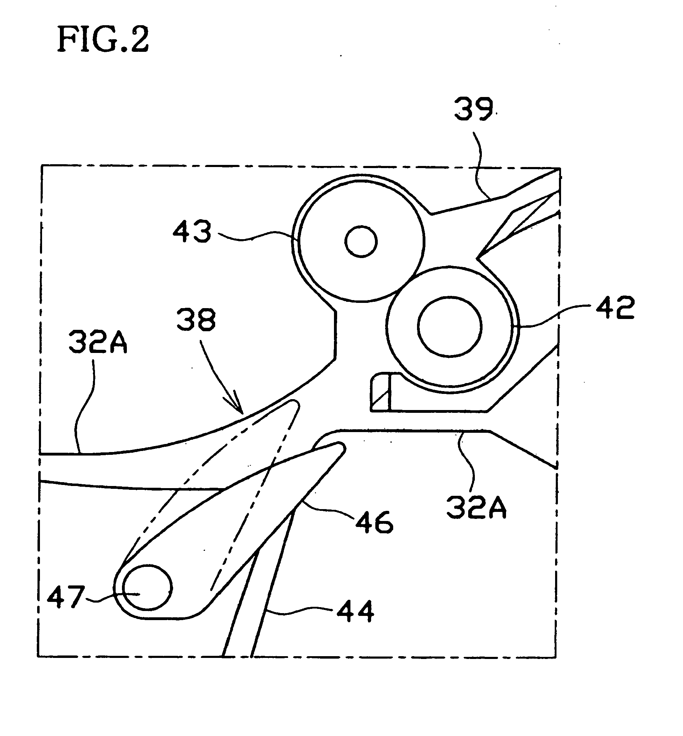

At the first branching position 38, as shown in Fig. 1 and Fig. 2, there is arranged the guide flap 46 (i.e., first guide) for guiding the document into the desired transfer route. The guide flap 46 is arranged to rock on a pin 47 so that it can be switched between the position indicated by a solid line in Fig. 2 and the position indicated by a double-dotted line. When the guide flap 46 is at the position indicated by the solid line, the transfer route continues from the upper-side portion 32A of the transfer path 32 on the side (i.e., the right hand side of the drawing) of the input tray 30 to the side (i.e., the left hand side of the drawing) of the reading position. Therefore, the document fed from the input tray 30 is guided at the first branching position 38 toward the upper-side portion 32A of the transfer path 32 on the upstream side of the reading position. When the guide flap 46 is positioned, as indicated by the double-dotted lines, on the other hand, the transfer route continues from the bypass 44 to the bidirectional path 39. As a result, the document being transferred in the bypass 44 toward the upstream is guided at the first branching position 38 to proceed into the bidirectional path 39.

The switching of the transfer route by the guide flap 46 is performed by the abutment of the document. Specifically, the guide flap 46 is positioned at the normal time, as shown by the solid line in Fig. 2, such that the transfer route continues from the transfer path 32 on the side (i.e., the right hand side of the drawing) of the input tray 30 to the side (i.e., the left hand side of the drawing) of the reading position. Moreover, when the document being transferred to the upper side in the bypass 44 comes into abutment against the guide flap 46, this guide flap 46 is pushed upward to rock to the position, as indicated by the double-dotted line in Fig. 2, so that the document proceeds across the transfer path 32 into the bidirectional path 39. Moreover, the document having been transferred from the bidirectional path 39 to the first branching position 38 comes into abutment with the guide flap 46. However, this guide flap 46 does not rock downward from the position as indicated by the solid line in Fig. 2 so that the document proceeds, while being guided by the guide flap 46, on the upper-side portion 32A of the transfer path 32 to the side of the reading position (i.e., the left hand side of the drawing). Here, the transfer route is bent at an acute angle from the bidirectional path 39 to the side of the input tray 30 (i.e., the right hand side of the drawing) of the upper-side portion 32A so that the document having been transferred from the bidirectional path 39 to the first branching position 38 does not proceed to the side of the input tray 30. Thus, the guide flap 46 is arranged at the first branching position 38 to guide the document to the desired transfer route. Here in this illustrative aspect, the guide flap 46 is switched by the abutment of the document, but may also be positively rocked by the driving force of the transfer roller or the like.

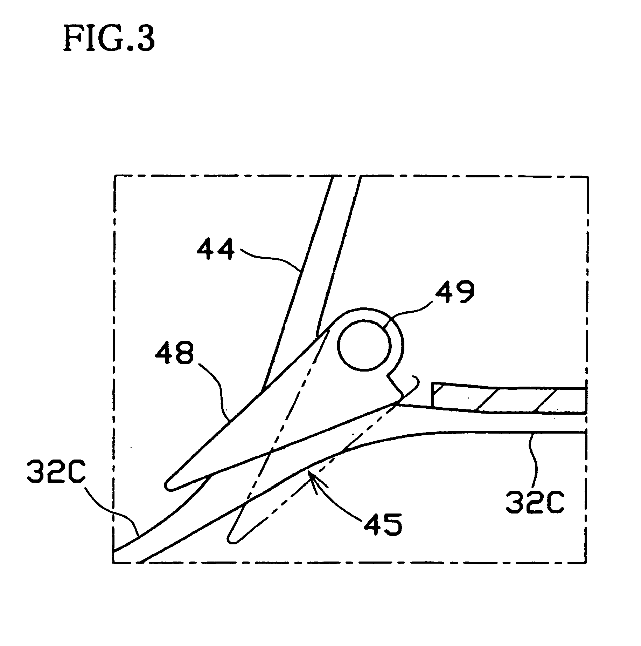

In the second branching position 45, as shown in Fig. 1 and Fig. 3, there is arranged a guide flap 48 (i.e., second guide) for guiding the document into a desired transfer route. The guide flap 48 is arranged to rock on a pin 49 so that it can be switched between the position indicated by a solid line in Fig. 3 and the position indicated by a double-dotted line. When the guide flap 48 is at the position indicated by the solid line, the transfer route continues from the transfer path 32 on the side (i.e., the left hand side of the drawing) of the reading position to the side (i.e., the right hand side of the drawing) of the output tray 31. Therefore, the document having passed through the reading position is guided at the second branching position 45 in the lower-side portion 32C of the transfer path 32 toward the output tray 31. On the other hand, when the guide flap 48 takes the position, as indicated by the double-dotted lines, the transfer route continues from the downstream side of the reading position in the lower-side portion 32C of the transfer path 32 to the bypass 44. Therefore, the document having passed the reading position is guided at the second branching position 45 to proceed into the bypass 44. Thus, the guide flap 48 is arranged at the second branching position 45 to guide the document into the desired transfer route.

As shown in Fig. 1, the transfer path 32 and the bypass 44 are provided with sensors for detecting the transfer of the document In the transfer path 32, more specifically, there are arranged a first front sensor 50 and a second front sensor 51 on the upstream side and the downstream side of the separation roller 34, respectively. A rear sensor 52 is arranged just on the upstream side of the reading position. In the bypass 44, on the other hand, there is arranged a sensor 53. These individual sensors are the so-called "optical sensors", which have similar configurations except that their detectors have different shapes or the like due to the difference in the detecting position. Therefore, the configuration is described on the first front sensor 50, for example.

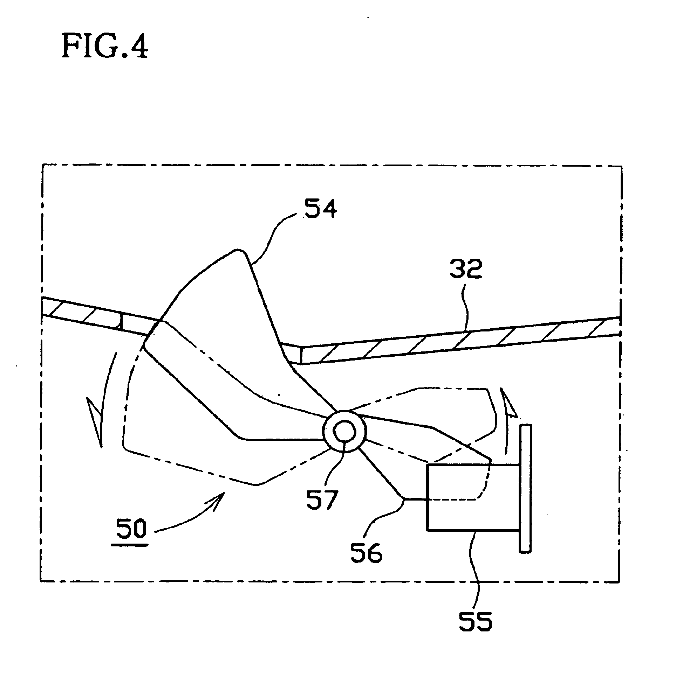

The first front sensor 50 is constructed, as shown in Fig. 4, to include a detector 54 protruding from the lower face of the transfer path 32 and turning, when contacting with the document G, to retract from the transfer path 32, and a photo interrupter 55 for detecting the turning motion of the detector 54. This detector 54 is integrally equipped with a shielding portion 56 to be detected by the photo interrupter 55, and can be made to pivot on a pin 57. The detector 54 is elastically urged by the not-shown urging means such as a spring to protrude into the transfer path 32, i.e., to turn counter-clockwise, as shown. With no external force being applied to the detector 54, therefore, the detector 54 protrudes, as shown by solid lines in the drawing, into the transfer path 32 so that the shielding portion 56 is interposed between the light emitting portion and the light receiving portion of the photo interrupter 55. As a result, the optical transmission of the photo interrupter 55 is blocked so that the first front sensor 50 is turned OFF.

When the document G is placed on the input tray 30, on the other hand, it abuts against the detector 54 turning the detector 54 away from the transfer path 32. Then, the shielding portion 56 is turned together with the detector 54 so that the shielding portion 56 leaves the space between the light emitting portion and the light receiving portion of the photo interrupter 55, as shown by double-dotted lines in the drawing. As a result, the optical transmission of the photo interrupter 55 is not blocked to turn ON the first front sensor 50. It is detected in terms of ON/OFF of the first front sensor 50 whether the document G has been placed on the input tray 30.

On the other hand, the second front sensor 51 arranged just downstream of the separation roller 34 detects the leading end or the trailing end of the document G transferred in the transfer path 32, based on its ON/OFF state. Whether the trailing end of the document G has passed through first branching position 38 is determined by monitoring the speed of the transfer roller 35, after the second front sensor 51 detects the trailing end of the document G, in terms of the step number or the like of an encoder or the transfer motor.

On the other hand, the rear sensor 52 arranged just upstream of the reading position detects the leading end or the trailing end of the document G to be transferred in the transfer path 32, based on its ON/OFF state. Whether the leading end or the trailing end of the document G has reached the reading position is determined by monitoring the speed of the transfer roller 35, after the rear sensor 52 detects the leading end or the trailing end of the document G, in terms of the step number or the like of the encoder or the transfer motor. The image reading of the image reading unit 22 is controlled on the basis of the signal of the rear sensor 52 so that it is started when the leading end of the document G reaches the reading position, and is ended when the trailing end of the document G reaches the reading position.

On the other hand, the sensor 53 arranged in the bypass 44 detects the leading end or the trailing end of the document G being transferred in the bypass 44 based on its ON/OFF state. Whether the trailing end of the document G has passed through the first branching position 38 is determined by monitoring the speeds of the transfer roller 35 and the reversible roller 42 after the sensor 53 detects the trailing end of the document G, in terms of the step number or the like of the encoder or the transfer motor.

The image reading actions by the present image reading apparatus 1 are described in the following.

The image reading apparatus 1 can be used as either the FBS or the ADF 3, but the use as the FBS does not especially relate to the invention so its detailed description is omitted. In the case of using the ADF 3, the document cover 4is closed with respect to the document placing table 2. The document G to be read is placed on the input tray 30. The document G is placed on the input tray 30 in the so-called "face-up" with its reading side (or the first side) being directed upward. Moreover, the document G may be either one or more sheets. When a documents G of the same size are to be subjected to image reading, they are stacked on the input tray 30 with the first side of the first page of each document G being directed upward.

When a reading start is inputted to the image reading apparatus 1, the carriage motor and the transfer motor are activated to drive the pick-up roller 33, the separation roller 34, the transfer roller 35, the discharge roller 36 and the reversible roller 42 rotationally at predetermined timings. Moreover, the arm 29 is lowered to bring the pick-up roller 33 into abutment against the document G on the input tray 30. Then, the documents G are separated sheet by sheet from the highest one that receives the rotating forces of the pick-up roller 33 and the separation roller 34 so that the separated sheet is fed to the transfer path 32. The document G thus fed is transferred, while being guided by the transfer path 32, to the reading position so that its image is read by the image reading unit 22 which stands still below the reading position. The document G having finished the image reading is discharged to the output tray 31. In these image reading actions, the transfer route of the document G is different between the single-sided reading case and the double-sided reading case of the document G. Whether the document G is to be subjected to the single-sided reading or the double-sided reading is set prior to initiating image reading.

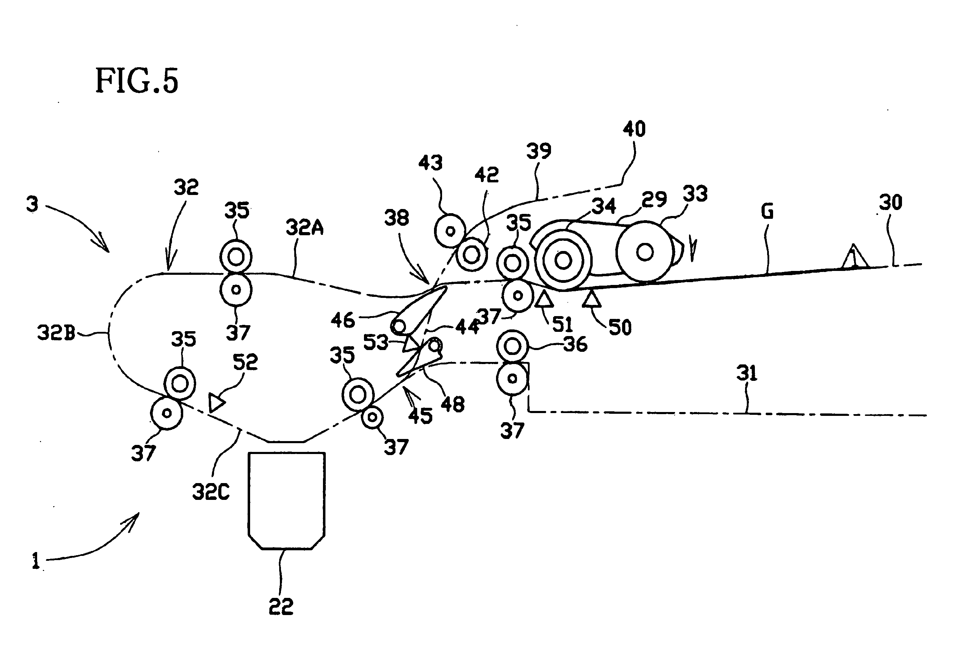

The first description is made on the single-sided reading. When the reading start is inputted to the image reading apparatus 1, as shown in Fig. 5, the guide flap 48 switches the transfer route at the second branching position 45 to continue from the reading position side of the transfer path 32 to the side of the output tray 31. Here, the guide flap 46 is positioned, when the document G does not abut, to continue the transfer route at the first branching position 38 from the transfer path 32 on the side of the input tray 30 to the reading position side.

Subsequently, it is detected by the first front sensor 50 whether the document G is placed on the input tray 30. When the document G is not placed on the input tray 30, an error display of "No Document" is made on the display unit of the image reading apparatus 1. If the document G is placed on the input tray 30, the driving force is transmitted from the transfer motor so that the arm 29 moves downward. As a result, the pick-up roller 33 comes into abutment with the document G on the input tray 30. Then, the pick-up roller 33 and the separation roller 34 rotate to feed the document G into the transfer path 32. When documents G are placed on the input tray 30, the document just below the uppermost document G may be fed together with the uppermost one. The second document is blocked by a separation pad disposed at the opposing position of the separation roller 34.

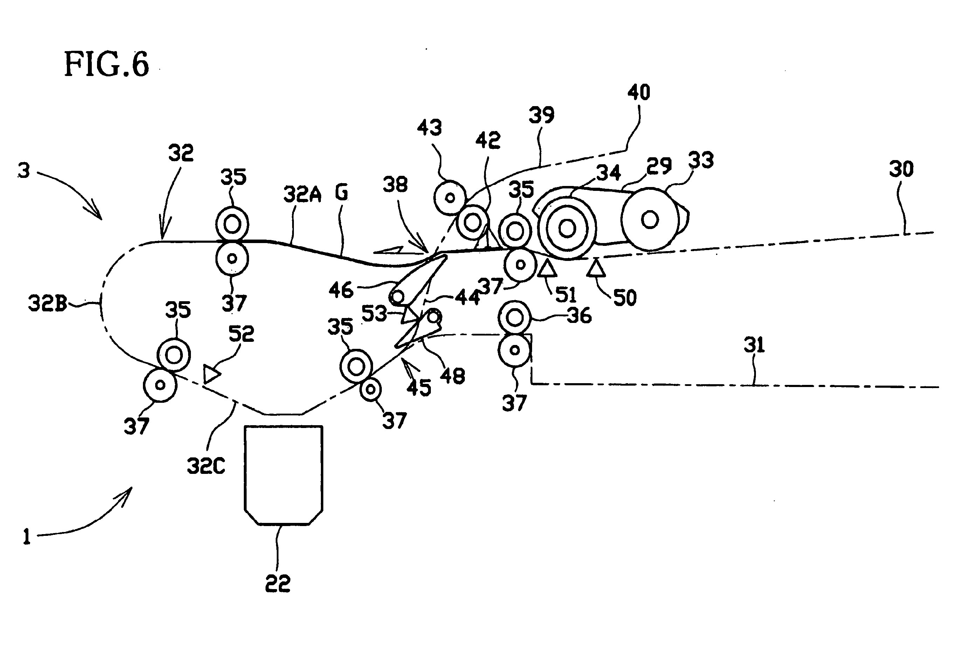

In the transfer path 32, the driving force from the transfer motor is transmitted to the transfer roller 35 and the discharge roller 36 so that these rollers are rotated to transfer the document G from the upstream side to the downstream side of the transfer path 32. The document G thus fed from the input tray 30 to the transfer path 32 is nipped by the transfer roller 35 and the pinch roller 37 so that it is transferred in the transfer path 32 by the rotating force transmitted. As shown in Fig. 6, the document G is transferred at the first branching position 38 to the upstream side of the reading position of the transfer path 32. The transfer route from the side of the input tray 30 to the transfer path 32 on the reading position side is substantially straight, but the transfer route from the input tray 30 on the side of the transfer path 32 to the bidirectional path 39 is bent at an acute angle, so that the document G fed from the input tray 30 does not proceed into the bidirectional path 39. Moreover, the transfer route from the first branching position 38 to the bypass 44 is closed by the guide flap 46. As a result, the document G is guided at the first branching position 38 to the upstream side of the reading position by the guide flap 46.

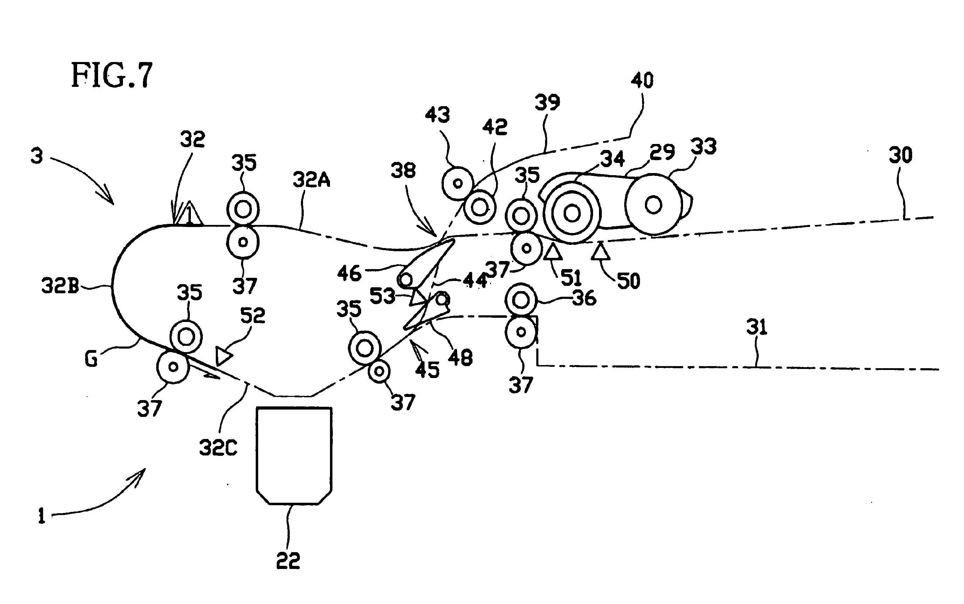

As shown in Fig. 7, the document G is transferred as it is turned back downward by the curved portion 32B of the transfer path 32, and its leading end is detected by the rear sensor 52. The leading end of the document G reaches the reading position when a predetermined time elapses after having been detected by the rear sensor 52. When the leading end of the document G reaches the reading position, the image reading unit 22 starts the image reading of the document G.

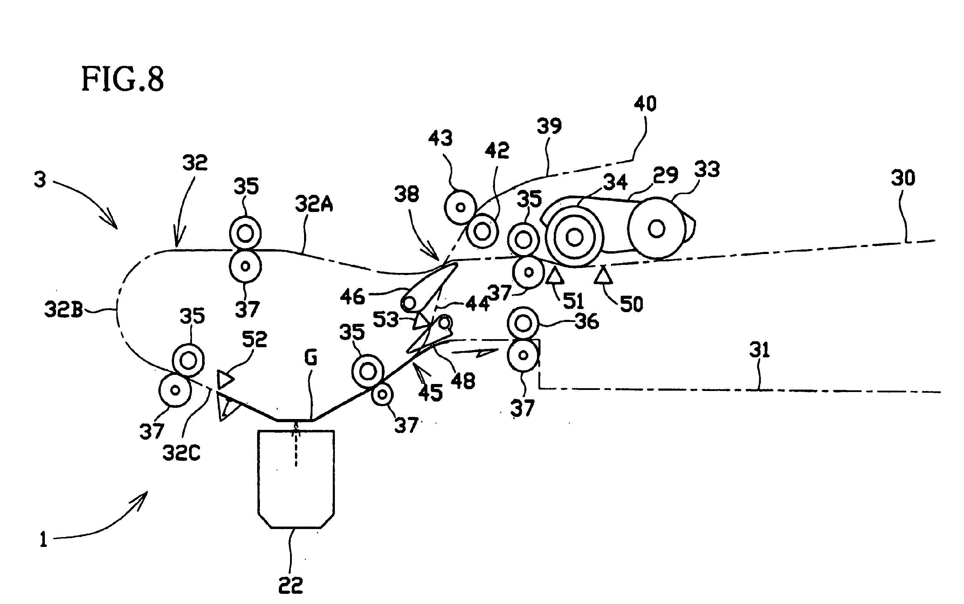

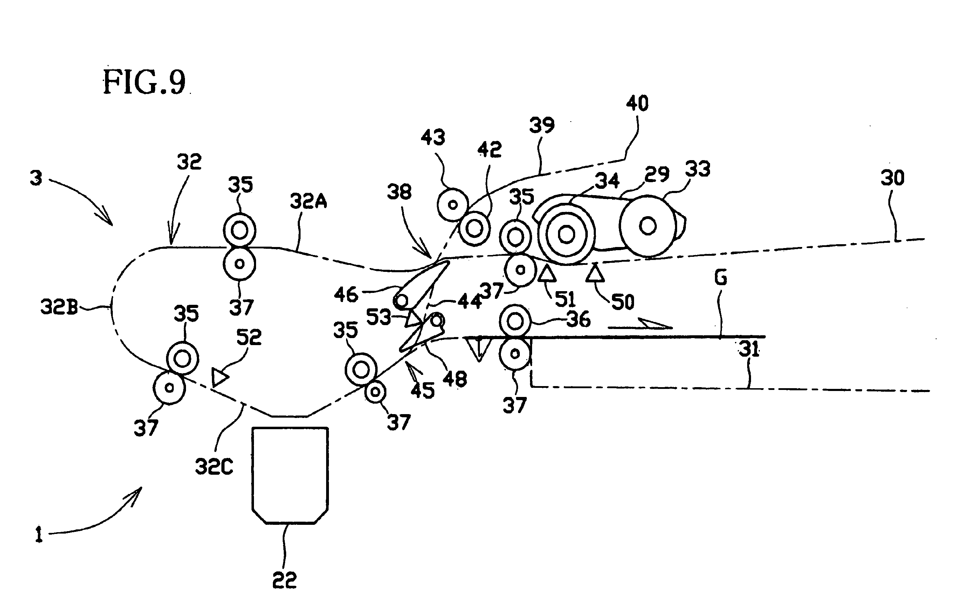

As shown in Fig. 8, the document G passes through the reading position with its first side opposing the image reading unit 22 so that the image of the first side of the document G is read by the image reading unit 22. When a predetermined time period lapses after the detection of the trailing end of the document G by the rear sensor 52, the image reading unit 22 ends the image reading of the document G. Then, the document G is guided at the second branching position 45 by the guide flap 48 so that it is transferred in the transfer path 32 toward the side of the output tray 31. As shown in Fig. 9, the document G is nipped by the discharge roller 36 and the pinch roller 37 so that it is discharged from the transfer path 32 to the output tray 31. When the next document G is set in the input tray 30, those actions are repeated to transfer the documents G on the input tray 30 sheet by sheet for the image reading operations.

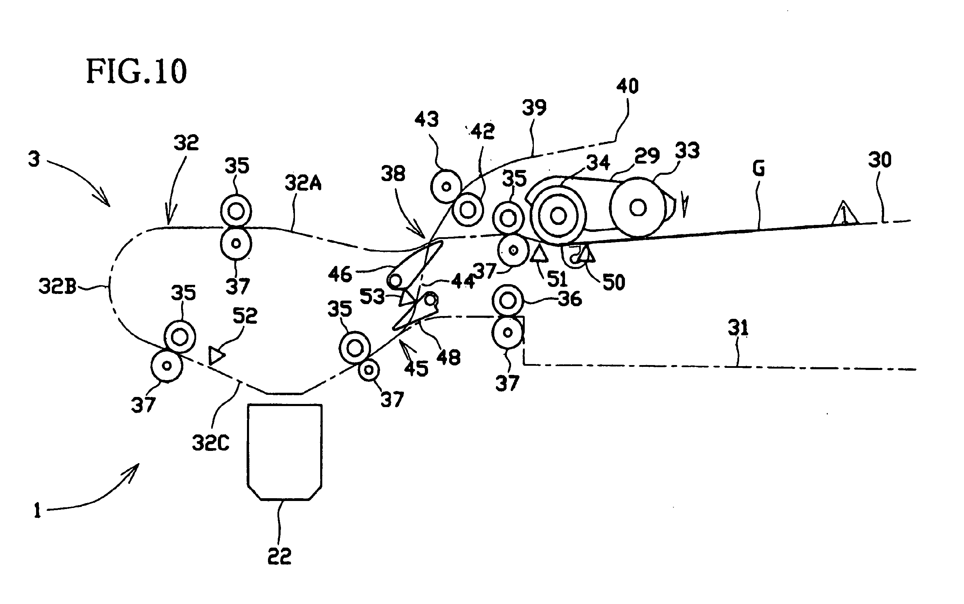

Next, the double-sided reading is described in the following. Before the feed of the document G, the guide flap 46 is positioned, as shown in Fig. 10, to continue the transfer route at the first branching position 38 from the transfer path 32 on the side of the input tray 30 to the reading position side. Here in the drawing the face, as indicated by "1", of the document G is the first side to be read at first in the double-sided reading and the face, as indicated by "2", is the second side to be read later. The first side and the second side are in a front-back relationship.

As in the single-sided reading case, it is detected by the first front sensor 50 whether the document G is placed on the input tray 30. The arm 29 is moved down, and the pick-up roller 33 and the separation roller 34 are rotated to feed the document G into the transfer path 32. In this transfer path 32, the transfer roller 35 is rotated to transfer the document G from the upstream side to the downstream side so that the document G fed from the input tray 30 to the transfer path 32 is transferred while being guided at the first branching position 38 by the guide flap 46 toward the transfer path 32 on the reading position side.

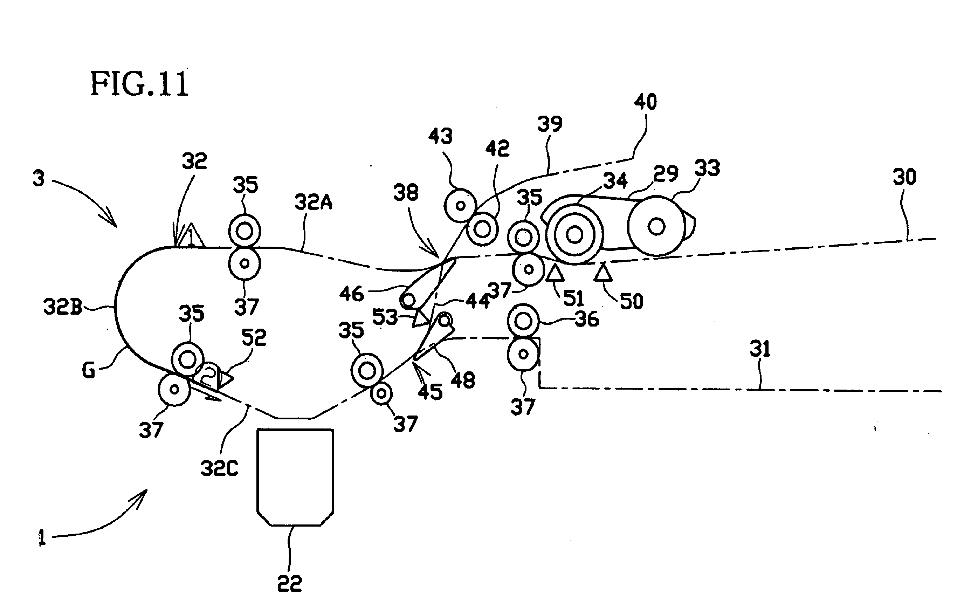

After the document G reaches the section of the transfer path 32 between the first branching position 38 and the second branching position 45, as shown in Fig. 11, the guide flap 48 switches the transfer route. Specifically, when a predetermined time lapses after the trailing end of the document G was detected by the second front sensor 51, the trailing end of the document G passes through the first branching position 38. Therefore, it can be determined by counting the detected signal of the second front sensor 51 and the transfer distance or time by the transfer roller 35 that the document G has reached the section between the first branching position 38 and the second branching position 45. After this, the guide flap 48 is switched to continue the transfer route of the second branching position 45 from the reading position side of the transfer path 32 to the bypass 44.

Here in this illustrative aspect, after the document G reaches the section of the transfer path 32 between the first branching position 38 and the second branching position 45, the guide flap 48 switches the transfer route in the second branching position 45 to continue from the reading position side of the transfer path 32 to the side of the output tray 31. If, however, the double-sided reading and the reading start is inputted to the image reading apparatus 1, the guide flap 48 may also be switched, when the document G is fed, to continue the transfer route to the second branching position 45 from the transfer path 32 on the reading position side to the bypass 44. When the length of the transfer route from the first branching position 38 of the transfer path 32 through the reading position to the second branching position 45 is shorter than the transfer-direction length of the largest readable document, the leading end of the document G of the largest size can be guided to the bypass 44 when the trailing end of the same passes through the first branching position 38.

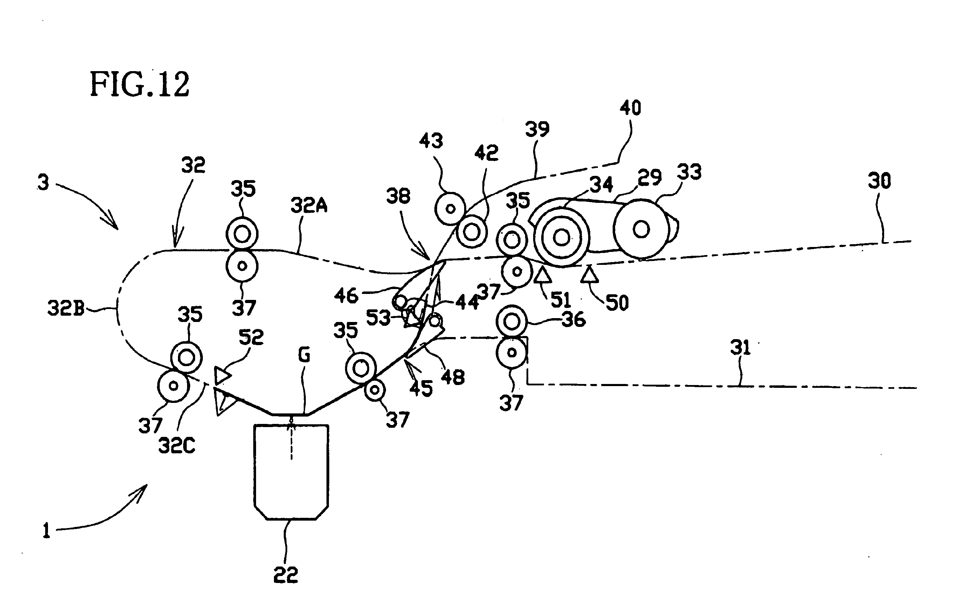

Moreover, the document G is transferred as it is turned back downward by the curved portion 32B of the transfer path 32, and its leading end is detected by the rear sensor 52 and reaches the reading position. The image reading of the first side of the document G is started by the image reading unit 22. As shown in Fig. 12, the document G having its first side read proceeds, while being guided by the guide flap 48, through the second branching position 45 from the transfer path 32 into the bypass 44. When the trailing end of the document G is detected by the rear sensor 52 so that it reaches the reading position, the image reading unit 22 ends the image reading of the document G.

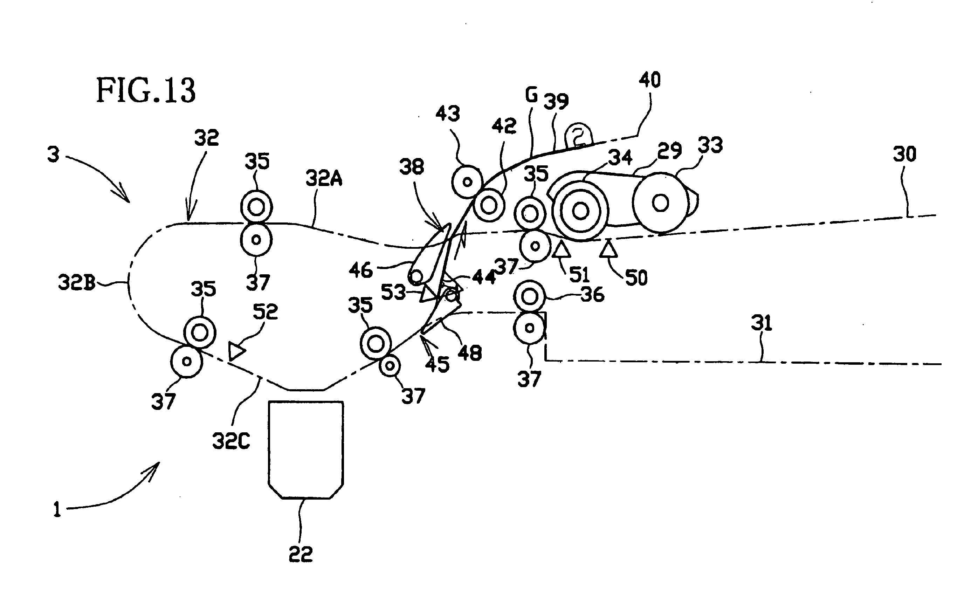

The document G having entered the bypass 44 abuts against the guide flap 46, as shown in Fig. 13, to push the guide flap 46 upward so that it proceeds through the first branching position 38 from the bypass 44 to the bidirectional path 39. In other words, the guide flap 46 guides the document G at the first branching position 38 to permit the straight movement of the document G from the bypass 44 to the bidirectional path 39. Since the transfer route from the bypass 44 to the bidirectional path 39 is substantially straight, the document G proceeds from the first branching position not to the transfer path 32 on the side of the input tray 30 but to the bidirectional path 39. Then, the document G is nipped between the reversible roller 42 and the pinch roller 43 so that it is transferred in the bidirectional path 39 to the side of the terminal end 40 by the rotation of the reversible roller 42.

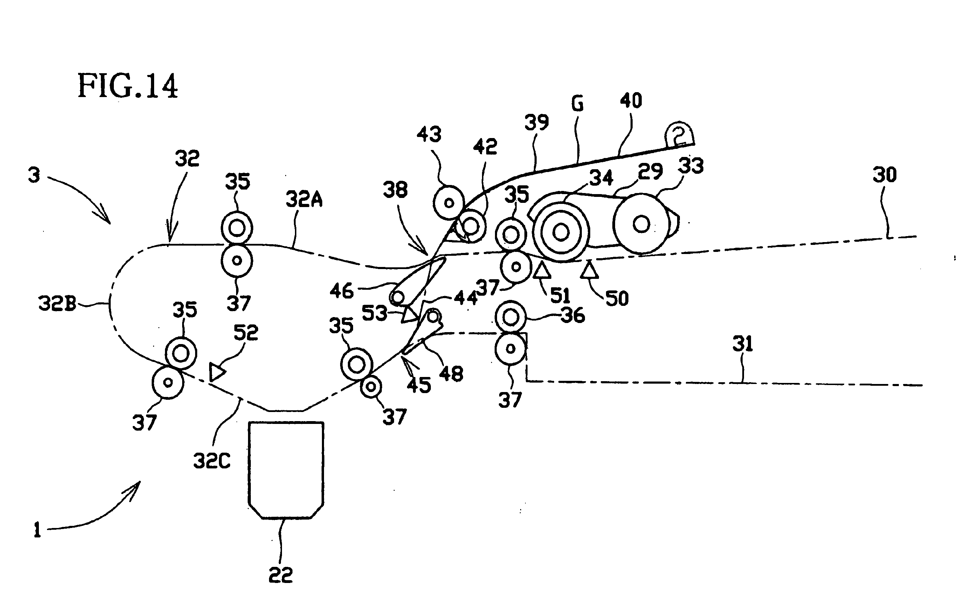

After the document G completely proceeded into the bidirectional path 39, the reversible roller 42 is stopped. As shown in Fig. 13, more specifically, the trailing end of the document G passes through the first branching position 38 when a predetermined time period elapses after the trailing end of the document G being transferred in the bypass 44 was detected by the sensor 53. Therefore, it can be determined by counting the detected signal of the sensor 53 and the transfer distance or time by the transfer roller 35 that the document G has completely entered the bidirectional path 39. After this, the reversible roller 42 is stopped, so that the document G is stopped while being nipped by the reversible roller 42 and the pinch roller 43, as shown in Fig. 14. At this time, a portion of the document G protrudes from the terminal end 40 of the bidirectional path 39 to the outside of the ADF 3, but the protruding portion of the document G is supported by the document supporting portion 41.

As the document G passes through the first branching position 38 and leaves the guide flap 46, this guide flap 46 is turned downward to take a position in which the transfer route at the first branching position 38 continues from the bidirectional path 39 to the upstream side of the reading position of the transfer path 32. After this, the reversible roller 42 is rotated backward so that the document G is transferred backward in the bidirectional path 39 to the side of the transfer path 32.

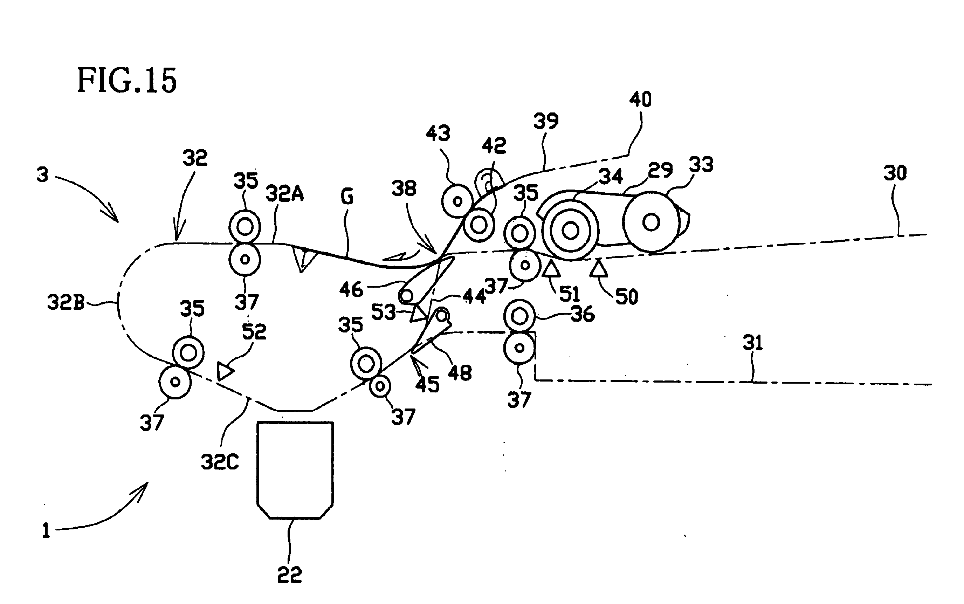

As shown in Fig. 15, the document G returned from the bidirectional path 39 will go straight through the first branching position 38. However, the transfer route to the bypass 44 is closed by the guide flap 46 so that the document G proceeds, while being guided by the guide flap 46, from the bidirectional path 39 to the upstream side of the reading position of the transfer path 32. The transfer route from the bidirectional path 39 to the transfer path 32 on the side of the input tray 30 is bent more acutely than the transfer route from the bidirectional path 39 to the upstream side of the reading position of the transfer path 32. As a result, the document G returned from the bidirectional path 39 does not proceed from the first branching position 38 into the transfer path 32 on the side of the input tray 30. Thus, the document G is returned from the bidirectional path 39 to the transfer path 32 so that the document G is transferred again in the transfer path 32 with its leading end and trailing end being reversed from those in the first transfer through the transfer path 32. Thus, the document G is transferred in the transfer path 32 with its second side opposing the reading position.

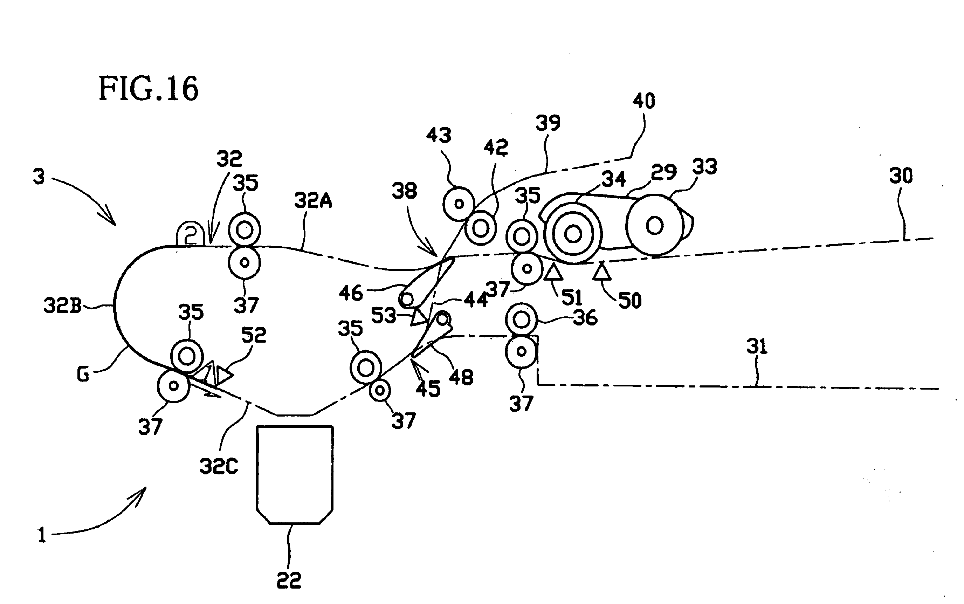

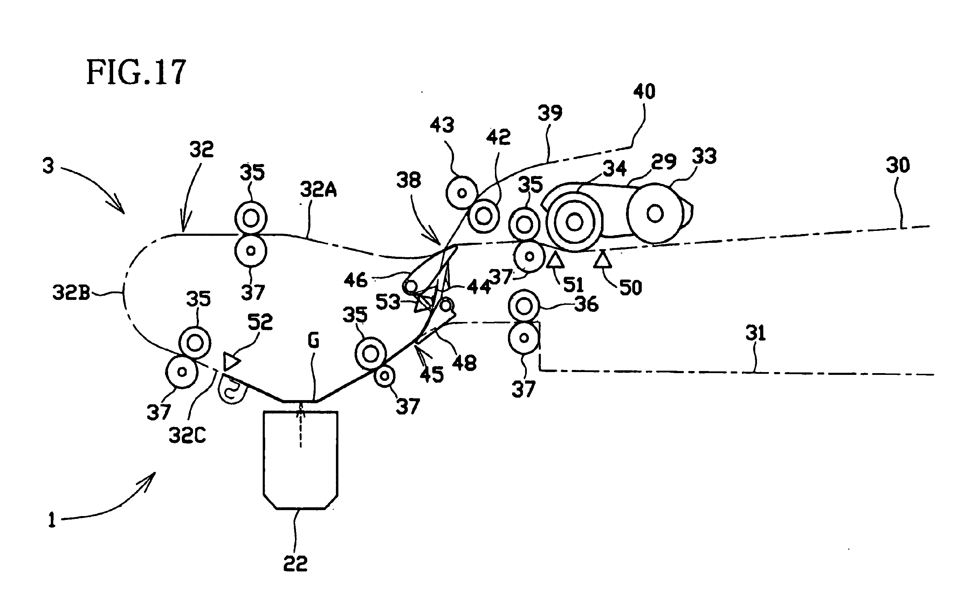

As shown in Fig. 16, the leading end of the document G is detected by the rear sensor 52 and reaches the reading position. Then, the image reading of the second side of the document G is started by the image reading unit 22 as shown in Fig. 17. The document G having its second side read proceeds, while being guided by the guide flap 48, to the second branching position 45 from the transfer path 32 to the bypass 44. Here, the trailing end of the document G is detected by the rear sensor 52 and reaches the reading position. Then, the image reading unit 22 ends the image reading of the document G.

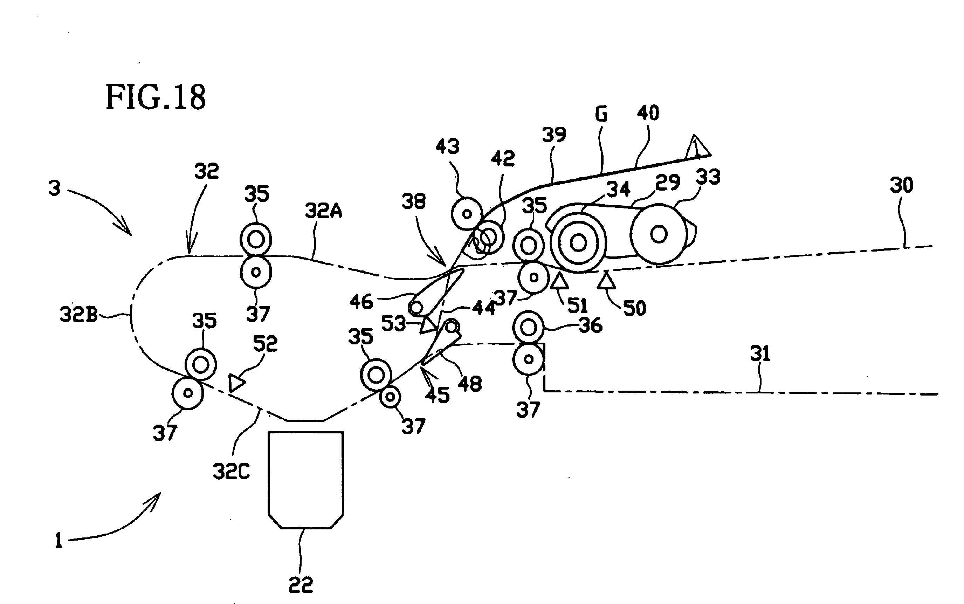

The document G having entered the bypass 44 raises the guide flap 46 and proceeds to the first branching position 38 from the bypass 44 into the bidirectional path 39. After the document G completely enters the bidirectional path 39, as shown in Fig. 18, the reversible roller 42 stops. On the other hand, the guide flap 46 is passed by the document G to return the transfer route to the first branching position 38 from the bidirectional path 39 to the position leading to the transfer path 32 on the reading position side. After this, the reversible roller 42 is rotated backward and the document G is returned through the bidirectional path 39 to the side of the transfer path 32 so that its leading end and trailing end are reversed again.

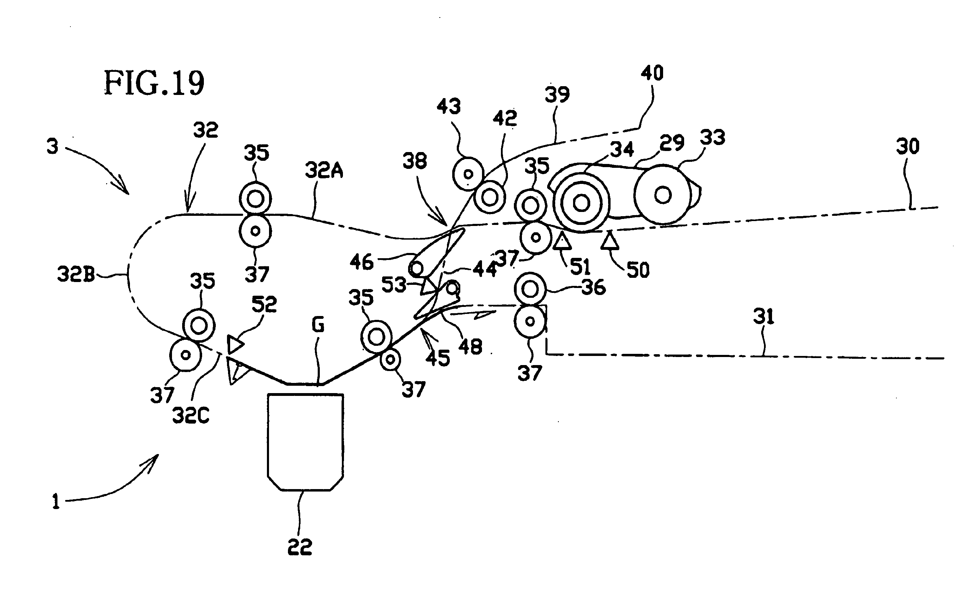

After the document G reaches the section of the transfer path 32 between the first branching position 38 and the second branching position 45, the guide flap 48 switches the transfer route to the second branching position 45 from the transfer path 32 on the reading position side to the side of the output tray 31. As shown in Fig. 19, therefore, the document G is guided at the second branching position 45 by the guide flap 48 so that it is transferred to the transfer path 32 on the side of the output tray 31 and discharged with its first side directed downward to the output tray 31. When a next document G is set on the input tray 30, these actions are repeated to transfer the documents G on the input tray 30 sheet by sheet for the image reading operation. Moreover, the documents G are sequentially discharged with the first sides being directed downward to the output tray 31, so that the input tray 30 keeps the documents G stacked.

Thus, according to the image reading apparatus 1, the bidirectional path 39 for transferring the document G having its first or second side read again to the transfer path 32 is branched from the first branching position 38 of the transfer path 32 on the upstream side of the reading position, and the bypass 44 for guiding the document G having its first or second side read from the transfer path 32 to the bidirectional path 39 is branched from the second branching position 45 of the transfer path 32 on the downstream side of the reading position to the first branching position 38. It is, therefore, unnecessary to form transfer paths in the curved portion 32B of the U-shaped portion of the transfer path 32. As a result, the device can be reduced in height so that its size reduction can be realized.

Moreover, the document having its first side read is reversed in its transfer direction by the reversible roller 42 so that it is transferred again with its trailing end forward to the upper-side portion 32A of the transfer path 32. By the transfer roller 35 and the pinch roller 37 arranged at the upper-side portion 32A, therefore, the oblique run can be corrected at the horizontal portion of the transfer path 32. As a result, the oblique run correction can also be made at the time of reading the second side of the document.

Here in this illustrative aspect, the double-sided reading actions by the image reading apparatus 1 have been described such that the documents G placed on the input tray 30 are discharged while keeping their order to the output tray 31. When, however, it is unnecessary to register the order of the documents G placed on the input tray 30 and the order of the documents G discharged to the output tray 31, the document G need not be again brought into the bypass 44, as shown in Fig. 17, after it was transferred with its second side opposing the reading position, but may also be transferred through the second branching position 45 to the side of the output tray 31 and discharged to the output tray 31. As a result, the order of the documents G on the output tray 31 is not kept, but the third transfer path can be omitted to shorten the time period required for reading the two sides of the documents G. In this illustrative aspect, the guide flaps 46 and 48 are used as the guide, but an elastically deformable film may also be adopted as the guide in place of the guide flap 46, for example.

An image reading apparatus 5 according to illustrative aspects of the invention is different from the image reading apparatus 1 according to the aforementioned illustrative aspects in the positional relations among the input tray 30, the output tray 31 and the bidirectional path 39. Here the description of the configurations of the platen glass plates 20 and 21 and the image reading unit 22 of the document placing table 2 is omitted, because it is similar to the description provided above. In the drawings, the same reference numerals as those of the illustrative aspects of the invention described previously designate the common elements.

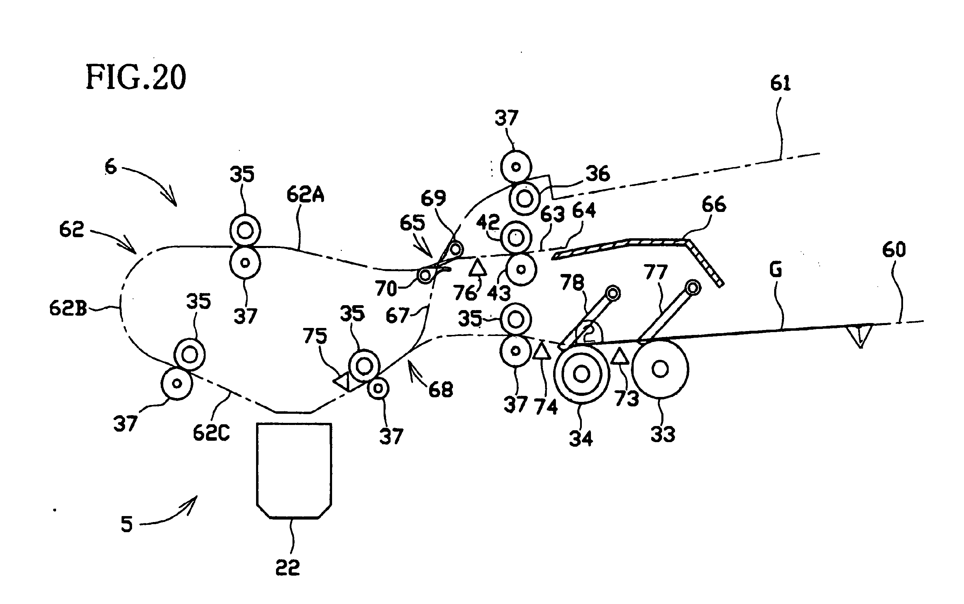

In an ADF 6 (i.e., an automatic document feeding mechanism) of the image reading apparatus 5, as shown in Fig. 20, a output tray 61 (i.e., a document discharge unit) for discharging a document G is arranged in two vertical stages over an input tray 60 (i.e., a document placing portion) for placing the document G thereon. A transfer path 62 (i.e., a first transfer path), which is generally U-shaped in a longitudinally sectional view, is formed to connect the input tray 60 and the output tray 61. This transfer path 62, which is generally U-shaped in the longitudinally sectional view, extends from the input tray 60 to a reading position by the image reading unit 22, continuously curves upward from the reading position and extends to the output tray 61. The transfer path 62 is coarsely composed of three portions of an upper-side portion 62A and the lower-side portion 62C forming the two upper and lower straight portions of a U-shape, and a curved portion 62B curved to continue the upper-side portion 62A and the lower-side portion 62C. This transfer path 62 is used as the document transfer route commonly for the single-sided reading and double-sided reading of the document by the ADF 6.

In the transfer path 62, there are arranged transfer means for transferring the document to the pick-up roller 33, the separation roller 34, the transfer rollers 35, the discharge roller 36 and the pinch rollers 37 urged to abut against those rollers. Of these, the pick-up roller 33 and the separation roller 34 are arranged at the most upstream positions of the transfer path 62 corresponding to the input tray 60, and the discharge roller 36 is arranged at the most downstream position of the transfer path 62 corresponding to the output tray 61. On the other hand, the ADF 6 of the image reading apparatus 5 is arranged on the input tray 60 in the so-called "face-down", in which the reading side (i.e., the first side) of the document G to be read is directed downward. Therefore, the pick-up roller 33 and the separation roller 34 are disposed on the lower side of the transfer path 62 so that their roller faces are partially exposed to the transfer path 62. Nip pads 77 and 78 are urged to come into and out of abutment against the pick-up roller 33 and the separation roller 34. The remaining configurations are similar to those of the illustrative aspects previously described.

At the upper-side portion 62A of the transfer path 62, there is formed a bidirectional path 63 for again transferring the document G, the first side of which has been read at the reading position, to the transfer path 62. Specifically, the bidirectional path 63 is branched from a first branching position 65 of the upper-side portion 62A of the transfer path 62, as located downstream of the reading position, obliquely downward with respect to the transfer path 62 to the input tray 60. Moreover, the bidirectional path 63 has its terminal end 64 opened to the upper face of the ADF 6. The transfer route formed by the bidirectional path 63 has a distance set shorter than the length of the document of the largest size in the transfer direction so that the document G having entered the bidirectional path 63 is partially protruded over the terminal end 64 to the outside of the ADF 6. This makes it unnecessary to keep the distance of the transfer route of the bidirectional path 63 at or longer than the largest document readable in the feeding direction.

By thus forming the bidirectional path 63 obliquely downward from the upper-side portion 62A of the transfer path 62 toward the input tray 60, the upper-size space of the input tray 60 can be effectively exploited. Moreover, the transfer route of the transfer path 62 to the output tray 16 side and the transfer route from the transfer path 62 on the reading position side to the bidirectional path 63 intersect at an acute angle at the first branching position 65. Therefore, the document G returned from the bidirectional path 63 does not proceed into the transfer path 62 on the side of the output tray 61. This makes it simple to construct the guide (or guide flaps 69 and 70) for guiding the document to a predetermined transfer route at the first branching position 65.

On the side of the input tray 60 from the terminal end 64 of the bidirectional path 63, there is formed a document supporting portion 66, which continues from that terminal end 64. The document supporting portion 66 supports the document protruding from the terminal end 64 of the bidirectional path 63, and forms an upper cover for the nip pads 77 and 78. The document supporting portion 66 constructed as the upper cover for the nip pads 77 and 78 is extended from the terminal end 64 toward the input tray 60 so as to extend to the upstream of the paper feeding position by the pick-up roller 33, the separation roller 34 and the nip pads 77 and 78. In the double-sided reading, therefore, the document G having entered the bidirectional path 63 and protruded from the terminal end 64 to the outside of the ADF 6 does not hang down to the downstream side from the feeding position of the documents G stacked on the input tray 60, so that it is not disturbed at the feeding position.

In the aforementioned bidirectional path 63, on the other hand, there are arranged the reversible roller 42 and the pinch roller 43. The reversible roller 42 and pinch roller 43 are similar to those of the illustrative aspects previously described, and can reverse the leading end and the trailing end of the document G and return the document G to the transfer path 62.

At the lower-side portion 62C of the transfer path 62 and on the downstream side of the reading position, there is formed a bypass 67 for guiding the document G having its first side read at the reading position, in the double-sided reading case, from the bidirectional path 63 to the transfer path 62. Specifically, the bypass 67 is branched from a second branching position 68 at the lower-side portion 62C of the transfer path 62 and on the upstream side of the reading position, and is directed obliquely upward to merge into the first branching position 65. By thus arranging the first branching position 65, as branched from the transfer path 62 of the lateral U-shape to the bidirectional path 63, at the upper-side portion 62A of the transfer path 62 and by arranging the second branching position 68, as branched from the transfer path 62 on the upstream side of the reading position, at the lower-side portion 62C of the transfer path 62, the configuration of the curved portion 62B of the transfer path 62 can be simplified.

Moreover, the transfer route from the transfer path 62 on the side of the input tray 60 to the reading position side and the transfer route from the bypass 67 to the transfer path 62 on the reading position side intersect at an acute angle. As a result, the document G, as transferred from the input tray 60 to the reading position of the transfer path 62, does not proceed into the bypass 67, and the document G, as transferred from the bypass 67 to the transfer path 62 on the reading position side, does not proceed to the transfer path 62 on the side of the input tray 60. This configuration can omit the guide for guiding the document at the second branching position 68 into a predetermined transfer route.

On the other hand, the transfer route from the bidirectional path 63 through the bypass 67 to the reading position of the transfer path 62 is formed into an S-shape in the longitudinally sectional view. As a result, the transfer of the document from the bidirectional path 63 through the first branching position 65 and the second branching position 68 to the reading position of the transfer path 62 is smoother to prevent paper jamming at the first branching position 65, the second branching position 68 and so on.

Moreover, the length of the loop-shaped transfer route extending from the first branching position 65 of the transfer path 62 through the bypass 67, the second branching position 68 and the reading position of the transfer path 62 again to the first branching position 65 is set longer than the transfer-direction length of the largest readable document For example, the largest readable document has a transfer-direction length of 297 mm for the A4 size, 11 inches for the letter size, and 14 inches for the legal size. Therefore, the length of the aforementioned loop-shaped transfer route is set longer than those lengths. In double-sided reading, therefore, when the leading end of the document, as reversed and transferred by the bidirectional path 63, passes through the reading position and proceeds again to the first branching position 65, the trailing end of the document never fails to pass through the first branching position 65 so that the first branching position 65 can be prevented from experiencing paper jamming or the like.

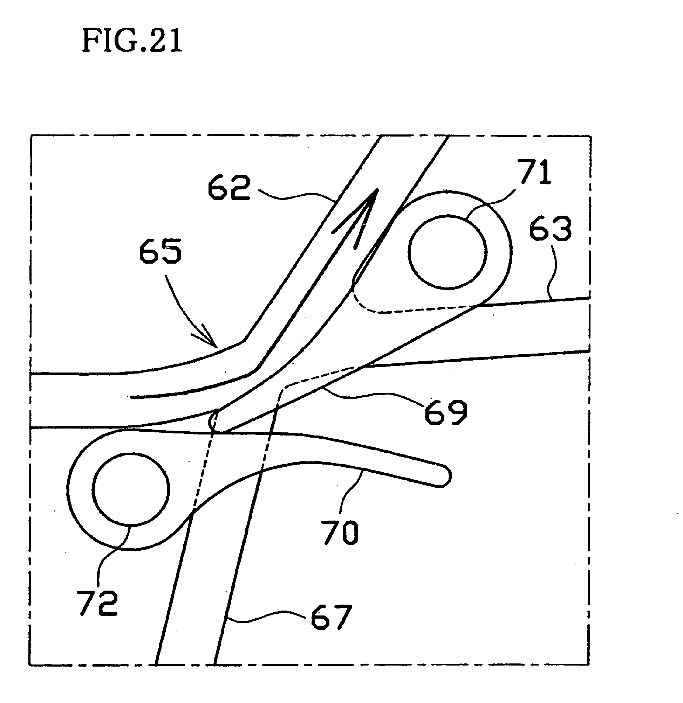

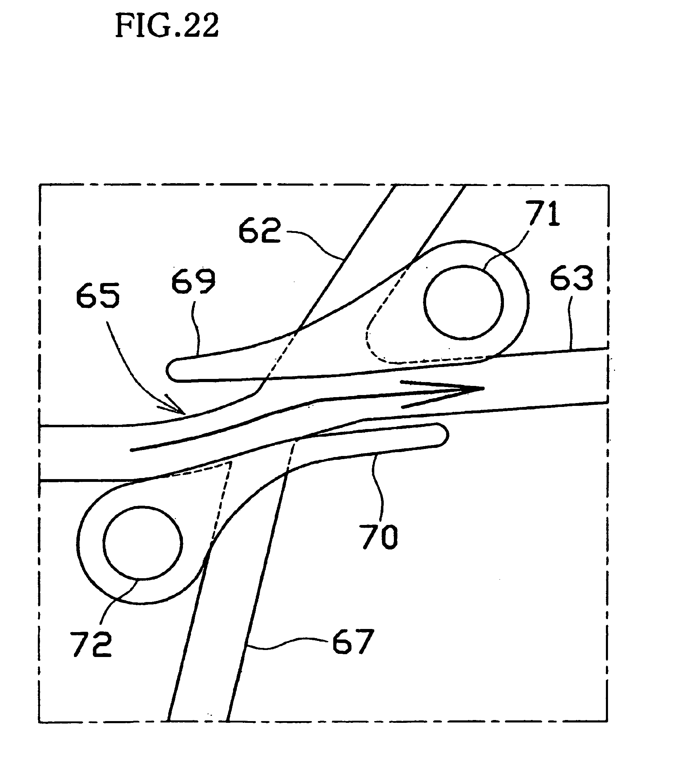

At the first branching position 65, as shown in Fig. 20 to Fig. 23, there is arranged the guide flap 69 (i.e., third guide) and the guide flap 70 (i.e., fourth guide) for guiding the document into the desired transfer route. The guide flap 69 is arranged to rock on a pin 71 so that it can be switched between the position shown in Fig. 21 and the position shown in Fig. 22. When the guide flap 69 is located at the position shown in Fig. 21, the transfer route continues from the transfer path 62 on the reading position side (i.e., the left hand side of the drawing) to the side (i.e., the upper side of the drawing) on the side of the output tray 61. Therefore, the document G having passed through the reading position is guided to the first branching position 65 from the upper-side portion 62A of the transfer path 62 on the reading position side (i.e., the left hand side of the drawing), as indicated by arrow in Fig. 21, toward the side (i.e., the upper side of the drawing) of the output tray 61. Here, when the guide flap 69 is located at the position shown in Fig. 21, the guide flap 70 comes into abutment against the guide flap 69 so that it is pushed downward. However, the guide flap 69 and the guide flap 70 may also be positioned to have no mutual interference.

When the guide flap 69 is positioned, as shown in Fig. 22, on the other hand, the transfer route continues from the transfer path 62 on the reading position side (i.e., the left hand side of the drawing) to the bidirectional path 63 (i.e., the right hand side of the drawing). Therefore, the document G to be transferred in the transfer path 62 is so guided at the first branching position 65 as to proceed into the bidirectional path 63, as indicated by arrow in Fig. 22. At this time, the guide flap 70 is located at the position in which the transfer route continues from the transfer path 62 to the bidirectional path 63 as shown in Fig. 22.

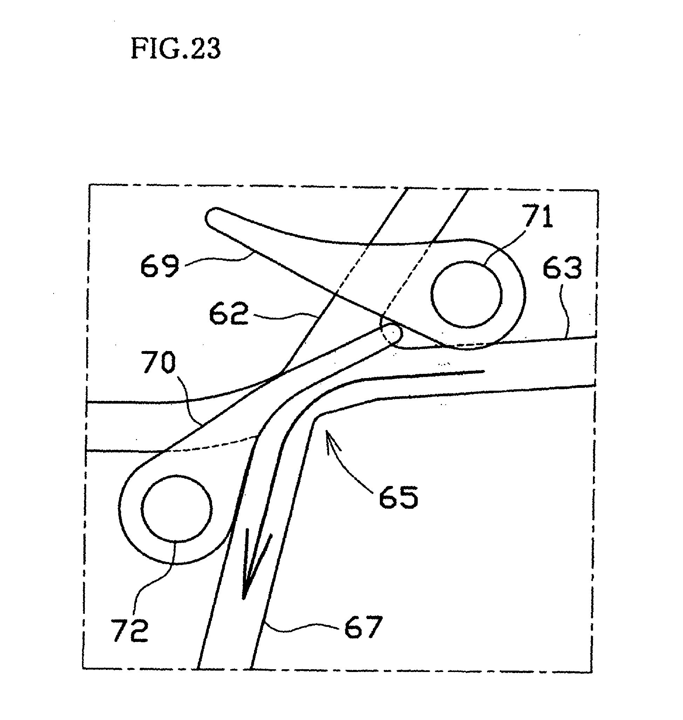

The guide flap 70 is arranged to rock on a pin 72 so that it can be switched between the position shown in Fig. 22 and the position shown in Fig. 23. When the guide flap 70 is at the position shown in Fig. 22, the transfer route continues from the transfer path 62 (i.e., the left hand side of the drawing) to the bidirectional path 63 (i.e., the right hand side of the drawing). As a result, the document G to be transferred in the transfer path 62 is guided at the first branching position 65 so as to proceed into the bidirectional path 63 as indicated by arrow in Fig. 22.

When the guide flap 70 is located at the position shown in Fig. 23, on the other hand, the transfer route continues from the bidirectional path 63 (i.e., the right hand side of the drawing) to the bypass 67 (i.e., the lower side of the drawing). Therefore, the document G returned from the bidirectional path 63 is guided at the first branching position 65 so as to proceed from the bidirectional path 63 (i.e., the right hand side of the drawing) to the bypass 67 (i.e., the lower side of the drawing) as indicated by arrow in Fig. 23. When the guide flap 70 is located at the position shown in Fig. 23, the guide flap 69 comes into abutment against the guide flap 70 so that it is raised upward. However, the guide flap 69 and the guide flap 70 may also be positioned to have no mutual interference.

As shown in Fig. 20, moreover, the transfer path 62 and the bidirectional path 63 are provided with sensors for detecting the transfer of the document In the transfer path 62, more specifically, there are arranged a first front sensor 73 and a second front sensor 74 on the upstream side and the downstream side of the separation roller 34, respectively. A rear sensor 75 is arranged just on the upstream side of the reading position. A sensor 76 is arranged in the bidirectional path 63 closer to the side of the first branching position 65 than the reversible roller 42. These individual sensors are the so-called "optical sensors", which are similar in their detailed configurations to the first front sensor 50 described in illustrative aspects previously described.

The image reading actions by the image reading apparatus 5 are described in the following.

When the ADF 6 of the image reading apparatus 5 is used, the document G to be read is placed on the input tray 60. As shown in Fig. 20, the document G is placed on the input tray 60 "face-down", in which the reading side (i.e., the first side) of the document G is directed downward. Then, the single-sided reading or the double-sided reading is selected, and the reading start is inputted to the image reading apparatus 5. When the reading start is inputted, the carriage motor and the transfer motor are activated to drive the pick-up roller 33, the separation roller 34, the transfer roller 35, the discharge roller 36 and the reversible roller 42 rotationally at predetermined timings. As a result, the documents G are separated sheet by sheet from the input tray 60 and fed to the transfer path 62 so that the images of the documents G can be read at the reading position by the image reading unit 22. The document G having finished image reading is discharged to the output tray 61. In these image reading actions, the transfer route of the document G is different between the single-sided reading case and the double-sided reading case of the document G.

The first description is made on the single-sided reading. When the reading start is inputted to the image reading apparatus 5, as shown in Fig. 21, the guide flap 69 switches the transfer route at the second branching position 65 to continue from the transfer path 62 on the reading position side to the side of the output tray 61.

Subsequently, it is detected by the first front sensor 73 whether the document G is placed on the input tray 60. When the document G is not placed on the input tray 60, an error display of "No Document" is made on the display unit of the image reading apparatus 5. If the document G is placed on the input tray 60, the driving force is transmitted from the transfer motor so that the pick-up roller 33 and the separation roller 34 are rotated. The documents G on the input tray 60 are urged to abut against the pick-up roller 33 and the separation roller 34 by the nip pads 77 and 78 so that the documents G are separated sheet by sheet from the lowermost position and fed to the transfer path 62.

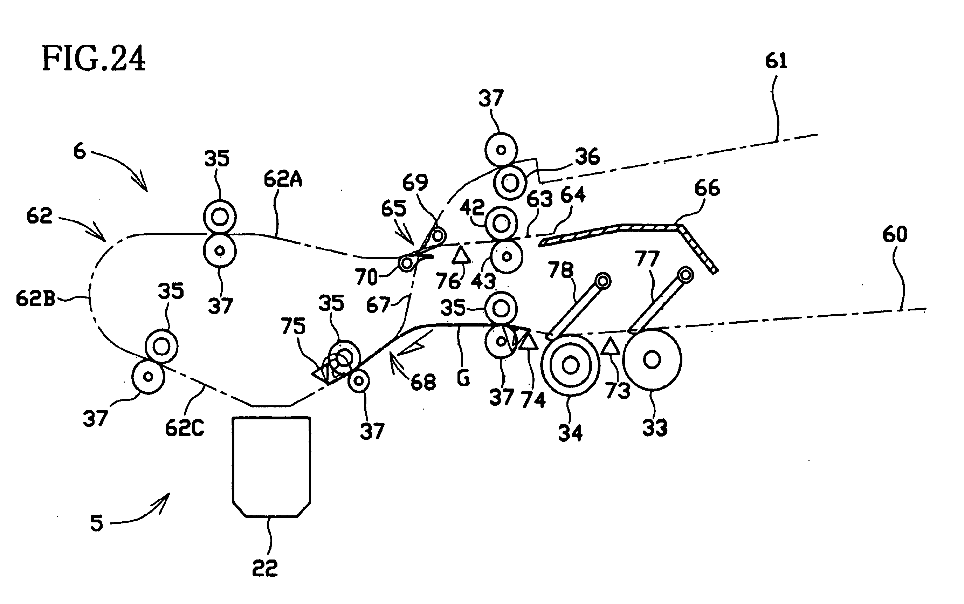

In the transfer path 62, the driving force from the transfer motor is transmitted to the transfer roller 35 and the discharge roller 36 so that these rollers are rotated to transfer the document G from the upstream side to the downstream side of the transfer path 62. The document G thus fed from the input tray 60 to the transfer path 62 is nipped by the transfer roller 35 and the pinch roller 37 so that it is transferred in the transfer path 62 by the rotating force transmitted. As shown in Fig. 24, the document G is transferred at the second branching position 68 to the side of the reading position of the transfer path 62. The transfer route from the transfer path 62 on the side the input tray 60 to the reading position side and the transfer route from the bypass 67 to the transfer path 62 on the reading position side intersect at an acute angle, so that the document G fed from the input tray 60 does not proceed into the bypass 67. As shown, the leading end of the document G is detected by the rear sensor 75. The leading end of the document G reaches the reading position when a predetermined time elapses after the document is detected by the rear sensor 75. When the leading end of the document G reaches the reading position, the image reading unit 22 starts the image reading of the document G.

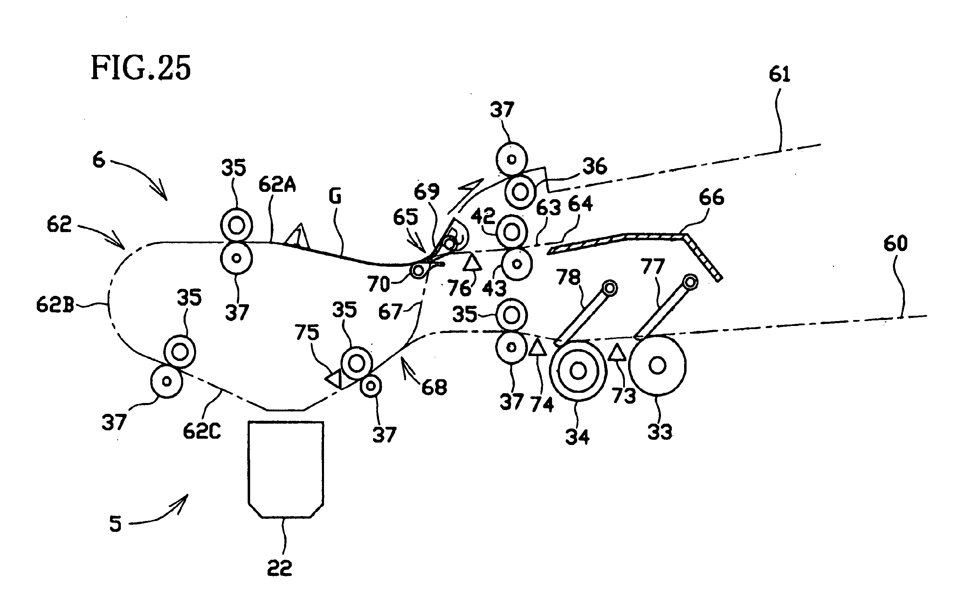

The document G passes through the reading position with its first side opposing the image reading unit 22. When a predetermined time period lapses after the trailing end of the document G was detected by the rear sensor 75, the image reading unit 22 ends the image reading of the document G. As shown in Fig. 25, the document G is guided at the first branching position 65 by the guide flap 69 so that it is transferred in the transfer path 62 toward the side of the output tray 61. Then, the document G is nipped by the discharge roller 36 and the pinch roller 37 so that it is discharged from the transfer path 62 to the output tray 61. When the next document G is set in the input tray 60, those actions are repeated to transfer the documents G on the input tray 60 sheet by sheet for the image reading operations.

Next, the double-sided reading is described in the following. When the double-sided reading is selected so that the reading start is inputted to the image reading apparatus 5 as shown in Fig. 22 the guide flap 69 and the guide flap 70 are switched to continue the transfer route to the first branching position 65 from the transfer path 62 to the bidirectional path 63. Here in the following drawing, the side, as indicated by "1", of the document G is the first side to be read at first in the double-sided reading, and the side, as indicated by "2", is the second side to be read later. The first side and the second side are in a front-back relationship.

As in the single-sided reading case, it is detected by the first front sensor 73 whether the document G is placed on the input tray 60. The pick-up roller 33 and the separation roller 34 are rotated to feed the documents G sheet by sheet from the bottom into the transfer path 62. In this transfer path 62, the transfer roller 35 is rotated to transfer the document G from the upstream side to the downstream side, so that the document G fed from the input tray 60 to the transfer path 62 is transferred to the second branching position 68 toward the reading position side of the transfer path 62. Moreover, when a predetermined time period elapses after the leading end of the document G was detected by the rear sensor 75, the image reading unit 22 starts the image reading of the first side of the document G. When a predetermined time period elapses after the trailing end of the document G was detected by the rear sensor 75, the image reading unit 22 ends the image reading of the document G.

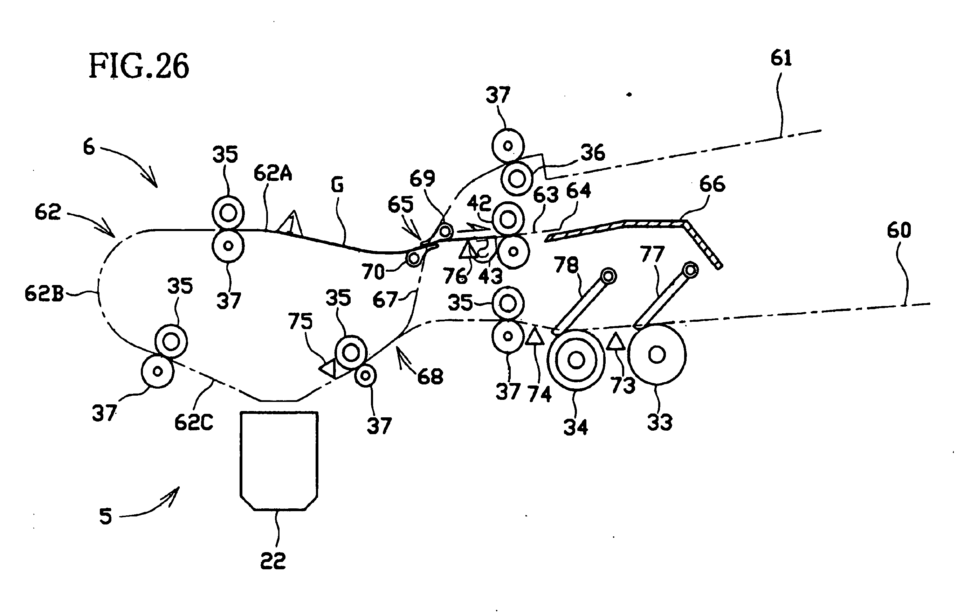

As shown in Fig. 26, the document G is transferred, while being guided by the guide flap 69 and the guide flap 70, at the first branching position 65 toward the bidirectional path 63. Then, the document G is nipped between the reversible roller 42 and the pinch roller 43 so that it is transferred in the bidirectional path 63 to the side of the terminal end 64 by the rotation of the reversible roller 42.

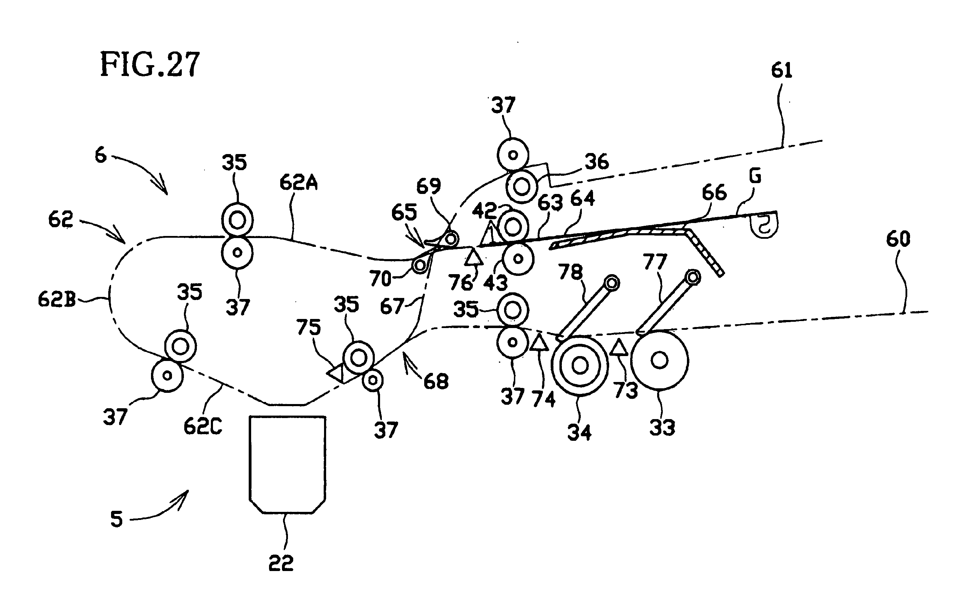

After the document G completely proceeded into the bidirectional path 63, the reversible roller 42 is stopped. As shown in Fig. 26, more specifically, the trailing end of the document G passing through the bidirectional path 63 is detected by the sensor 76. Therefore, it is determined that the document G has completely entered bidirectional path 63. Then, the reversible roller 42 is stopped so that the document G is stopped while being nipped by the reversible roller 42 and the pinch roller 43 as shown in Fig. 27. At this time, a portion of the document G protrudes from the terminal end 64 of the bidirectional path 63 to the outside of the ADF 6, but the protruding portion of the document G is supported by the document supporting portion 66.

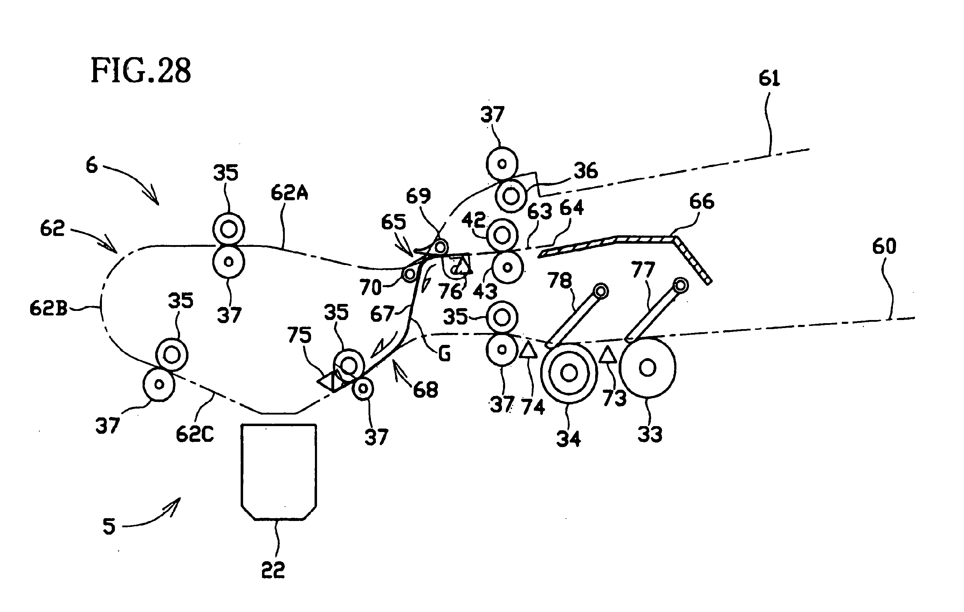

When the document G is stopped in the bidirectional path 63, the guide flap 70 is switched to continue the transfer route at the first branching position 65 from the bidirectional path 63 to the bypass 67 as shown in Fig. 23. As shown in Fig. 28, the document G returned from the bidirectional path 63 proceeds, while being guided to the first branching position 65 by the guide flap 70, from the bidirectional path 39 to the bypass 67.

Moreover, the document G having proceeded into the bypass proceeds from the second branching position 68 to the reading position side of the transfer path 62. The transfer route from the bypass 67 to the transfer path 62 on the side of the input tray 60 is bent more acutely than the transfer route from the bypass 67 to the reading position of the transfer path 62. As a result, the document G returned from the bypass 67 does not proceed to the second branching position 68 into the transfer path 62 on the side of the input tray 60. Thus, the document G is transferred backwards from the bidirectional path 63 through the bypass 67 to the transfer path 62 so that the document G is again transferred in the transfer path 62 with its leading end and trailing end being reversed from those of the state of the first transfer through the transfer path 62. Thus, the document G is transferred in the transfer path 62 with its second side opposing the reading position.

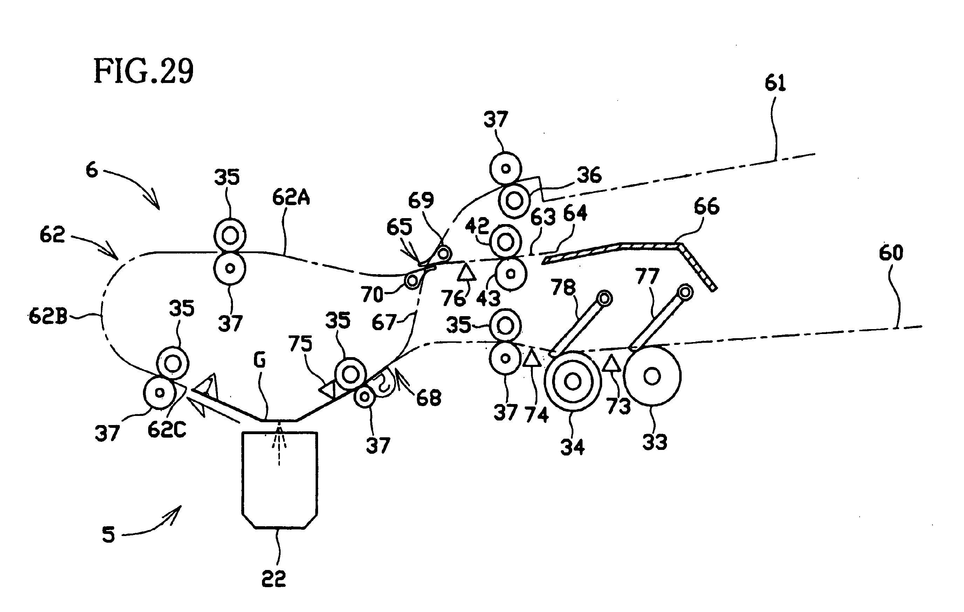

As shown in Fig. 29, like the image reading of the first side, the leading end of the document G is detected by the rear sensor 75 and reaches the reading position. Then, the image reading of the second side of the document G is started by the image reading unit 22. Here, the trailing end of the document G is detected by the rear sensor 75 and reaches the reading position. Then, the image reading unit 22 ends the image reading of the second side of the document G.

When the trailing end of the document G having been reversed and transferred passes through the first branching position 65, as shown in Fig. 22, the guide flap 69 and the guide flap 70 are switched to continue the transfer route at the first branching position 65 from the reading position side of the transfer path 62 to the bidirectional path 63. The trailing end of the document G being transferred in the bidirectional path 63 is detected by the sensor 76. Then, the trailing end of the document G passes through the first branching position 65 when a predetermined time period elapses after the trailing end was detected by the sensor 75. Therefore, it is determined that the document G has passed through the first branching position 65, if a predetermined time period elapses when the sensor 75 detected the trailing end of the document G being reversed and transferred.

The document G having its second side image read is transferred, while being guided at the first branching position 65 by the guide flap 69 and the guide flap 70, toward the bidirectional path 63. After the document G completely enters the bidirectional path 63, the reversible roller 42 stops. As shown in Fig. 23, on the other hand, the guide flap 70 is switched to continue the transfer route at the first branching position 65 from the bidirectional path 63 to the bypass 67. After this, the reversible roller 42 is rotated backward, and the document G returned from the bidirectional path 63 is returned, while being guided at the first branching position 65 by the guide flap 70, from the bidirectional path 63 through bypass 67 to the transfer path 62, so that its leading end and trailing end are reversed again.

When the trailing end of the document G reversed and transferred passes through the first branching position 65, as shown in Fig. 21, the guide flap 69 is switched to continue the transfer route at the first branching position 65 from the transfer path 62 on the reading position side to the side of the output tray 61. As shown in Fig. 25, therefore, the document G is guided at the first branching position 65 by the guide flap 69 so that it is transferred toward the transfer path 62 on the side of the output tray 61. Then, the document G is discharged, while being nipped by the discharge roller 36 and the pinch roller 37 with its second side directed downward from the transfer path 62 to the output tray 61. When the next document G is set on the input tray 60, these actions are repeated to transfer the documents G on the input tray 60 sheet by sheet for the image reading operations of the first side and the second side. Moreover, the documents G are so sequentially discharged with the second sides being directed downward to the output tray 61 that they may be stacked one on top of the other. As a result, the input tray 60 keeps the documents G stacked.

Thus, according to the image reading apparatus 5, the bidirectional path 63 for transferring the document G, having its first or second side again read, to the transfer path 62 is branched from the first branching position 65 on the downstream side of the reading position, and the bypass 67 for guiding the document G read, from the bidirectional path 63 to the transfer path 62 is branched from the second branching position 68 of the transfer path 62 on the upstream side of the reading position to the first branching position 65.. As a result, the device can be reduced in height resulting in size reduction.

Here in this illustrative aspect, the double-sided reading actions by the image reading apparatus 5 have been described such that the documents G placed on the input tray 60 are discharged in order to the output tray 61. When it is unnecessary to register the order of the documents G placed on the input tray 60 and the order of the documents G discharged to the output tray 61, the document G need not be brought again into the bidirectional path 63 after having been transferred with its second side opposing the reading position, but it may be transferred through the first branching position 65 to the side of the output tray 61 and discharged to the output tray 61. As a result, the order of the documents G on the output tray 61 is not kept, but the third transfer path can be omitted to shorten the time period required for reading the two sides of the documents G.

An image reading apparatus 7 according to the other illustrative aspects is different from the image reading apparatus 1 according to the aspects previously described in the transfer route in the ADF 3 of the image reading apparatus 7. Here is omitted the description of the configurations of the platen glass plates 20 and 21 and the image reading unit 22 of the document placing table 2, because it is similar to that of previously described aspects. In the drawings, the same reference numerals as those of the previously described aspects designate the common elements.

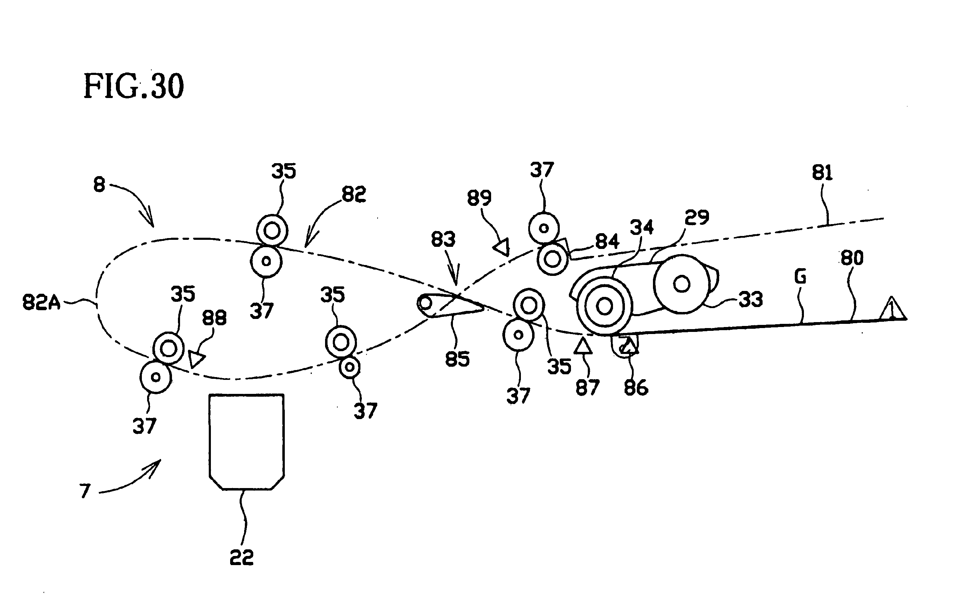

In an ADF 8 (i.e., an automatic document feeding mechanism) of the image reading apparatus 7, as shown in Fig. 30, a output tray 81 (i.e., a document discharge unit) for discharging a document G is arranged in two vertical stages over a input tray 80 (i.e., a document placing portion) for placing the document G thereon. A transfer path 82 (i.e., a fourth transfer path) is formed to connect the input tray 80 and the output tray 81 through the reading position by the image reading unit 22. This transfer path 82 is provided with an intersecting position 83 to form a loop portion 82A including the reading position. This transfer path 82 is used as the document transfer route commonly for the single-sided reading and double-sided reading of the document G by the ADF 8.

Moreover, the length of the transfer route of the loop portion 82A extending from the intersecting position 83 of the transfer path 82 through the reading position again to the intersecting position 83 is set longer than the transfer-direction length of the largest readable document For example, the largest readable document has a transfer-direction length of 297 mm for the A4 size, 11 inches for the letter size, and 14 inches for the legal size. Therefore, the length of the aforementioned loop-shaped transfer route is set longer than those lengths. In the image reading by the ADF 8, therefore, when the leading end of the document G passes through the reading position and proceeds again to the intersecting position 83, the trailing end of the document never fails to pass through the intersecting position 83 so that the intersecting position 83 can be prevented from experiencing paper jamming or the like.

In the aforementioned transfer path 82, there are arranged, as the transfer means for transferring the document, the pick-up roller 33, the separation roller 34, the transfer rollers 35 and a discharge roller 84, and the pinch rollers 37 urged to abut against those rollers. The configuration is similar to that of at least some of the aforementioned aspects except that the pick-up roller 33 and the separation roller 34 are arranged at the most upstream position of the transfer path 82 corresponding to the input tray 80. On the other hand, the discharge roller 84 can be rotated forward and backward, and can reverse the transfer direction of the document G in association with the pinch roller 37.

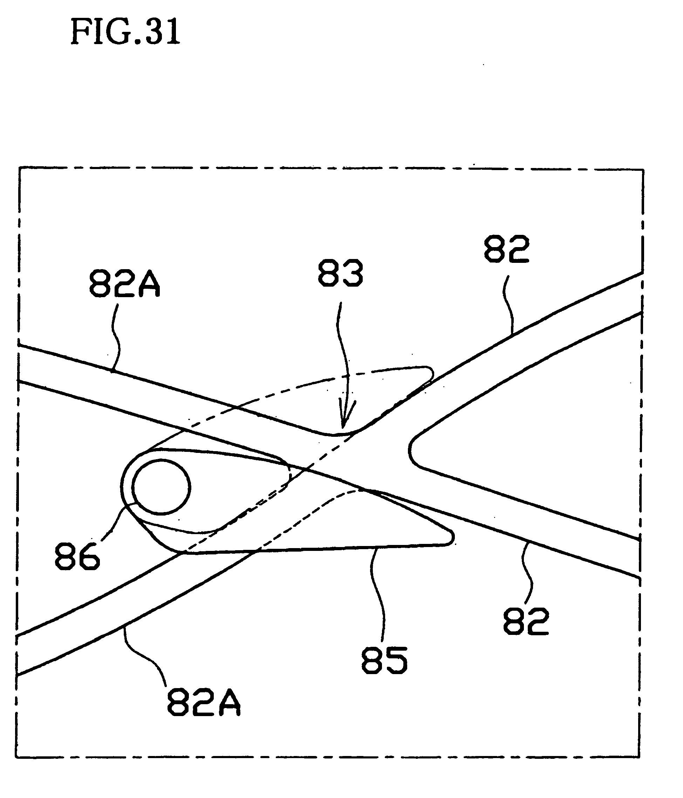

At the intersecting position 83, as shown in Fig. 30 and Fig. 31, there is arranged the guide flap 85 (i.e., fifth guide) for guiding the document into the desired transfer route. The guide flap 85 is arranged to rock on a pin 86 so that it can be switched between the position indicated by a solid line in Fig. 31 and the position indicated by a double-dotted line. When the guide flap 85 is at the position indicated by the solid line, the transfer route continues from the transfer path 82 on the side (i.e., the right hand lower side of the drawing) of the input tray 80 to the loop portion 82 on the upstream side (i.e., the left hand upper side of the drawing) of the reading position. Therefore, the document G fed from the input tray 80 is guided from the intersecting position 83 toward the loop portion 82A on the upstream side of the reading position. When the guide flap 85 is positioned, as indicated by the double-dotted lines, on the other hand, the transfer route continues from the transfer path 82 on the side (i.e., the right hand upper side) of the output tray 81 to the loop portion 82 on the upstream side (i.e., the left hand upper side) of the reading position. As a result, the document G returned from the side of the output tray 81 is guided from the intersecting position 83 toward the loop portion 82A on the upstream position of the reading position. When the guide flap 85 is at the position, as indicated by the double-dotted line, on the other hand, the transfer route continues from the loop portion 82A on the downstream side (i.e., the left hand lower side of the drawing) of the reading position to the transfer path 82 on the side (i.e., the right hand upper side of the drawing) of the output tray 81. Therefore, the document G to be transferred through the reading position from the loop portion 82A on the downstream side of the reading position is guided from the intersecting position 83 toward the side of the output tray 81.

The switching of the transfer route by the guide flap 85 is performed by the abutment of the document G. Specifically, the guide flap 85 is positioned at the normal time, as shown by the solid line in Fig. 31, such that the transfer route continues from the transfer path 82 on the side (i.e., the right hand lower side of the drawing) of the input tray 80 to the loop portion 82 on the upstream side (i.e., the left hand upper side of the drawing) of the reading position. Moreover, when the document G being transferred from the loop portion 82A on the downstream side of the reading position toward the side of the output tray 81 comes into abutment against the guide flap 85, this guide flap 85 is pushed upward to rock to the position, as indicated by the double-dotted line in Fig. 31, so that the document proceeds from the loop portion 82A on the downstream side of the reading position to the side of the output tray 81. Moreover, the document having been transferred from the transfer path 82 on the side (i.e., the right hand upper side of the drawing) on the side of the output tray 81 to the intersecting position 83 comes into abutment with the guide flap 85. However, this guide flap 85 does not rock downward from the position, as indicated by the solid line in the drawing, so that the document G proceeds, while being guided by the guide flap 85, to the loop portion 82A on the upstream side of the reading position. Thus, the guide flap 85 is arranged at the intersecting position 83 to guide the document to the desired transfer route. Here in this illustrative aspect, the guide flap 85 is switched by the abutment of the document G, but may also be positively rocked by the driving force of the transfer roller or the like.

Moreover, the transfer route from the transfer path 82 on the side of the input tray 80 to the loop portion 82A on the upstream side of the reading position and the transfer route from the transfer path 82 on the side of the output tray 81 to the loop portion 82A on the downstream side of the reading position intersect at an acute angle. Therefore, the document G having entered the intersecting position 83 from the input tray 80 does not proceed into the transfer path 82 on the side of the output tray 81, and the document G returned from the output tray 81 to the intersecting position 83 does not proceed into the transfer path 82 on the input tray 80. Moreover, the transfer route from the loop portion 82A on the downstream side of the reading position to the transfer path 82 on the side of the output tray 81 is substantially straight, but the transfer route from the loop portion 82A on the downstream side of the reading position to the transfer path 82 on the side of the input tray 80 is bent As a result, the document G having entered the intersecting position 83 from the loop portion 82A on the downstream side of the reading position does not proceed into the transfer path 82 on the side of the input tray 80. Therefore, the guide (i.e., the guide flap 85) for guiding the document at the intersecting position 83 to a predetermined transfer route can be made of a simple configuration.

Moreover, the transfer route from the reading position of the transfer path 82 through the intersecting position 83 to the output tray 81 is formed into an S-shape in the longitudinally sectional view. As a result, the transfer of the document at the intersecting position 83 is smoother to prevent paper jamming. Moreover, the configuration of the guide (i.e., the guide flap 85) at the intersecting position 83 is simplified.

As shown in Fig. 30, the transfer path 82 is provided with sensors for detecting the transfer of the document G. In the transfer path 82, more specifically, there are arranged a first front sensor 86 and a second front sensor 87 on the upstream side and the downstream side of the separation roller 34, respectively. A rear sensor 88 is arranged just on the upstream side of the reading position. A sensor 89 is arranged just on the upstream side of the discharge roller 84. These individual sensors are the so-called "optical sensors", which are similar in their detailed configurations to the first front sensor 50 described in at least some of the aforementioned aspects.

The image reading actions by the image reading apparatus 7 are described in the following.

When the ADF 8 of the image reading apparatus 7 is used, the document G to be read is placed on the input tray 80. As shown in Fig. 30, the document G is placed on the input tray 80 "face-up", in which the reading side (i.e., the first side) of the document G is directed downward. Then, the single-sided reading or the double-sided reading is selected, and the reading start is inputted to the image reading apparatus 7. When the reading start is inputted, the carriage motor and the transfer motor are activated to drive the pick-up roller 33, the separation roller 34, the transfer roller 35 and the discharge roller 86 rotationally at predetennined timings and to lower the arm 29. Then, the documents G are separated sheet by sheet from the input tray 80 and fed to the transfer path 82 so that the images of the documents G are read at the reading position by the image reading unit 22. A document G having finished the image reading is discharged to the output tray 81. In these image reading actions, the transfer route of the document G is different between the single-sided reading case and the double-sided reading case of the document G.

The first description describes single-sided reading. As shown in Fig. 30, the guide flap 85 is so positioned, without any abutment against the document G, as to continue the transfer route at the intersecting position 83 from the transfer path 82 on the side of the input tray 80 to the loop portion 82A on the upstream side of the reading position.

Subsequently, it is detected by the first front sensor 86 whether the document G is placed on the input tray 80. When the document G is not placed on the input tray 80, an error display of "No Document" is on the display unit of the image reading apparatus 7. If the document G is placed on the input tray 80, the driving force is transmitted from the transfer motor to lower the feed arm 29 and to rotate the pick-up roller 33 and the separation roller 34. As a result, the documents G on the input tray 80 are separated sheet by sheet from the highest position and fed to the transfer path 82.

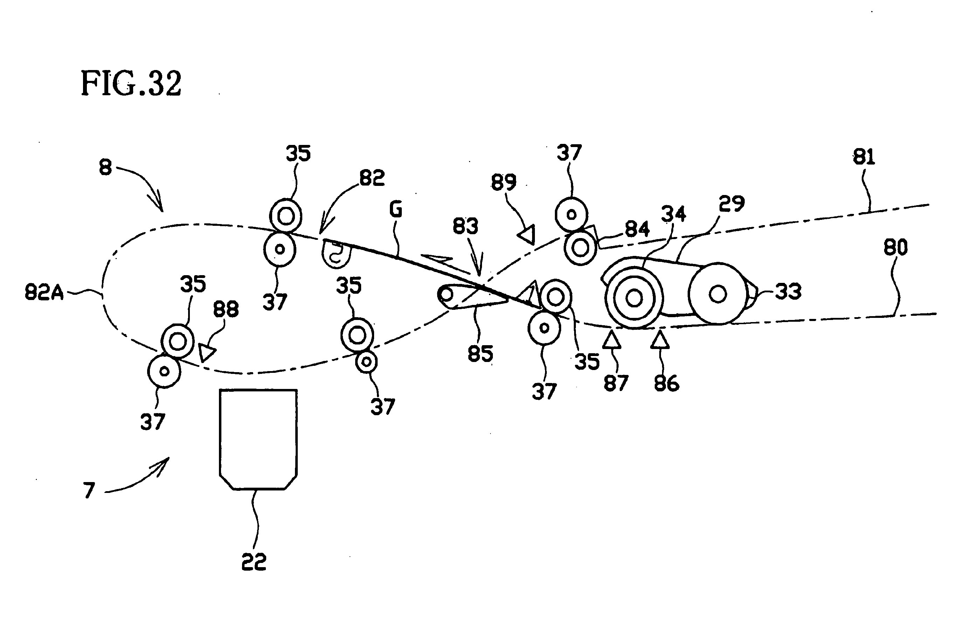

In the transfer path 82, the driving force from the transfer motor is transmitted to the transfer roller 35 and the discharge roller 84 so that these rollers are rotated to transfer the document G from the upstream side to the downstream side of the transfer path 82. The document G thus fed is transferred at the intersecting position 83, while being guided by the guide flap 85, as shown in Fig. 32, from the side of the transfer path 82 on the side of the input tray 80 to the loop portion 82A on the upstream side of the reading position. The transfer route from the transfer path 82 on the side of the input tray 80 to the loop portion 82A on the upstream side of the reading position, and the transfer route from the transfer path 82 on the side of the output tray 81 to the loop portion 82A on the downstream side of the reading position intersect at an acute angle so that the document G fed from the input tray 80 does not proceed into the transfer path 82 on the side of the output tray 81. Here, the transfer route from the side of the input tray 80 to the loop portion 82A on the downstream side of the reading position is closed by the guide flap 85.

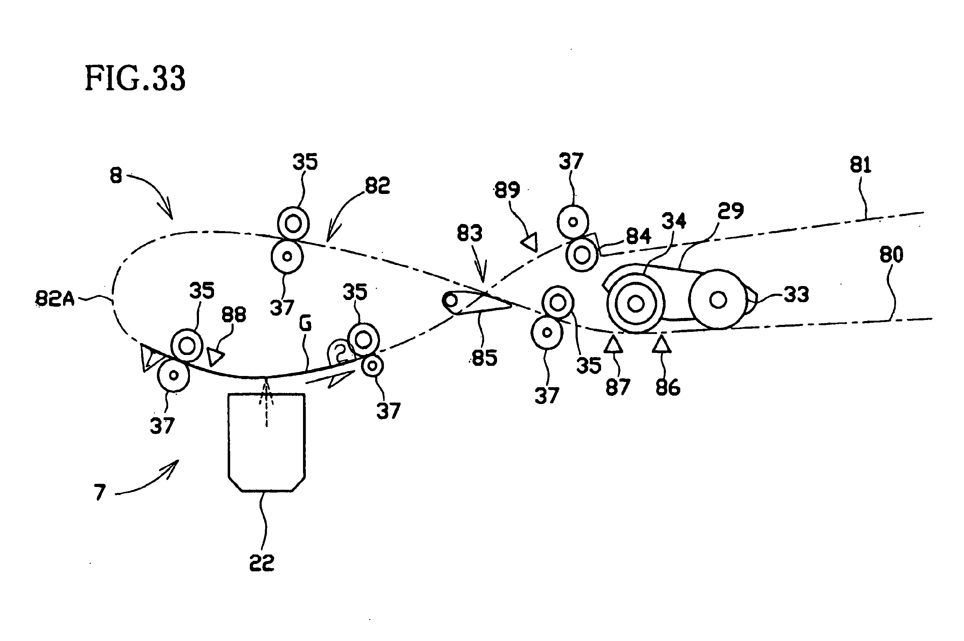

The document G having been fed from the input tray 80 to the upper side of the loop portion 82A is nipped by the transfer roller 35 and the pinch roller 37 so that it is transferred to turn in the loop portion 82A to the reading position by the rotating force transmitted, and the leading end of the document G is detected by the rear sensor 88. The leading end of the document G reaches the reading position when a predetermined time period lapses after the leading end was detected by the rear sensor 88. When the leading edge of the document G reaches the reading position, the image reading unit 22 starts the image reading of the first side of the document G, as shown in Fig. 33.

The document G passes through the reading position with its first side opposing the image reading unit 22. When a predetermined time period lapses after the trailing end of the document G was detected by the rear sensor 88, the image reading unit 22 ends the image reading of the document G.

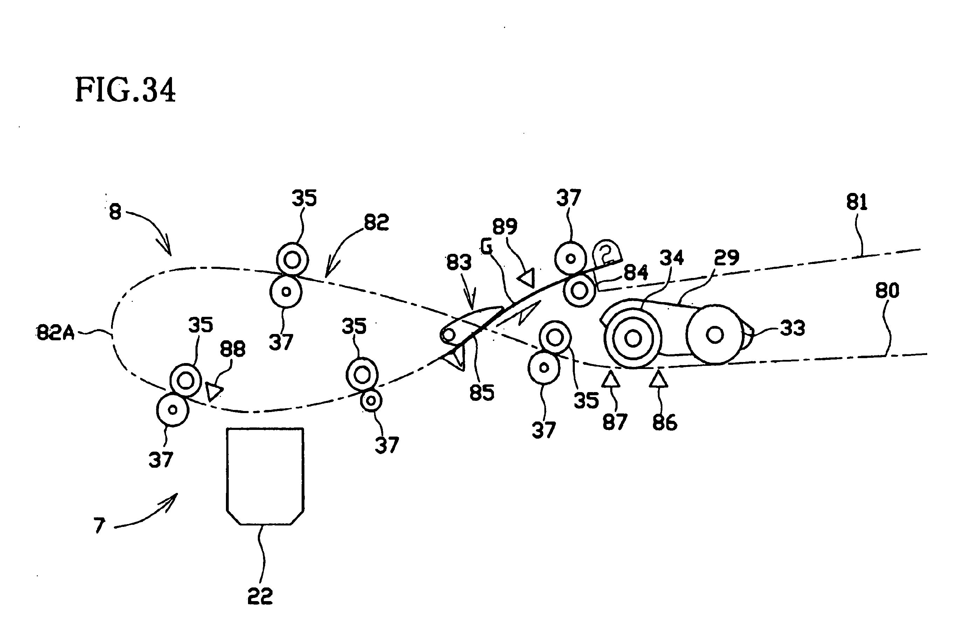

Moreover, the document G having its first side image read abuts against the guide flap 85 at the intersecting position 83, as shown in Fig. 34, to push the guide flap 85 upward, and proceeds from the loop portion 82A on the downstream side of the reading position to the transfer path 82 on the side of the output tray 81. In short, the guide flap 85 guides the document G to the side of the output tray 81 by permitting the document G to proceed from the downstream side of the reading position. The transfer route from the loop portion 82A on the downstream side of the reading position to the side of the output tray 81 is substantially straight. At the intersecting position 83, therefore, the document G proceeds not to the transfer path 82 on the side of the input tray 80 but to the side of the output tray 81. Then, the document G is nipped by the discharge roller 84 and the pinch roller 37 and is discharged from the transfer path 82 to the output tray 81. When the next document G is set in the input tray 80, those actions are repeated to transfer the documents G on the input tray 80 sheet by sheet and to read their images.

Next, the double-sided reading is described in the following. Before the document G is fed as shown in Fig. 30, the guide flap 85 is positioned to continue the transfer route at the intersecting position 83 from the transfer path 82 on the side of the input tray 80 to the loop portion 82A on the upstream side of the reading position. Here in the drawing, the face, as indicated by "1", of the document G is the first side to be read in the double-sided reading, and the face, as indicated by "2", is the second side to be read later. The first side and the second side are in a front-back relationship.

As in the single-sided reading case, it is detected by the first front sensor 86 whether the document G is placed on the input tray 80. The arm 29 is moved down, and the pick-up roller 33 and the separation roller 34 are rotated to feed the document G into the transfer path 82. In this transfer path 82, the transfer roller 35 is rotated to transfer the document G from the upstream side to the downstream side, so that the document G fed from the input tray 80 to the transfer path 82 is transferred, while being guided at the intersecting position 83 by the guide flap 85, toward the upstream side of the reading position of the loop portion 82A.

Then, the document G is turned downward by the loop portion 82A. When the leading end of the document G is detected to reach the reading position by the rear sensor 88, the image reading unit 22 starts the image reading of the first side of the document G. When the trailing end of the document G is detected to reach the reading position by the rear sensor 52, on the other hand, the image reading unit 22 ends the image reading of the document G. As shown in Fig. 34, the document G having its first side read proceeds, while pushing up the guide flap 85, at the intersecting position 83 from the loop portion 82A on the downstream side of the reading position to the side of the transfer path 82 on the side of the output tray 81.

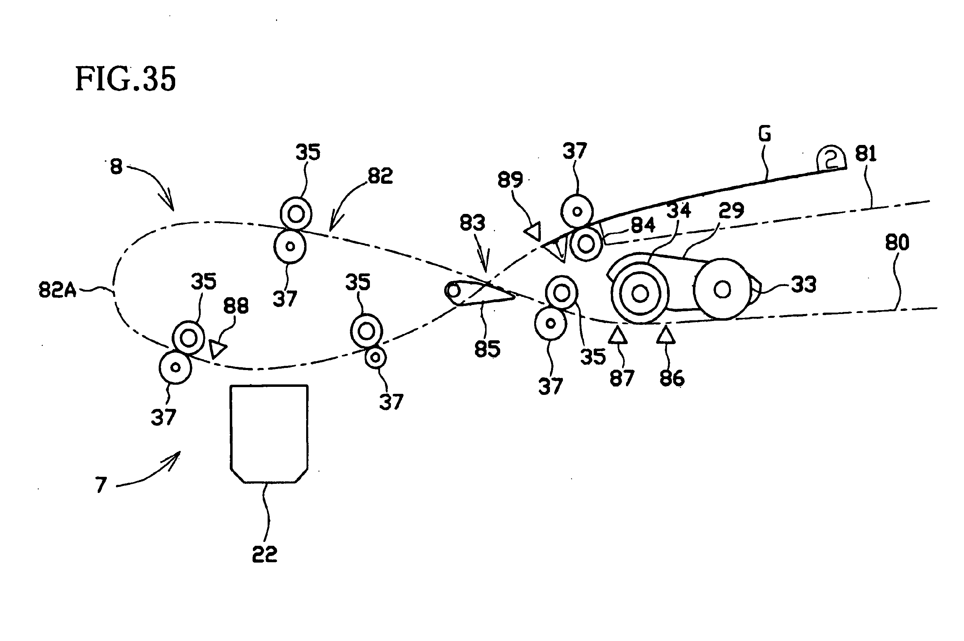

After the document G completely passed through the intersecting position 83, the discharge roller 84 is stopped. As shown in Fig. 35, more specifically, when the trailing end of the document G being transferred in the transfer path 82 is detected by the sensor 89, it is determined that the document G has completely passed through the intersecting position 83. By stopping the discharge roller 84, the document G is stopped while being nipped by the discharge roller 84 and the pinch roller 37.

As the document G passes through the intersecting position 83 and leaves the guide flap 85, this guide flap 85 is turned downward to continue the transfer route at the intersecting position 83 from the transfer path 82 on the side of the output tray 81 to the loop portion 82A on the upstream side of the reading position. After this, the discharge roller 84 is turned backward, and the document G is responsively transferred to return through the transfer path 82 to the side of the intersecting position 83.

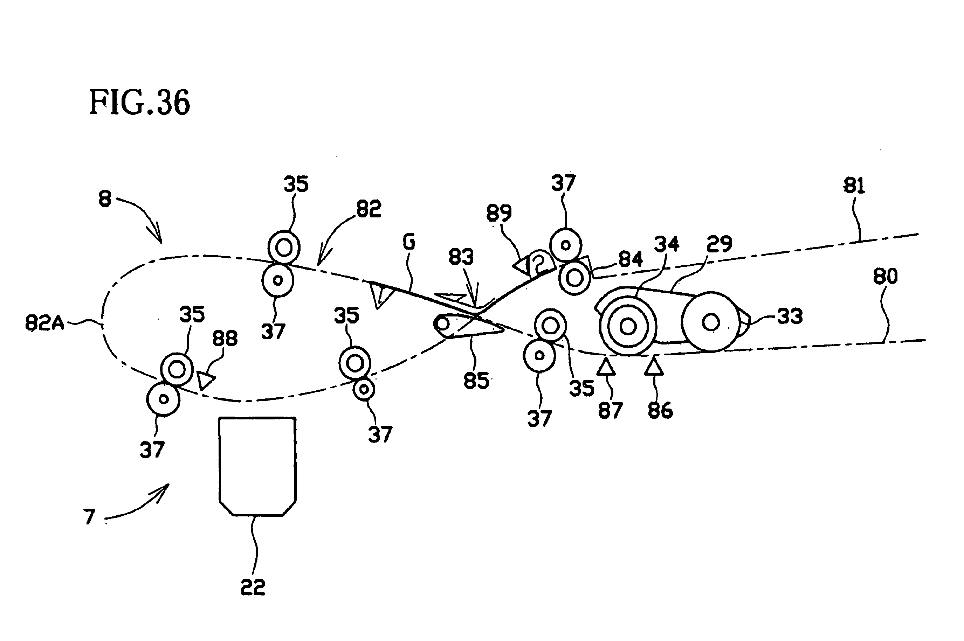

As shown in Fig. 36, the document G returned from the transfer path 82 on the side of the output tray 81 will proceed forward at the intersecting position 83, but the transfer route to the reading position on the downstream side of the loop portion 82A is closed by the guide flap 85. Therefore, the document G proceeds, while being guided by the guide flap 85, from the transfer path 82 on the side of the output tray 81 to the loop portion 82A on the upstream side of the reading position. The transfer route from the transfer path 82 on the side of the output tray 81 to the input tray 80 is acutely bent at the intersecting position 83 so that the document G returned from the transfer path 82 on the side of the output tray 81 does not proceed at the intersecting position 83 to the side of the input tray 80. Thus, the document G is returned from the transfer path 82 on the side of the output tray 81 to the loop portion 82A on the upstream side of the reading position so that it is transferred again in the state where the leading end and the trailing end are reversed from those of the state where it was transferred at first in the transfer path 82. Then, the document G is transferred in the loop portion 82A so that its second side opposes the reading position.

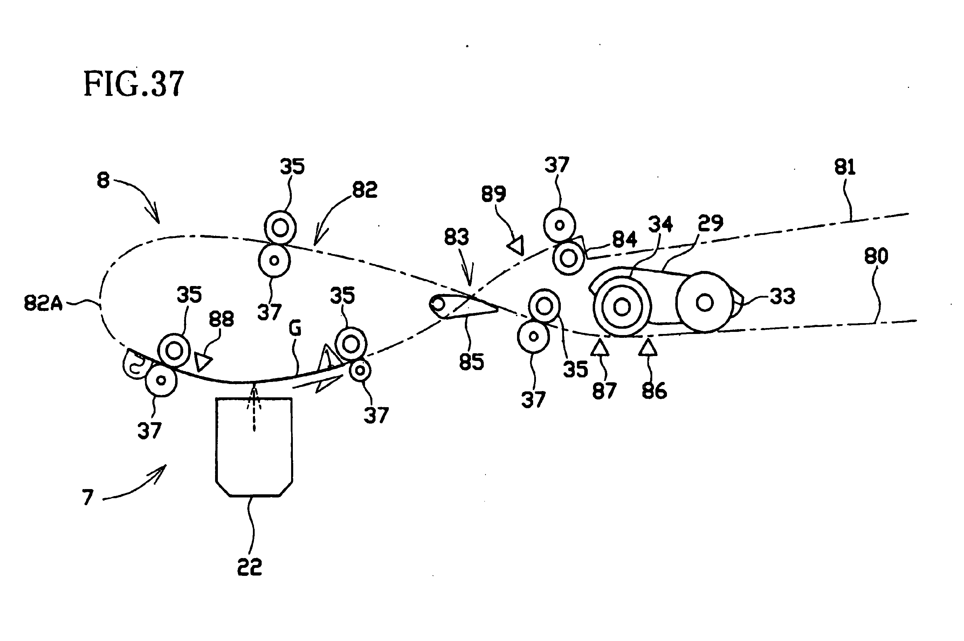

When it is detected by the rear sensor 88 that the leading end of the document G has reached the reading position, the image reading of the second side of the document G is started by the image reading unit 22, as shown in Fig. 37. When it is determined by the rear sensor 88 that the trailing end of the document G has reached the reading position, on the other hand, the image reading unit 22 ends the image reading of the document G. Then, the document G having its second side read proceeds, while pushing up the guide flap 85, from the intersecting position 83 to the transfer path 82 on the side of the output tray 81. After the document G completely passes through the intersecting position 83, the discharge roller 84 is stopped. Moreover, the guide flap 85 returns, when passed by the document G, into the transfer route at the intersecting position 83 from the transfer path 82 on the side of the output tray 81 to the loop portion 82A on the upstream side of the reading position. After this, the discharge roller 84 is rotated backward, and the document G is responsively returned from the transfer path 82 on the side of the output tray 81 to the loop portion 82A on the upstream side of the reading position so that its leading end and trailing end are reversed again.

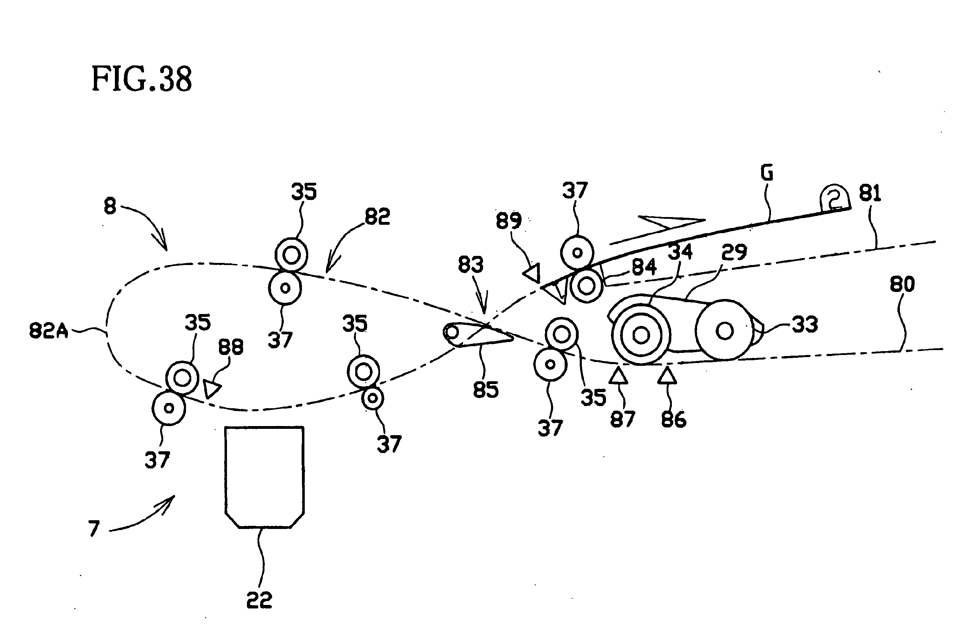

Then, the document G is transferred in the loop portion 82A and returned again to the intersecting position 83 so that it proceeds, while pushing up the guide flap 83, into the transfer path 82 on the side of the output tray 81. As shown in Fig. 38, the document G is discharged to the output tray 81 by the discharge roller 84 with its first side being directed downward. When the input tray 80 is set with the next document G, the documents G on the input tray 80 are transferred sheet by sheet by repeating those actions so that their image reading is performed. Moreover, the documents G are sequentially discharged with the second sides being directed downward to the output tray 81 so that they may be stacked one on top of the other. As a result, the input tray 80 keeps the documents G stacked.

Thus, according to the image reading apparatus 7, the transfer path 82 is so intersected as to form the loop portion 82A including the reading position. This makes it unnecessary to form the bypass or the like form returning the document G by reversing its leading end and trailing end. As a result, the configuration of the transfer path 82 can be simplified to reduce the size of the device.

Here in this illustrative aspect, the double-sided reading actions by the image reading apparatus 7 have been described such that the documents G placed on the input tray 80 are discharged while keeping their order to the output tray 81. When, however, it is unnecessary to register the order of the documents G placed on the input tray 80 and the order of the documents G discharged to the output tray 81, the document G need not again be subjected to the third transfer path, but may be transferred and discharged to the output tray 81. As a result, the order of the documents G on the output tray 81 is not kept, but the third transfer path can be omitted to shorten the time period required for reading the two sides of the documents G.

In this illustrative aspect, the guide flap 85 is caused to switch the transfer path by the abutment against the document G. By applying a driving force from a transfer motor or the like to the guide flap 85, however, this guide flap 85 may also be constructed to switch the transfer path independently of the abutment against the document G. In this modification, it is arbitrary whether it is determined on the basis of the detection signal of the second front sensor 87 or the detection signal of the sensor 89, for example, if the document G has passed through the intersecting position into the loop portion 82A. In this illustrative aspect, the guide may be realized as the guide flap 85, but an elastically deformable guide film can be used as the guide in place of the guide flap 85.

Moreover, this illustrative aspect is exemplified by arranging the output tray 81 over the input tray 80, which can also be vertically reversed. In this modification, the pick-up roller 33, the separation roller 34 and so on are arranged in the transfer path 82 on the side of the input tray 80, and the discharge roller 84 and so on are arranged in the transfer path 82 on the side of the output tray 81.

An image reading apparatus 9 according to another illustrative aspect is different from the image reading apparatus 1 according to the aforementioned illustrative aspects in the transfer route in ADF 3 of the image reading apparatus 1. Here is omitted the description of the configurations of the platen glass plates 20 and 21 and the image reading unit 22 of the document placing table 2, because it is similar to that of the first illustrative aspects. In the drawings, the same reference numerals as those of the illustrative aspects designate the common elements.

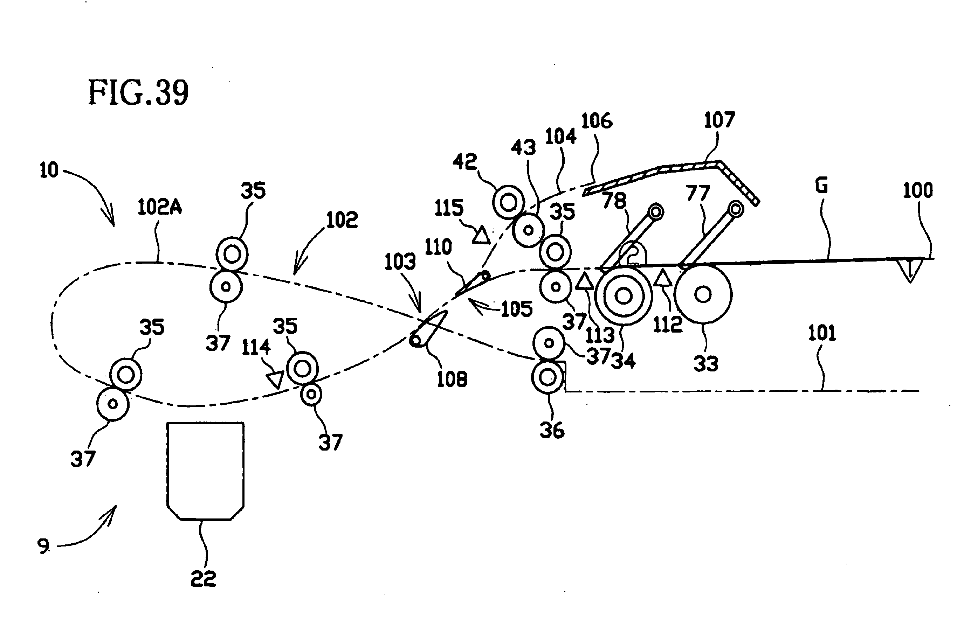

In an ADF 10 (i.e., an automatic document feeding mechanism) of the image reading apparatus 9, as shown in Fig. 39, a output tray 101 (i.e., a document discharge unit) for discharging a document G is arranged in two vertical stages over a input tray 100 (i.e., a document placing portion) for placing the document G thereon. A transfer path 102 (i.e., a fourth transfer path) is formed to connect the input tray 100 and the output tray 101 through the reading position by the image reading unit 22. This transfer path 102 is provided with an intersecting position 103 to form a loop portion 102A including the reading position. This transfer path 102 is used as the document transfer route commonly for single-sided reading and double-sided reading of the document G by the ADF 10.

Moreover, the length of the transfer route of the loop portion 102A extending from the intersecting position 103 of the transfer path 102 through the reading position again to the intersecting position 103 is set longer than the transfer-direction length of the largest readable document. For example, the largest readable document has a transfer-direction length of 297 mm for the A4 size, 11 inches for the letter size, and 14 inches for the legal size. Therefore, the length of the aforementioned loop-shaped transfer route is set longer than those lengths. In the image reading by the ADF 10, therefore, when the leading end of the document G proceeds from the intersecting position 103 to the intersecting position 103 again through the reading position, the trailing end of the document never fails to pass through the intersecting position 103 so that the intersecting position 103 can be prevented from the paper jamming or the like.

In the aforementioned transfer path 102, there are arranged, as the transfer means for transferring the document, the pick-up roller 33, the separation roller 34, the transfer rollers 35 and a discharge roller 36, and the pinch rollers 37 urged to abut against those rollers. Of these rollers, the pick-up roller 33 and the separation roller 34 are arranged at the most upstream position of the transfer path 102 corresponding to the input tray 100. Moreover, the discharge roller 36 is arranged at the most downstream position of the transfer path 102 corresponding to the input tray 100. In the ADF 10 of the present image reading apparatus 9, moreover, the document G to be read is placed on the input tray 100 "face-down", in which the reading side (i.e., the first side) of the document G is directed downward. Therefore, the pick-up roller 33 and the separation roller 34 are disposed on the lower side of the transfer path 102 so that their roller faces are partially exposed to the transfer path 102 and the nip pads 77 and 78 can be brought into and out of abutment against the pick-up roller 33 and the separation roller 34. The remaining configurations are similar to those of the aforementioned illustrative aspects.

In the transfer path 102 on the upstream side of the intersecting position 103, there is formed a bidirectional path 104 (i.e., the fifth transfer path) for transferring the document again, the first side of which has been read at the reading position, to the transfer path 102. Specifically, the bidirectional path 104 is branched from a third branching position 105 of the transfer path 102, as located on the upstream side of the intersecting position 103, obliquely upward to the input tray 100. Moreover, the bidirectional path 104 has its terminal end 106 opened to the outer side of the ADF 10. The transfer route formed by the bidirectional path 104 has a distance set shorter than the length of the document of the largest size in the transfer direction so that the document G having entered the bidirectional path 104 partially protrudes over the terminal end 106 to the outside of the ADF 10. This makes it unnecessary to keep the distance of the transfer route of the bidirectional path 104 at or longer than the largest document readable in the feeding direction.

By thus forming the bidirectional path 104 obliquely upward from the transfer path 102 toward the input tray 100, the upper-size space of the input tray 100 can be effectively exploited.

On the side of the input tray 100 from the terminal end 106 of the bidirectional path 104, there is formed a document supporting portion 107, which continues from that terminal end 106. The document supporting portion 107 supports the document G protruding from the terminal end 106 of the bidirectional path 104, and forms a casing for the ADF 10 on the upper side of the nip pads 77 and 78. This casing of the ADF 10 is formed to cover the pick-up roller 33 and the separation roller 34, and the document supporting portion 107 constructed as the casing is extended from the terminal end 106 toward the input tray 100 so as to extend to the upstream of the paper feeding position by the pick-up roller 33 and the separation roller 34 and by the nip pads 77 and 78. In the double-sided reading, therefore, the document G having entered the bidirectional path 104 and protruded from the terminal end 106 to the outside of the ADF 10 does not hang down to the downstream side from the feeding position of the documents G stacked on the input tray 100, so that it is not disturbed at the feeding position.

In the bidirectional path 104, there are arranged the reversible roller 42 and the pinch roller 43.

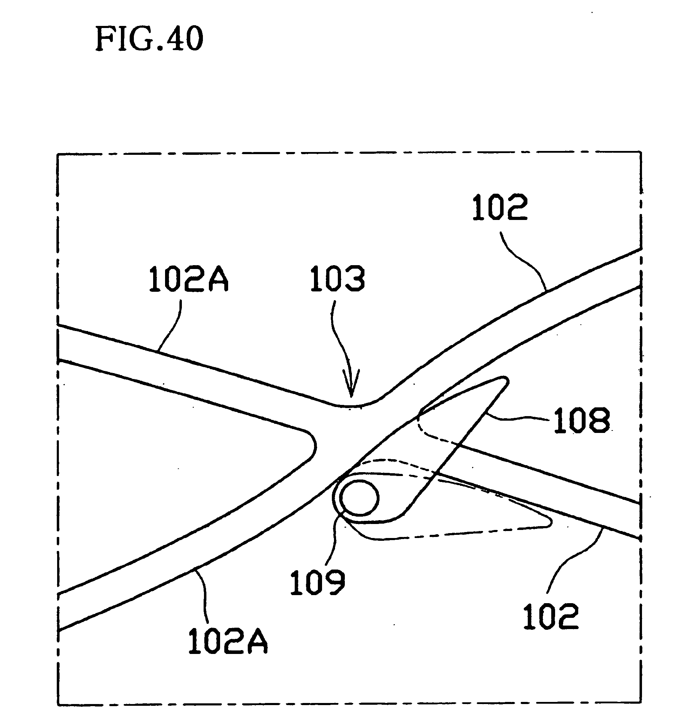

At the aforementioned intersecting position 103, as shown in Fig. 39 and Fig. 40, there is arranged a guide flap 108 (i.e., sixth guide) for switching the transfer routes of the document G suitably. The guide flap 108 is so arranged to rock on a pin 109 that it can be switched between the position, as indicated by solid line in Fig. 40, and the position, as indicated by double-dotted line. When the guide flap 108 is at the position indicated by the solid line, the transfer route continues from the transfer path 102 on the side (i.e., the right hand upper side of the drawing) of the input tray 100 to the loop portion 102A on the upstream side (i.e., the left hand lower side of the drawing) of the reading position. Moreover, the transfer route from the transfer path 102 on the side (i.e., the right hand upper side of the drawing) of the input tray 100 to the loop portion 102A on the upstream side (i.e., the left hand lower side of the drawing) of the reading position, but the transfer route from the transfer path 102 on the side (i.e., the right hand upper side of the drawing) of the input tray 100 to the loop portion 102A on the downstream side (i.e., the left hand lower side of the drawing) of the reading position is bent. Therefore, the document G transferred from the transfer path 102 on the side of the input tray 100 passes through the intersecting position 103 toward the loop portion 102A on the upstream side of the reading position.

When the guide flap 108 is at the position indicated by the double-dotted line, on the other hand, the transfer route from the loop portion 102A on the downstream side (i.e., the left hand upper side of the drawing) of the reading position to the transfer path 102 on the side (i.e., the right hand lower side of the drawing) of the output tray 101 continues. Moreover, the transfer route from the loop portion 102A on the downstream side (i.e., the left hand upper side of the drawing) of the reading position to the side (i.e., the right hand lower side of the drawing) of the output tray 101 of the transfer path 102 is substantially straight, but either the transfer route from the loop portion 102A on the downstream side (i.e., the left hand upper side of the drawing) of the reading position to the transfer path 102 on the side (i.e., the right hand upper side of the drawing) of the input tray 100 or the transfer route to the loop portion 102A on the upstream side of the reading position is bent. As a result, the document G having been transferred from the loop portion 102A on the downstream side of the reading position passes through the intersecting position 103 toward the transfer path 102 on the side of the output tray 101.

The switching of the transfer route by the aforementioned guide flap 108 is performed by the abutment of the document and by the rocking regulation of the guide flap 108. Specifically, the guide flap 108 is positioned to continue the transfer route from the transfer path 102 on the side (i.e., the right hand upper side of the drawing) of the input tray 100 to the loop portion 102A on the upstream side (i.e., the left hand lower side of the drawing) of the reading position at all times, as indicated by the solid line in Fig. 40. At the normal time, the guide flap 108 can be rocked to the position, as indicated by the double-dotted line in Fig. 4, such that it is pushed downward by the abutment of the document G which has been transferred from the loop portion 102A on the downstream side of the reading position. As a result, the document G, as transferred from the loop portion 102A on the downstream side of the reading position, proceeds through the intersecting position 103 toward the output tray 101.

When the document G is transferred for the double-sided reading to the bidirectional path 104, on the other hand, the rocking motion of the guide flap 108 is regulated. As a result, the transfer route continues from the loop portion 102A on the downstream side (i.e., the left hand upper side of the drawing) of the reading position to the transfer path 102 on the side (i.e., the right hand upper side of the drawing) of the bidirectional path 104. Contrary to the transfer route from the loop portion 102A on the downstream side (i.e., the left hand upper side of the drawing) of the reading position to the transfer path 102 on the side (i.e., the right hand upper side of the drawing) of the input tray 100, the transfer route to the loop portion 102A on the upstream side (i.e., the left hand lower side of the drawing) of the reading position is acutely bent. As a result, the document G transferred from the loop portion 102A on the downstream side of the reading position is guided to the bidirectional path 104 by the guide flap 108. Thus, the guide flap 108 is changeably arranged at the intersecting position 103 to guide the document to the desired transfer route. Here in this illustrative aspect, the guide flap 108 is switched by the abutment of the document, but may also be positively rocked or fixed by the driving force of the transfer roller or the like.

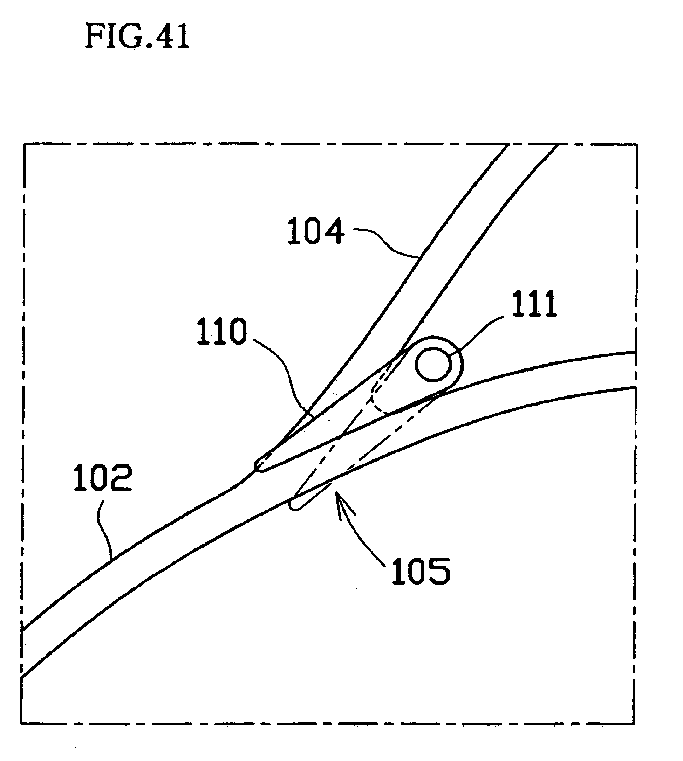

At the aforementioned third branching position 105, as shown in Fig. 39 and Fig. 41, there is arranged a guide flap 110 (i.e., seventh guide) for switching the transfer route for the document G suitably. The guide flap 110 is arranged to rock on a pin 111 so that it is switched to the position, as indicated by solid line in Fig. 41, and the position, as indicated by double-dotted line. When the guide flap 110 is at the position indicated by the solid line, the transfer route continues from the transfer path 102 on the side (i.e., the right hand side of the drawing) of the input tray to the side (i.e., the left hand side of the drawing) of the intersecting position 103. Therefore, the document G fed from the input tray 100 passes through the third branching position 105 toward the intersecting position 103. When the guide flap 110 is positioned, as indicated by the double-dotted line, on the other hand, the transfer route continues from the transfer path 102 on the side (i.e., the left hand side of the drawing) of the intersecting position 103 to the bidirectional path 104 (i.e., the upper side of the drawing). As a result, the document G transferred through the reading position to the intersecting position 103 passes through the third branching position 105 into the bidirectional path 104. Thus, the guide flap 110 is changeably arranged at the third branching position 105 to guide the document to a desired transfer route.

Moreover, the transfer route from the input tray 100 through the intersecting position 103 to the reading position of the transfer path 102 is formed into an S-shape in the longitudinally sectional view. Moreover, the transfer route from the bidirectional path 104 through the third branching position 105 and the intersecting position 103 to the reading position is also formed into an S-shape in the longitudinally sectional view. As a result, the transfer of the document from the input tray 100 or the bidirectional path 104 through the third branching position 105 and the intersecting position 103 to the reading position is smoother to prevent the occurrence of paper jamming at the intersecting position 103, the third branching position 105 and so on. Moreover, the configuration of the guide (i.e., the guide flap 108) at the intersecting position 103 is simplified.

As shown in Fig. 39, the transfer path 102 is provided with sensors for detecting the transfer of the document G. In the transfer path 102, more specifically, there are arranged a first front sensor 112 and a second front sensor 113 on the upstream side and the downstream side of the separation roller 34, respectively. A rear sensor 114 is arranged just on the upstream side of the reading position. A sensor 115 is arranged just on the upstream side of the reversible roller 42 of the bidirectional path 104. These individual sensors are the so-called "optical sensors", which are similar in their detailed configurations to the first front sensor 50 described in the illustrative aspects.

The image reading actions by the image reading apparatus 9 are described in the following.

When the ADF 10 of the image reading apparatus 9 is used, the document G to be read is placed on the input tray 100. As shown in Fig. 39, the document G is placed on the input tray 100 "face-down", in which the reading side (i.e., the first side) of the document G is directed downward Then, the single-sided reading or the double-sided reading is selected, and the reading start is inputted to the image reading apparatus 9. When the reading start is inputted, the carriage motor and the transfer motor are activated to drive the pick-up roller 33, the separation roller 34, the transfer roller 35 and the discharge roller 36 rotationally at predetermined timings. Then, the documents G are separated sheet by sheet from the input tray 100 and fed to the transfer path 102 so that the images of the documents G are read at the reading position by the image reading unit 22. The document G having finished the image reading is discharged to the output tray 101. In these image reading actions, the transfer route of the document G is different between the single-sided reading case and the double-sided reading case of the document G.

The following description describes the single-sided reading. When the reading start is inputted to the image reading apparatus 9, as shown in Fig. 39, the guide flap 110 switches the transfer route at the third branching position 105 to continue from the transfer path 102 on the side of the output tray 101 to the side of the intersecting position 103. On the other hand, the guide flap 108 is so positioned, without any abutment against the document G, as to continue the transfer route at the intersecting position 103 from the transfer path 102 on the side of the input tray 100 to the loop portion 102A on the upstream side of the reading position. In this state, the guide flap 108 is permitted to rock.

Subsequently, it is detected by the first front sensor 112 whether or not the document G is placed on the input tray 100. When the document G is not placed on the input tray 100, an error display of "No Document" is made on the display unit of the image reading apparatus 9. If the document G is placed on the input tray 100, the driving force is transmitted from the transfer motor so that the pick-up roller 33 and the separation roller 34 are rotated. The documents G, which are urged to abut against the pick-up roller 33 and the separation roller 34 by the nip pads 77 and 78, on the input tray 100 are separated sheet by sheet from the lowermost position and fed to the transfer path 102.

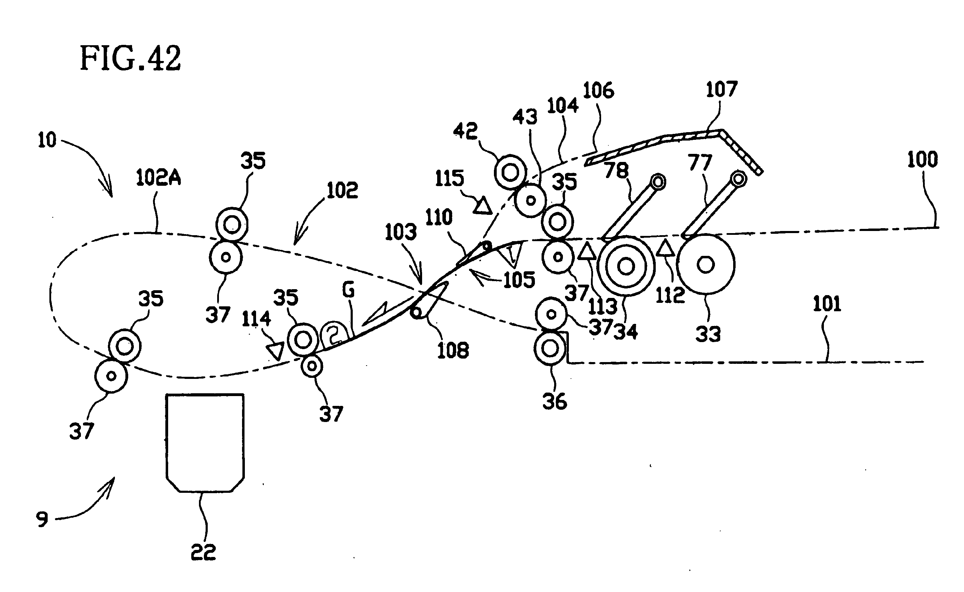

In the transfer path 102, the driving force from the transfer motor is transmitted to the transfer roller 35 and the discharge roller 36 so that these rollers are rotated to transfer the document G from the upstream side to the downstream side of the transfer path 102. The document G thus fed from the input tray 100 to the transfer path 102 is nipped by the transfer roller 35 and the pinch roller 37 so that it is transferred into the transfer path 102 by the rotating force transmitted. As shown in Fig. 42, the document G is transferred at the third branching position 105 to the transfer path 102 on the side of the intersecting position 103. Here, the transfer route from the third branching position 105 to the bidirectional path 104 is closed by the guide flap 110.

Moreover, the transfer route from the transfer path 102 on the side of the input tray 100 to the loop portion 102A on the upstream side of the reading position is substantially straight. At the intersecting position 103, as shown in Fig. 42, the document G proceeds not to the transfer path 102 on the side of the output tray 101 or the loop portion 102A on the downstream side of the reading position but straight.

Then, the document G is transferred to the loop portion 102A on the upstream side of the reading position so that its leading end is detected by the rear sensor 114. The leading end of the document G reaches the reading position when a predetermined time period elapses after it was detected by the rear sensor 114. Therefore, the image reading unit 22 starts the image reading of the document G, when the leading end of the document G reaches the reading position.

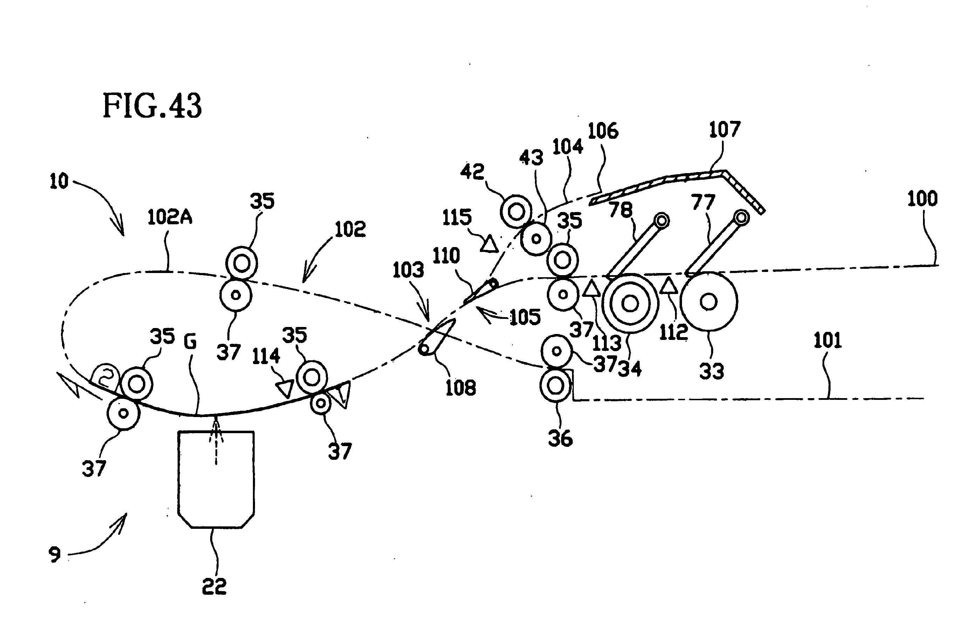

As shown in Fig. 43, the document G passes through the reading position with its first side opposing the image reading unit 22, so that the image reading unit 22 reads the image of the first side of the document G. When a predetermined time period elapses after the trailing end of the document G was detected by the rear sensor 114, the image reading unit 22 ends the image reading of the document G.

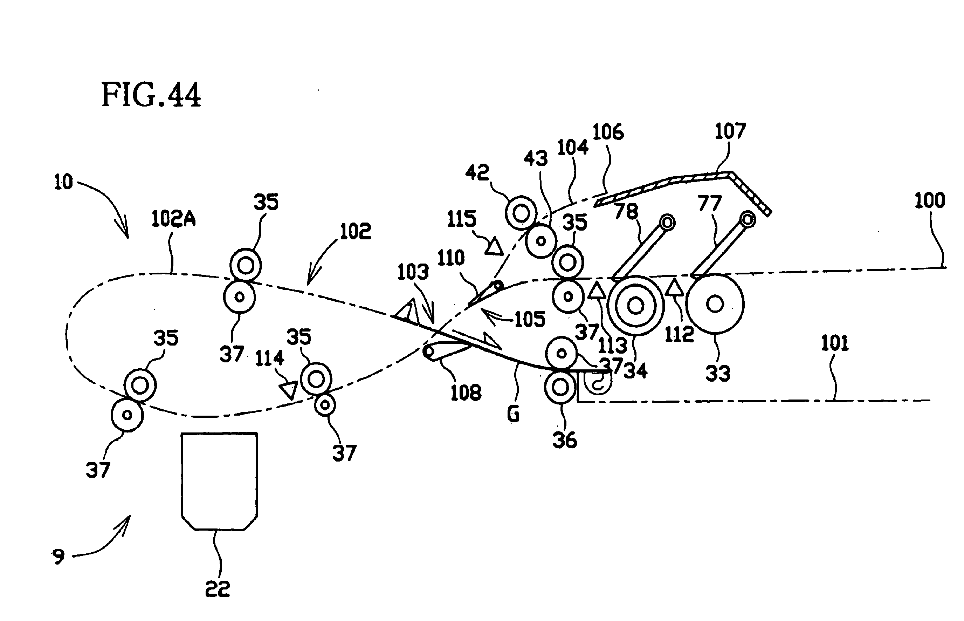

Moreover, the document G is turned back in the loop portion 102A and transferred to the downstream side of the reading position so that it reaches the intersecting position 103 and abuts against the guide flap 108. This guide flap 108 is permitted to rock so that it is pushed down by the document G. As shown in Fig. 44, the document G proceeds from the loop portion 102A on the downstream side of the reading position to the transfer path 102 on the side of the output tray 101. Since the transfer route from the loop portion 102A on the downstream side of the reading position to the transfer path 102 on the side of the output tray 101 is substantially straight, the document G proceeds at the intersecting position 103 straight but not to the loop portion 102A on the upstream side of the reading position or on the side of the input tray 100.

Then, the document G is nipped by the discharge roller 36 and the pinch roller 37 and is discharged from the transfer path 102 to the output tray 101. When the input tray 100 is set with the next document G, the documents G on the input tray 100 are transferred sheet by sheet by repeating those actions so that their image reading is performed.

Next, the double-side reading is described in the following. Here, the side, as indicated by "1", of the document G is the first side to be read at first in the double-sided reading, and the face, as indicated by "2", is the second side to be read later. The first side and the second side are in a front-back relationship.

As in the single-sided reading case, when the reading start is inputted to the image reading apparatus 9, the guide flap 105 is switched to continue the transfer route at the third branching position 105 from the transfer path 102 on the side of the input tray 100 to the intersecting position 103. On the other hand, the guide flap 108 is positioned, without any abutment against the document G, to continue the transfer route at the intersecting position 103 from the transfer path 102 on the side of the input tray 100 to the loop portion 102A on the upstream side of the reading position. In this state, the guide flap 108 is permitted to rock.

Then, it is detected by the first front sensor 112 whether the document G is placed on the input tray 100, and the pick-up roller 33 and the separation roller 34 are rotated to let the document G in the transfer path 102. In the transfer path 102, the transfer roller 35 is rotated to transfer the document G from the upstream side to the downstream side, so that the document G fed from the input tray 100 to the transfer path 102 is transferred at the third branching position 105 toward the transfer path 102 on the side of the intersecting position 103.

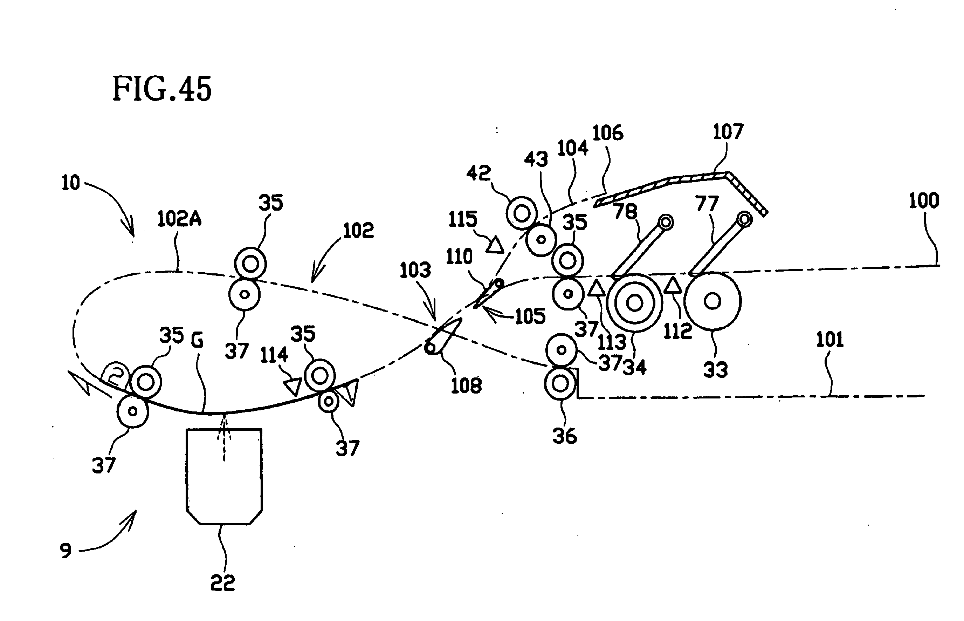

As shown in Fig. 45, the trailing end of the document G passes through the intersecting position 103 of the transfer path 102 and reaches the inside of the loop portion 102A, and the guide flap 110 switches the transfer route at the third branching position 105. Specifically, when a predetermined time period elapses after the trailing end of the document G was detected by the second front sensor 113, the trailing end of the document G passes through the intersecting position 103. It is, therefore, determined that the document G has reached the inside of the loop portion 102A of the transfer path 102. Then, the guide flap 110 is switched to continue the transfer route of the third branching position 105 from the transfer path 102 on the side of the intersecting position 103 to the bidirectional path 104. When it is determined that the document G has reached the inside of the loop portion 102A of the transfer path 102, the rocking motion of the guide flap 108 is regulated.

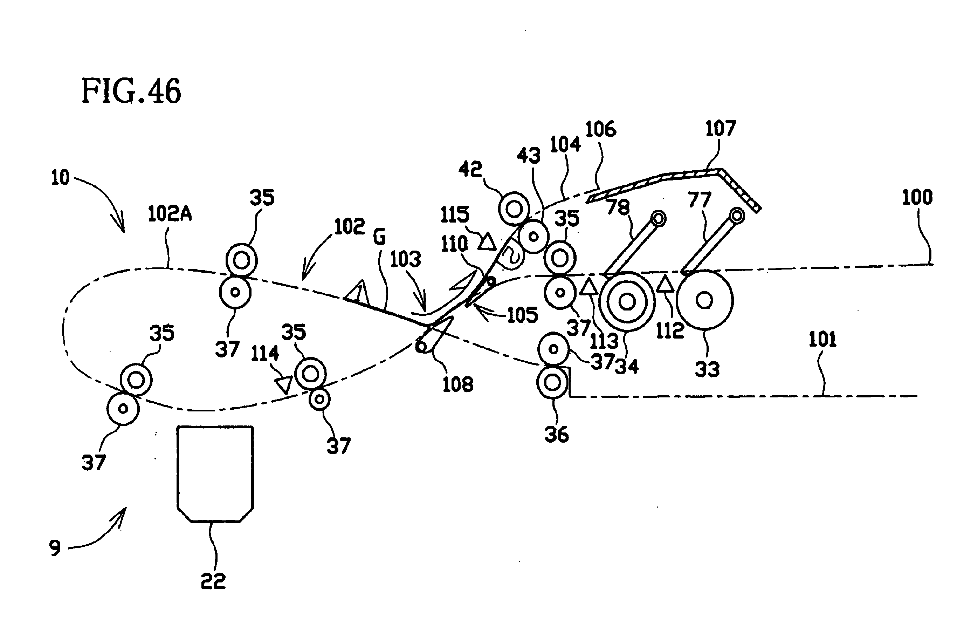

When the leading end of the document G is detected by the rear sensor 114 so that it reaches the reading position, the image reading of the first side of the document G is started by the image reading unit 22. When the trailing end of the document G is then detected by the rear sensor 114 so that it reaches the reading position, the image reading unit 22 ends the image reading of the document G. As shown in Fig. 46, the document G having its first side read proceeds at the intersecting position 103, while being guided by the guide flap 108, from the loop portion 102A on the downstream side of the reading position to the transfer path 102 on the side of the input tray 100. Moreover, the document G is guided by the guide flap 110 to proceed at the third branching position 105 of the transfer path 102 to the bidirectional path 104.

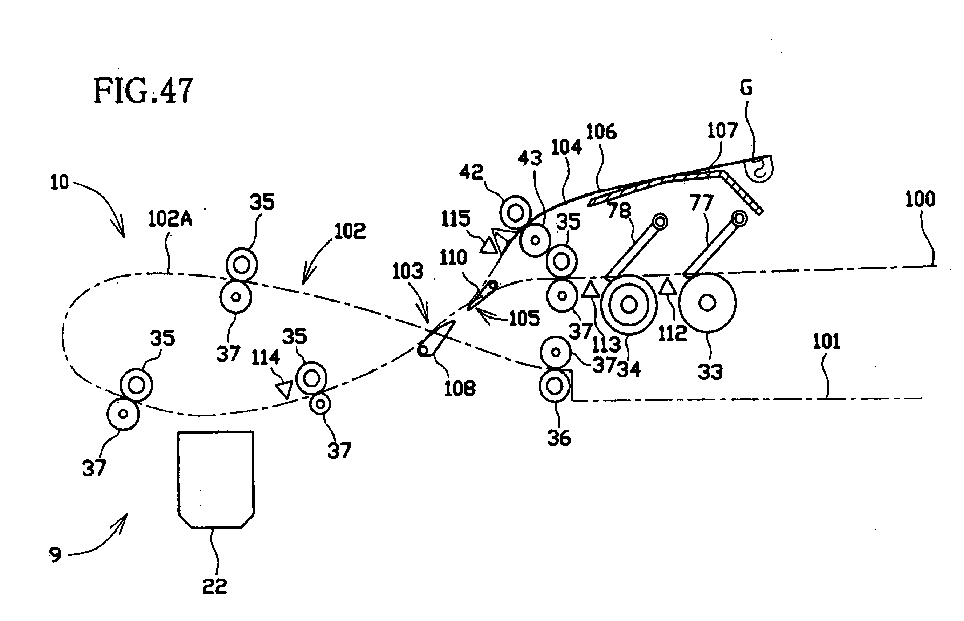

Then, the document G is nipped by the reversible roller 42 and the pinch roller 43 and is transferred in the bidirectional path 104 to the side of the terminal end 106 by the rotation of the reversible roller 42. After the document G completely proceeds into the bidirectional path 104, the reversible roller 42 is stopped. As shown in Fig. 47, specifically, when the trailing end of the document G having proceeded into the bidirectional path 104 is detected by the sensor 115, it is determined that the document G has completely proceeded into the bidirectional path 104. When the reversible roller 42 is stopped, the document G stops, as shown in Fig. 47, while being nipped by the reversible roller 42 and the pinch roller 43. At this time, the document G partially protrudes from the terminal end 106 of the bidirectional path 104 to the outside of the ADF 10, but the protruded portion of the document G is supported by the document supporting portion 107. After this, the reversible roller 42 is rotated backward, so that the document G is responsively transferred to return in the bidirectional path 104 on the side of the transfer path 102.

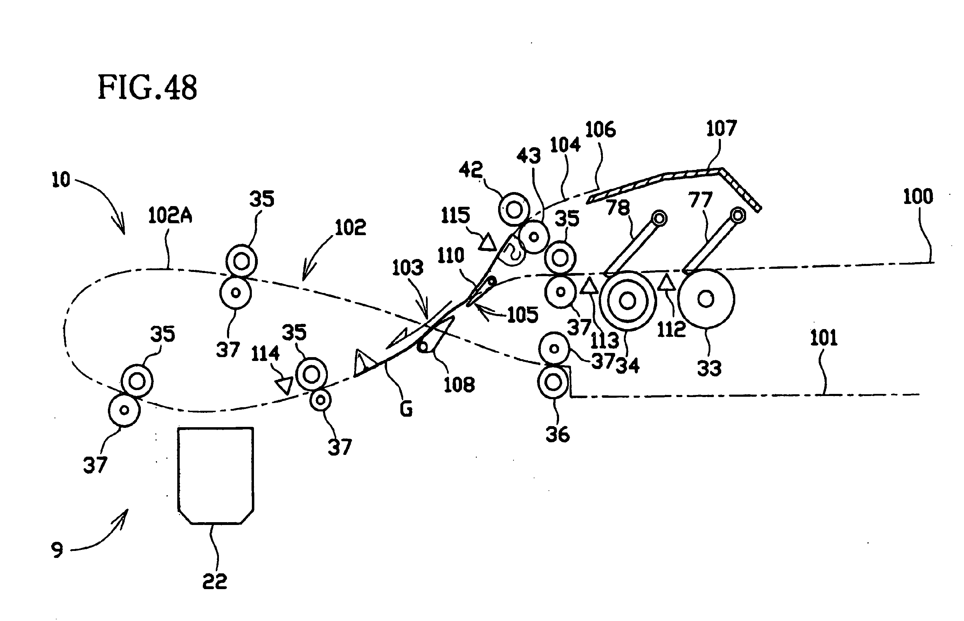

As shown in Fig. 48, the document G returned from the bidirectional path 104 proceeds from the third branching position 105 to the transfer path 102 on the side of the intersecting position 103. Here at the third branching position 105, the transfer route of the transfer path 102 on the side of the input tray 100 is closed by the guide flap 110. Moreover, the document G proceeds straight at the intersecting position 103 into the loop portion 102A on the upstream side of the reading position. The transfer route from the transfer path 102 on the side of the bidirectional path 104 to the loop portion 102A on the downstream side of the reading position is bent so that the document G returned from the bidirectional path 104 does not proceed at the intersecting position 103 to the loop portion 102A on the downstream side of the reading position. Here, the transfer route to the transfer path 102 on the side of the output tray 101 is closed by the guide flap 108. Thus, the document G is transferred from the bidirectional path 104 to the transfer path 102 so that the document G is transferred again in the loop portion 102A in the state where the leading end and the trailing end are reversed from those of the state where it was transferred at first in the loop portion 102A. Then, the document G is transferred in the loop portion 102A so that its second side opposes the reading position.

When it is detected by the rear sensor 114 that the leading end of the document G has reached the reading position, the image reading of the second side of the document G is started by the image reading unit 22. When it is determined by the rear sensor 114 that the trailing end of the document G has reached the reading position, on the other hand, the image reading unit 22 ends the image reading of the document G. Then, the document G having its second side read proceeds, while being guided by the guide flap 108, from the intersecting position 103 to the transfer path 102 on the side of the input tray 100. The document G further proceeds at the third branching position 105 of the transfer path 102 into the bidirectional path 104. After the document G completely proceeds into the bidirectional path 104, the reversible roller 42 is stopped. After this, the reversible roller 42 is rotated backward, and the document G is responsively returned to the third branching position 105 from the bidirectional path 104 to the transfer path 102 on the side of the intersecting position 103, and proceeds straight at the intersecting position 103 to the loop portion 102A on the upstream side of the reading position so that its leading end and trailing end are reversed again. When it is determined that the document G has reached the loop portion 102A of the transfer path 102, the guide flap 108 regulated is permitted to rock.

Then, the document G is transferred in the loop portion 102A and returned again to the intersecting position 103 so that it proceeds, while pushing down the guide flap 108, into the transfer path 102 on the side of the output tray 101, as shown in Fig. 44. Then, the document G is discharged to the output tray 101 by the discharge roller 36 with its first side being directed upward. When the input tray 100 is set with the next document G, the documents G on the input tray 100 are transferred sheet by sheet by repeating those actions so that their image reading is performed. Moreover, the documents G are sequentially discharged with the second sides being directed upward to the output tray 101 so that they may be stacked one on top of the other. As a result, the input tray 100 keeps the documents G stacked.

Thus, according to the image reading apparatus 9, the transfer path 102 intersects to form the loop portion 102A including the reading position, and is branched at the intersecting position 103 from the third branching position 105 on the side of the input tray 100 thereby to form the bidirectional path 104 for again feeding the document G read to the reading position. It is, therefore, unnecessary to form transfer paths at the loop portion 102A of the transfer path 102. As a result, the device can be lowered to realize its size reduction.

Here in this illustrative aspect, the double-sided reading actions by the image reading apparatus 9 have been described such that the documents G placed on the input tray 100 are discharged to the output tray 101 while keeping their order. When, however, it is unnecessary to register the order of the documents G placed on the input tray 100 and the order of the documents G discharged to the output tray 101, the document G need not again be subjected to the third transfer path, but may also be transferred and discharged to the output tray 101. As a result, the order of the documents G on the output tray 101 is not kept, but the third transfer path can be omitted to shorten the time period required for reading the two sides of the documents G.

In this illustrative aspect, the guide flap 108 is caused to switch the transfer path by the abutment against the document G. By applying a driving force from a transfer motor or the like to the guide flap 108, however, this guide flap 108 may also be constructed to switch the transfer path independently of the abutment against the document G. In this modification, it is arbitrary whether it is determined on the basis of the detection signal of the second front sensor 113 or the detection signal of the sensor 115, for example, if the document G has passed through the intersecting position 103 into the loop portion 102A. In this illustrative aspect, the guide can be realized as the guide flaps 108 and 110, but an elastically deformable guide film can be used as the guide, for example, in place of the guide flap 108.

Moreover, this illustrative aspect may be exemplified by arranging the output tray 101 over the input tray 100, which can also be vertically reversed. In this modification, the pick-up roller 33, the separation roller 34 and so on are arranged on the upper side of the input tray 100 whereas the bidirectional path 104 is formed from the third branching position 105 on the upstream side of the intersecting position 103, and the discharge roller 36 and so on are arranged in the transfer path 102 on the side of the output tray 101.

An image reading apparatus 11 according to another illustrative aspect is different from the image reading apparatus 1 according to the aforementioned described aspects in the transfer route in ADF 3 of the image reading apparatus 7. Here is omitted the description of the configurations of the platen glass plates 20 and 21 and the image reading unit 22 of the document placing table 2, because it is similar to that of the other illustrative aspects. In the drawings, moreover, the same reference numerals as those of the previously described aspects designate the common elements.

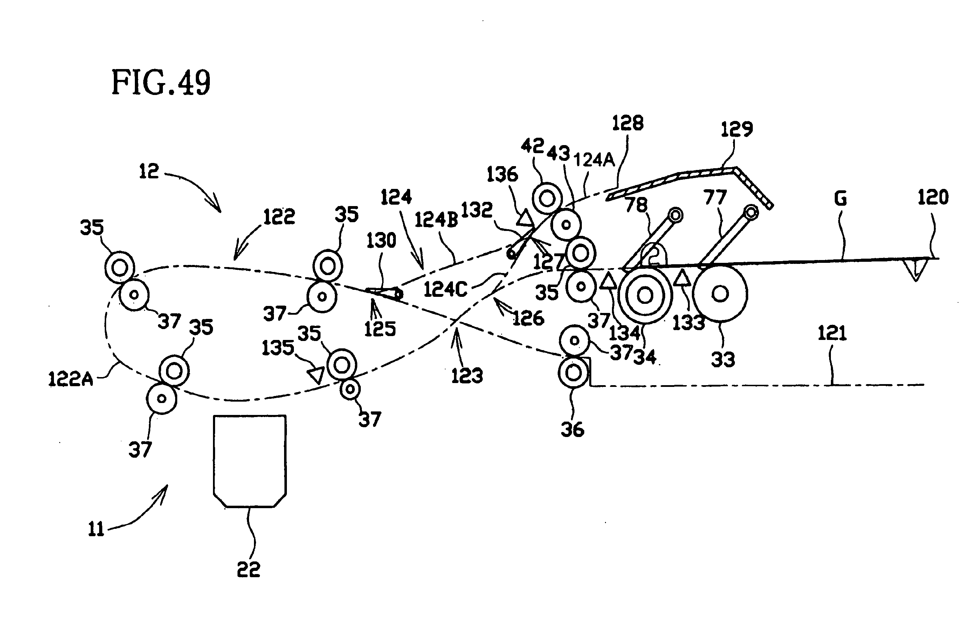

In an ADF 12 (i.e., an automatic document feeding mechanism) of the image reading apparatus 11, as shown in Fig. 49, a output tray 121 (i.e., a document discharge unit) for discharging a document G is arranged in two vertical stages under a input tray 120 (i.e., a document placing portion) for placing the document G thereon. A transfer path 122 (i.e., a fourth transfer path) is formed to connect the input tray 120 and the output tray 121 through the reading position by the image reading unit 22. This transfer path 122 is provided with an intersecting position 123 to form a loop portion 122A including the reading position. This transfer path 122 is used as the document transfer route commonly for the single-sided reading and double-sided reading of the document G by the ADF 12.

Moreover, the length of the transfer route of the loop portion 122A extending from the intersecting position 123 of the transfer path 122 through the reading position again to the intersecting position 123 is set longer than the transfer-direction length of the largest readable document. For example, the largest readable document has a transfer-direction length of 297 mm for the A4 size, 11 inches for the letter size, and 14 inches for the legal size. Therefore, the length of the aforementioned loop-shaped transfer route is set longer than those lengths. In the image reading by the ADF 12, therefore, when the leading end of the document G proceeds from the intersecting position 123, passes through the reading position and proceeds again to the intersecting position 123, the trailing end of the document may not fail to pass through the intersecting position 123 so that the intersecting position 123 can be prevented from experiencing paper jamming or the like.

In the intersecting position 123, the transfer route from the transfer path 122 on the side of the input tray 120 to the loop portion 122A on the upstream side of the reading position is substantially straight, and the transfer route from the loop portion 122A on the downstream side of the reading position to the transfer path 122 on the side of the output tray 121 is also substantially straight On the other hand, the transfer route from the transfer path 122 on the side of the input tray 120 to the loop portion 122A on the downstream side of the reading position and to the side of the output tray 121 is bent Moreover, the transfer route from the loop portion 122A on the downstream side of the reading position to the transfer path 122 on the input tray 120 and the transfer route to the loop portion 122A on the upstream side of the reading position are bent Therefore, the document G transferred from the transfer path 122 on the side of the input tray 120 passes straight through the intersecting position 123 toward the loop portion 122A on the upstream side of the reading position, and the document G transferred from the loop portion 122A on the downstream side of the reading position passes straight at the intersecting position 123 toward the transfer path 122 on the side of the output tray 121. At the intersecting position 123, therefore, there can be omitted the guide for guiding the document to the desired transfer path.

In the aforementioned transfer path 122, there are arranged, as the transfer means for transferring the document, the pick-up roller 33, the separation roller 34, the transfer rollers 35 and a discharge roller 36, and the pinch rollers 37 urged to abut against those rollers. Of these rollers, the pick-up roller 33 and the separation roller 34 are arranged at the most upstream position of the transfer path 122 corresponding to the input tray 120. Moreover, the discharge roller 36 is arranged at the most downstream position of the transfer path 122 corresponding to the input tray 120. In the ADF 12 of the image reading apparatus 11, the document G to be read is placed on the input tray 120 "face-down", in which the reading side (i.e., the first face) of the document G is directed downward. Therefore, the pick-up roller 33 and the separation roller 34 are disposed on the lower side of the transfer path 122 so that their roller faces are partially exposed to the transfer path 122,and the nip pads 77 and 78 can be brought into and out of abutment against the pick-up roller 33 and the separation roller 34. The remaining configurations are similar to those of the aforementioned aspects.

In the double-sided reading case, there is formed in the transfer path 122 a switching path 124 (i.e., a sixth transfer path) for transferring the document again having its first side read at the reading position, to the transfer path 122. Specifically, the bidirectional path 124 is formed into such a Y-shape that two branch portions 124B and 124C are branched from a trunk portion 124A. The branch portion 124B is branched from a fourth branching position 125 of the transfer path 122 at the upper-side portion of the loop portion 122A and extended obliquely upward to the input tray 120. Moreover, branch portion 124C is branched from a fifth branching position 126 of the transfer path 122 closer to the side of the input tray 120 than the intersecting position 123 and extended obliquely upward to the input tray 120. Moreover, the branch portion 124B and branch portion 124C intersect at a branching position 127 and continue to the trunk portion 124A.

The trunk portion 124A is also extended toward the input tray 120 and has its terminal end 128 opened to the outside of the ADF 12. The transfer route formed by the bidirectional path 124 has a distance set shorter than the length of the document of the largest size in the transfer direction so that the document G having entered the bidirectional path 124 partially protrudes over the terminal end 128 to the outside of the ADF 12. This makes it unnecessary to keep the distance of the transfer route of the bidirectional path 124 at or longer than the largest document readable in the feeding direction.

By thus forming the bidirectional path 124 obliquely upward from the transfer path 122 toward the input tray 120, the upper-size space of the input tray 120 can be effectively exploited. Moreover, the transfer route from the transfer path 122 on the side of the input tray 120 to the intersecting position 123 and the transfer route from the branch portion 124C of the bidirectional path 124 to the side of the intersecting position 123 intersect at an acute angle. Therefore, the document G does not proceed from the transfer path 122 on the side of the input tray 120 to the branch portion 124C, and the document G returned from the branch portion 124C does not proceed to the transfer path 122 on the side of the input tray 120. As a result, there can be omitted the guide for guiding the document to the desired transfer path at the fifth branching position 126.

On the side of the input tray 120 from the terminal end 128 of the bidirectional path 124, there is formed a document supporting portion 129, which continues from that terminal end 128. The document supporting portion 129 supports the document G protruding from the terminal end 128 of the bidirectional path 124, and forms a casing for the ADF 12 on the upper side of the nip pads 77 and 78. This casing of the ADF 12 is formed to cover the nip pads 77 and 78, and the document supporting portion 129 constructed as the casing is extended from the terminal end 128 toward the input tray 120 to extend to the upstream of the paper feeding position by the pick-up roller 33 and the separation roller 34 and by the nip pads 77 and 78. In the double-sided reading, therefore, the document G having entered the bidirectional path 124 and protruded from the terminal end 128 to the outside of the ADF 12 does not hang down to the downstream side from the feeding position of the documents G stacked on the input tray 120, so that it is not disturbed at the feeding position.

In the trunk portion 124A of the bidirectional path 124, there are arranged the reversible roller 42 and the pinch roller 43.

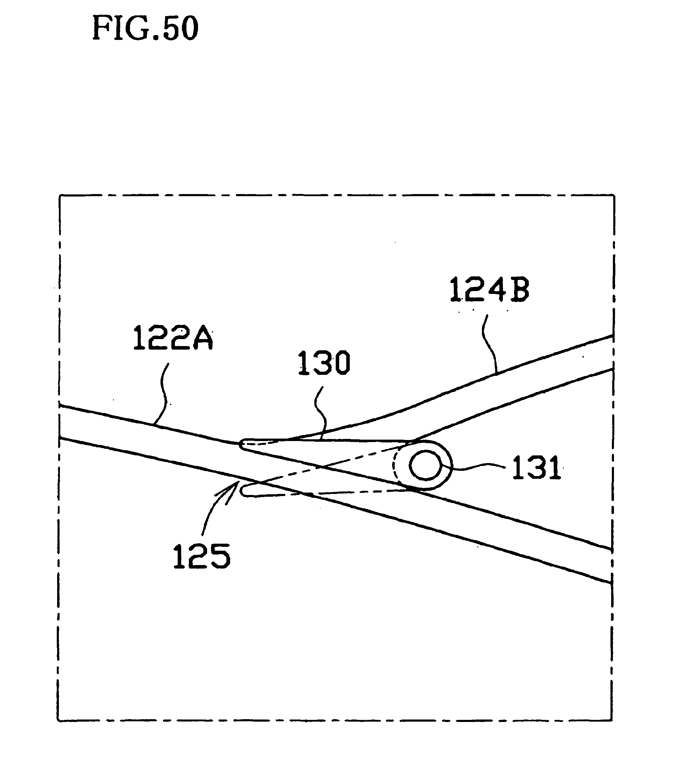

At the aforementioned fourth branching position 125, as shown in Fig. 49 and Fig. 50, there is arranged a guide flap 130 (i.e., eighth guide) for switching the transfer routes of the document G suitably. The guide flap 130 is so arranged to rock on a pin 131 that it can be switched between the position, as indicated by the solid line in Fig. 50, and the position, as indicated by the double-dotted line. When the guide flap 130 is at the position indicated by the solid line, the transfer route continues from the loop portion 122A on the reading position side (i.e., the left hand side of the drawing) to the side (i.e., the left hand lower side of the drawing) of the intersecting position 123. Therefore, the document G transferred from the reading position is guided at the fourth branching position 125 toward the intersecting position 123. When the guide flap 130 is at the position indicated by the double-dotted line, on the other hand, the transfer route continues from the loop portion 122A on the reading position side (i.e., the left hand side of the drawing) to the branch portion 124B (i.e., the right hand upper side of the drawing) of the bidirectional path 124. As a result, the document G transferred from the reading position is guided at the fourth branching position 125 to proceed into the branch portion 124B of the bidirectional path 124. Thus, the guide flap 130 is arranged at the fourth branching position 105 to guide the document to a desired transfer route.

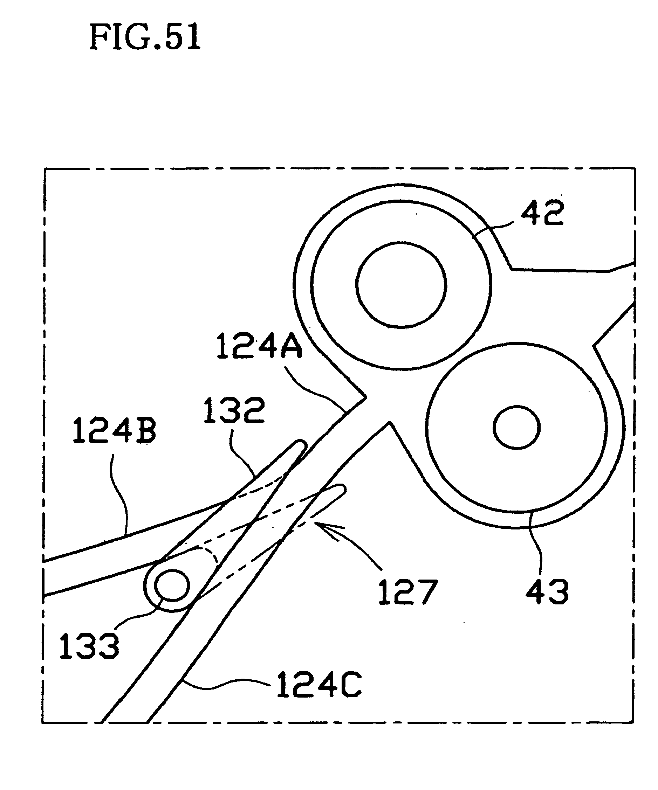

At the aforementioned branching position 127, as shown in Fig. 49 and Fig. 51, there is arranged a guide flap 132 (i.e., ninth guide) for switching the transfer route for the document G suitably. The guide flap 132 is arranged to rock on a pin 133 so that it is switched to the position, as indicated by the solid line in Fig. 51, and the position, as indicated by the double-dotted line. When the guide flap 132 is at the position indicated by the solid line, the transfer route continues from the trunk portion 124A (i.e., the right hand side of the drawing) of the bidirectional path 124 to the branch portion 124C (i.e., the lower side of the drawing). Therefore, the document G returned from the trunk portion 124A is guided at the branching position 127 toward the branch portion 124C. When the guide flap 132 is positioned, as indicated by the double-dotted line, on the other hand, the transfer route continues from the branch portion 124B (i.e., the left hand side of the drawing) of the bidirectional path 124 to the trunk portion 124A (i.e., the right hand side of the drawing). Therefore, the document G transferred from the branch portion 124B is guided from the branching position 127 toward the trunk portion 124A. Thus, the guide flap 130 is arranged to guide the document from the branching position 127 to the desired transfer route.

The switching of the transfer route by the aforementioned guide flap 132 is performed by the abutment of the document G. Specifically, the guide flap 132 is positioned at the normal time, as shown by the solid line in Fig. 51, to continue the transfer route from the trunk portion 124A (i.e., the right hand side of the drawing) of the bidirectional path 124 to the branch portion 124C (i.e., the lower side of the drawing). Moreover, when the document G being transferred in the branch portion 124B comes into abutment against the guide flap 132, this guide flap 132 is pushed away to rock to the position, as indicated by the double-dotted line in Fig. 51, so that the document G proceeds into the trunk portion 124A. Thus, the guide flap 132 is arranged to switch the transfer route suitably at the branching position 127. Here in this illustrative aspect, the guide flap 132 is switched by the abutment of the document G, but may be positively rocked by the driving force of the transfer roller or the like.

As shown in Fig. 49, moreover, the transfer path 122 is provided with sensors for detecting the transfer of the document G. In the transfer path 122, more specifically, there are arranged a first front sensor 133 and a second front sensor 134 on the upstream side and the downstream side of the separation roller 34, respectively. A rear sensor 135 is arranged just on the upstream side of the reading position. A sensor 136 is arranged just on the upstream side of the reversible roller 42 of the trunk portion 124A of the bidirectional path 124. These individual sensors are the so-called "optical sensors", which are similar in their detailed configurations to the first front sensor 50 described in the previously described aspects.

The image reading actions by the image reading apparatus 11 are described in the following.

When the ADF 12 of the image reading apparatus 11 is used, the document G to be read is placed on the input tray 120. As shown in Fig. 49, the document G is placed on the input tray 120 "face-down", in which the reading side (i.e., the first side) of the document G is directed downward. Then, the single-sided reading or the double-sided reading is selected, and the reading start is inputted to the image reading apparatus 11. When the reading start is inputted, the carriage motor and the transfer motor are activated to drive the pick-up roller 33, the separation roller 34, the transfer roller 35 and the discharge roller 36 rotationally at predetermined timings. Then, the documents G are separated sheet by sheet from the input tray 120 and fed to the transfer path 122 so that the images of the documents G are read at the reading position by the image reading unit 22. The document G having finished the image reading is discharged to the output tray 121. In these image reading actions, the transfer route of the document G is different between the single-sided reading case and the double-sided reading case of the document G.

The first description describes single-sided reading. When the reading start is inputted to the image reading apparatus 11, as shown in Fig. 49, the guide flap 130 switches the transfer route at the third branching position 125 to continue from the loop portion 122A on the reading position side to the side of the intersecting position 123.

Subsequently, it is detected by the first front sensor 133 whether the document G is placed on the input tray 120. When the document G is not placed on the input tray 120, an error display of "No Document" is provided on the display unit of the image reading apparatus 11. If the document G is placed on the input tray 120, the driving force is transmitted from the transfer motor so that the pick-up roller 33 and the separation roller 34 are rotated. The documents G, which are urged to abut against the pick-up roller 33 and the separation roller 34 by the nip pads 77 and 78, on the input tray 120 are separated sheet by sheet from the lowermost position and fed to the transfer path 122.

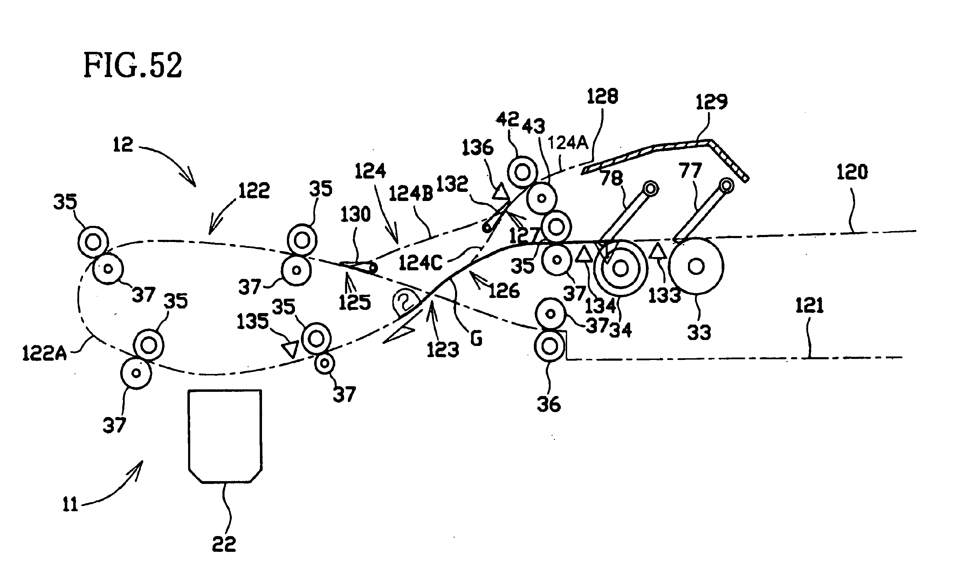

In the transfer path 122, the driving force from the transfer motor is transmitted to the transfer roller 35 and the discharge roller 36 so that these rollers are rotated to transfer the document G from the upstream side to the downstream side of the transfer path 122. The document G thus fed from the input tray 120 to the transfer path 122 is nipped by the transfer roller 35 and the pinch roller 37 so that it is transferred in the transfer path 122 by the rotating force transmitted. As shown in Fig. 52, the document G is transferred at the fifth branching position 126 to the transfer path 122 on the side of the intersecting position 123. Moreover, the transfer route from the transfer path 122 on the side of the input tray 120 to the loop portion 122A on the upstream side of the reading position is substantially straight. At the intersecting position 123, the document G proceeds not to the transfer path 122 on the side of the output tray 121 or the loop portion 122A on the downstream side of the reading position but straight.

Then, the document G is transferred to the loop portion 122A on the upstream side of the reading position so that its leading end is detected by the rear sensor 135. The leading end of the document G reaches the reading position when a predetermined time period elapses after it was detected by the rear sensor 135. Therefore, the image reading unit 22 starts the image reading of the document G, when the leading end of the document G reaches the reading position.

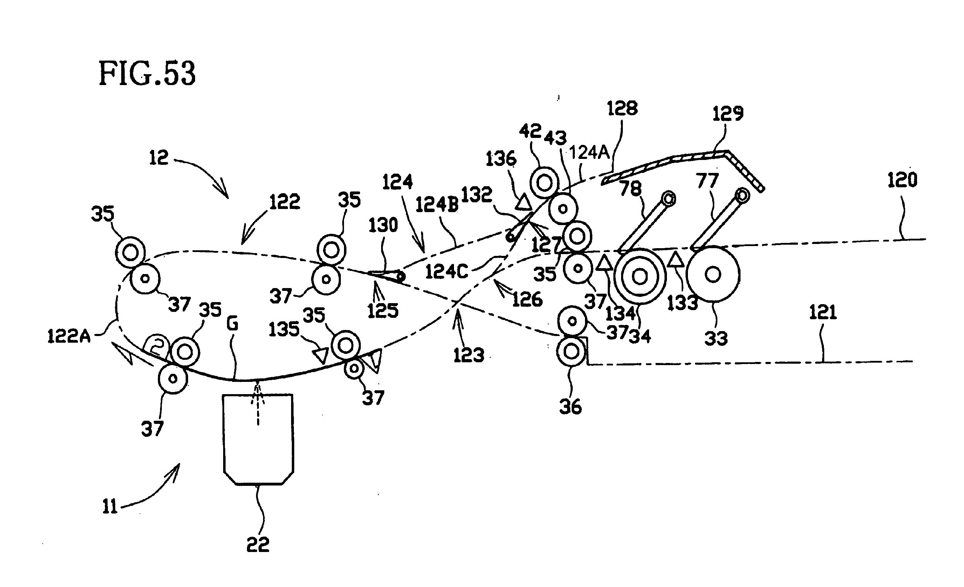

As shown in Fig. 53, the document G passes through the reading position with its first side opposing the image reading unit 22, so that the image reading unit 22 reads the image of the first side of the document G. When a predetermined time period elapses after the trailing end of the document G was detected by the rear sensor 135, the image reading unit 22 ends the image reading of the document G.

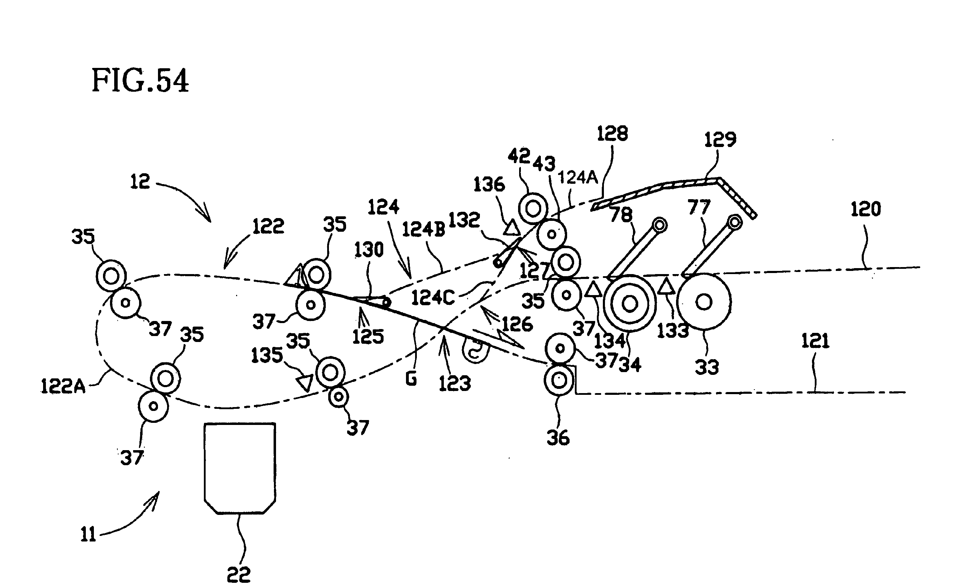

Moreover, the document G is transferred to the upper side, turned at the loop portion 122A and guided at the fourth branching position 125, as shown in Fig. 54, by the guide flap 130 so that it is transferred from the loop portion 122A on the reading position side to the side of the intersecting position 123. Then, the document G reaches the intersecting position 123 and proceeds from the loop portion 122A on the downstream side of the reading position to the transfer path 122 on the side of the output tray 121. Since the transfer route from the loop portion 122A on the downstream side of the reading position to the transfer path 122 on the side of the output tray 121 is substantially straight, the document G proceeds to the intersecting position 123 straight but not to the loop portion 122A on the upstream side of the reading position or on the side of the input tray 120.

Then, the document G is nipped by the discharge roller 36 and the pinch roller 37 and is discharged from the transfer path 122 to the output tray 121. When the input tray 120 is set with the next document G, the documents G on the input tray 120 are transferred sheet by sheet by repeating those actions so that their image reading is performed.

Next, the double-sided reading is described in the following. Here, the face, as indicated by "1", of the document G is the first side to be read at first in the double-sided reading, and the face, as indicated by "2", is the second side to be read later. The first side and the second side are in a front-back relationship.

When the reading start is inputted to the image reading apparatus 11, the guide flap 130 is switched to continue the transfer route at the fourth branching position 125 from the loop portion 122A on the reading position side to the bidirectional path 124 on the side of the branch portion 124B. On the other hand, the guide flap 132 is positioned, without any abutment against the document G, to continue the transfer route at the branching position 127 from the trunk portion 124A to the branch portion 124C.

Then, it is detected by the first front sensor 133 whether the document G is placed on the input tray 120, and the pick-up roller 33 and the separation roller 34 are rotated to let the document G in the transfer path 122. In the transfer path 122, the transfer roller 35 is rotated to transfer the document G from the upstream side to the downstream side, so that the document G fed from the input tray 120 to the transfer path 122 is transferred from the fifth branching position 126 toward the transfer path 122 on the side of the intersecting position 123. Moreover, the document G proceeds straight at the intersecting position 123 to the loop portion 122A on the upstream side of the reading position.

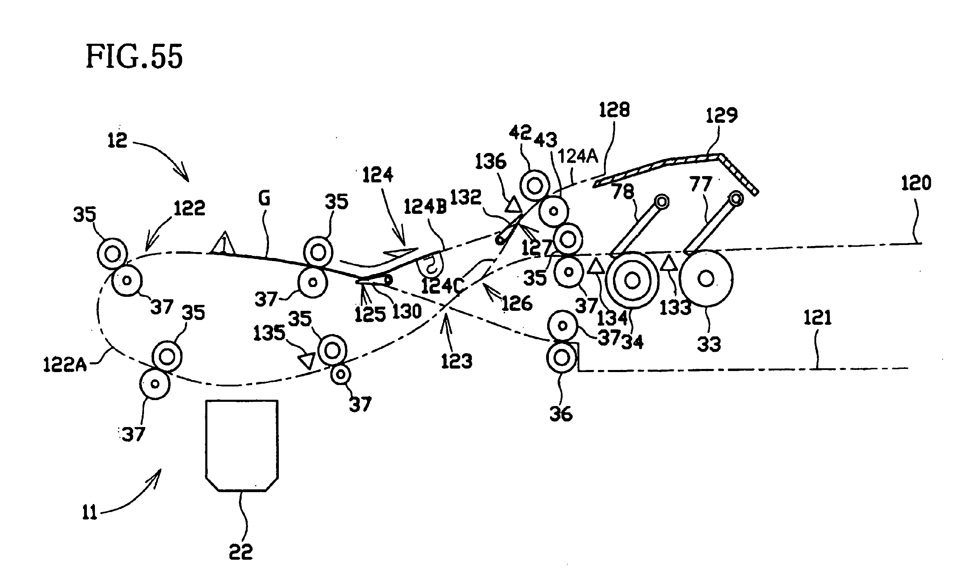

When the leading end of the document G is detected by the rear sensor 135 so that it reaches the reading position, the image reading of the first side of the document G is started by the image reading unit 22. When the trailing end of the document G is then detected by the rear sensor 135 so that it reaches the reading position, the image reading unit 22 ends the image reading of the document G. As shown in Fig. 55, the document G having its first side read proceeds at the fourth branching position 125, while being guided by the guide flap 130, from the loop portion 122A on the reading position side to the branch portion 124B of the bidirectional path 124.

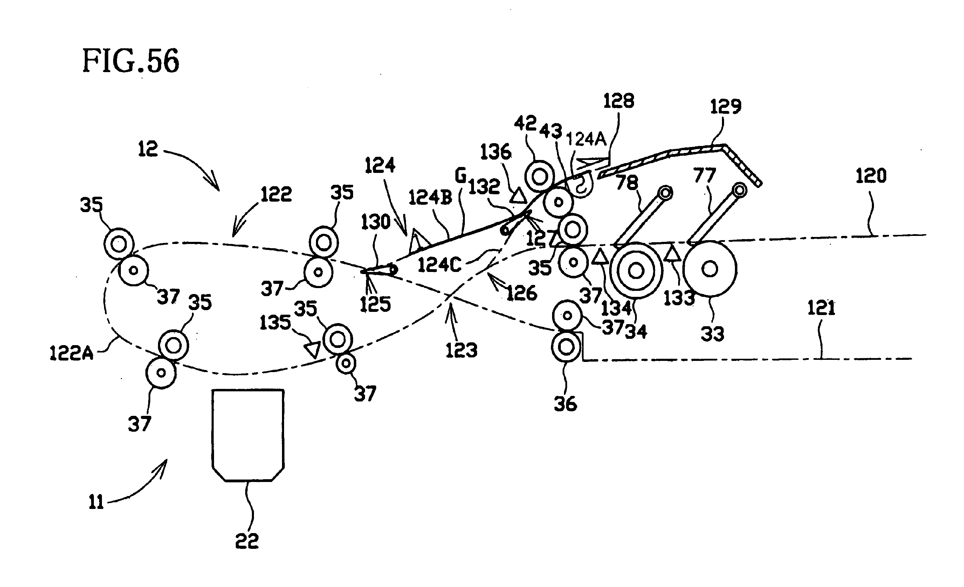

The document G transferred to the branch portion 124B comes at the branching position 127 into abutment against the guide flap 132. Then, the document G proceeds at the branching position 127, while pushing and rocking the guide flap 132, from the branch portion 124B of the bidirectional path 124 into the trunk portion 124A, as shown in Fig. 56.

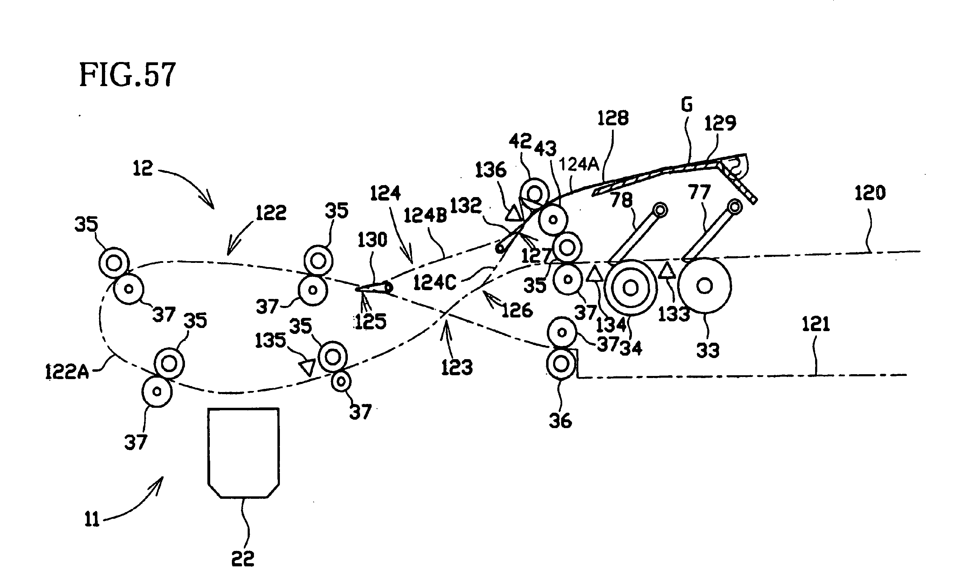

Then, the document G is nipped by the reversible roller 42 and the pinch roller 43 and is transferred in the trunk portion 124A of the bidirectional path 124 to the side of the terminal end 128 by the rotation of the reversible roller 42. After the document G completely proceeds into the trunk portion 124A, the reversible roller 42 is stopped. As shown in Fig. 57, specifically, when the trailing end of the document G having proceeded into the trunk portion 124A is detected by the sensor 136, it is determined that the document G has completely proceeded into the trunk portion 124A. When the reversible roller 42 is stopped, the document G stops, as shown in Fig. 57, while being nipped by the reversible roller 42 and the pinch roller 43. At this time, the document G partially protrudes from the terminal end 128 of the bidirectional path 124 to the outside of the ADF 12, but the protruded portion of the document G is supported by the document supporting portion 129. After this, the reversible roller 42 is rotated backward, so that the document G is responsively transferred to return into the trunk portion 124A on the side of the branching position 127. On the other hand, the guide flap 132 rocked by the document G restores the original state, in which the branch portion 124C continues from the trunk portion 124A, as the document G leaves.

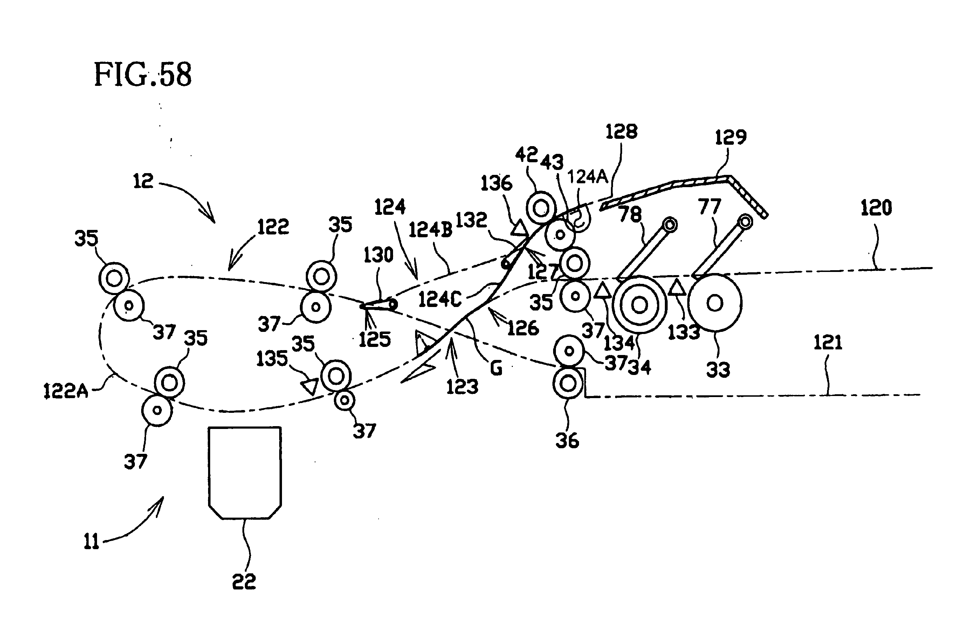

As shown in Fig. 58, the document G returned from the trunk portion 124A of the bidirectional path 124 is guided at the branching position 127 by the guide flap 132 to proceed into the branch portion 124C. Moreover, the document G proceeds at the fifth branching position 126 from the branch portion 124C to the transfer path 122 on the side of the intersecting position 123. The transfer route from the branch portion 124C to the transfer path 122 on the side of the input tray 120 is acutely bent so that the document G does not proceed from the branch portion 124C to the transfer path 122 on the side of the input tray 120. Moreover, the document G proceeds straight at the intersecting position 123 into the loop portion 122A on the upstream side of the reading position. Thus, the document G is transferred from the bidirectional path 124 to the transfer path 122 so that the document G is transferred again in the loop portion 122A in the state where the leading end and the trailing end are reversed from those of the state where it was first transferred in the loop portion 122A Then, the document G is transferred in the loop portion 122A that its second side opposes the reading position.

When it is detected by the rear sensor 135 that the leading end of the document G has reached the reading position, the image reading of the second side of the document G is started by the image reading unit 22. When it is determined by the rear sensor 135 that the trailing end of the document G has reached the reading position, on the other hand, the image reading unit 22 ends the image reading of the document G. Then, the document G having its second side read proceeds, while being guided by the guide flap 130, at the fourth branching position 125 from the loop portion 122A to the branch portion 124B of the bidirectional path 124. The document G further proceeds at the branching position 127 into the trunk portion 124A. After the document G completely proceeds into the trunk portion 124A, the reversible roller 42 is stopped. After this, the reversible roller 42 is rotated backward. In response to this, the document G proceeds at the branching portion 127 from the trunk portion 124A into the branch portion 124C, and is returned from the fifth branching position 126 to the transfer path 122 on the side of the intersecting position 123. At the intersecting position 123, the document G advances straight to the loop portion 122A on the upstream side of the reading position so that its leading end and trailing end are reversed again. When the document G completely proceeds into the trunk portion 124A for the second time, the guide flap 130 is switched to continue the transfer route at the fourth branching position 125 from the loop portion 122A on the reading position side to the side of the intersecting position 123. The sensor 136 detects that the document has completely proceeded into the trunk portion 124A a second time, and then sends a signal which causes the guide flap 130 to change position from the dotted line position to the solid line position shown in Fig. 50.

Then, the document G is transferred in the loop portion 122A and reaches the fourth branching position 125. As shown in Fig. 54, the document G is transferred, while being guided at the fourth branching position 125 by the guide flap 130, from the loop portion 122A on the reading position side to the side of the intersecting position 123. Then, the document G reaches the intersecting position 123 and proceeds from the loop portion 122A on the downstream side of the reading position to the transfer path 122 on the side of the discharge tray 121. Then, the document G is discharged to the output tray 121 by the discharge roller 36 with its first side being directed upward. When the input tray 120 is set with the next document G, the documents G on the input tray 120 are transferred sheet by sheet by repeating those actions so that their image reading is performed. Moreover, the documents G are sequentially discharged with the second sides being directed upward to the output tray 121 so that they may be stacked one on top of the other. As a result, the input tray 120 keeps the documents G stacked.

Thus, according to the image reading apparatus 11, the transfer path 122 intersects to form the loop portion 122A including the reading position, and the Y-shaped bidirectional path 124 for feeding the document G read again to the reading position is formed so that the branch portion 124B on one end side of the Y-shape is connected the fourth branch position 125 of the upper-side portion of the loop portion 122A of the transfer path 122 and the branch portion 124C on the other end side is connected to the fifth branching position 126 closer to the input tray 120 than the intersecting position 123 of the transfer path 122. It is, therefore, unnecessary to form transfer paths at the loop portion 122A of the transfer path 122. As a result, the device can be lowered to realize size reduction.

Here in this illustrative aspect, the double-sided reading actions by the image reading apparatus 11 have been described such that the documents G placed on the input tray 120 are discharged to the output tray 121 while keeping their order. When, however, it is unnecessary to register the order of the documents G placed on the input tray 120 and the order of the documents G discharged to the output tray 121, the document G need not be subjected again to the third transfer path, but may be transferred and discharged to the output tray 121. As a result, the order of the documents G on the output tray 121 is not kept, but the third passage transfer can be omitted to shorten the time period required for reading the two sides of the documents G.

In this illustrative aspect the guide flap 132 is caused to switch the transfer path by the abutment against the document G. By applying a driving force from a transfer motor or the like to the guide flap 132, however, this guide flap 132 may also be constructed to switch the transfer path independently of the abutment against the document G. In this modification, it is arbitrary whether it is determined on the basis of the detection signal of the sensor 136, for example, if the document G has passed through the branching position 127 into the trunk portion 124A. In this illustrative aspect, the guide can be realized as the guide flaps 130 and 132, or an elastically deformable guide film can be used as the guide means, for example, in place of the guide flap 132.

## Claims

1. An automatic document feeder comprising:
an input tray configured to receive a document;
an output tray positioned one of above and below the input tray;
transfer elements for transferring a document from the input tray to the output tray;
an input transfer path configured to guide a document during transfer from the input tray passed a scanning point to an end point positioned above the input tray;
an output transfer path configured to guide the document during transfer from the end point passed the scanning point to the output tray; and
an intermediate transfer path configured to guide the document during transfer from the end point passed the scanning point to the end point again, wherein the document is guided along the intermediate transfer path after being guided along the input path and prior to being guided along the output transfer path.

2. The automatic document feeder according to claim 1, wherein the document is not scanned when passing the scanning point during transfer in the output transfer path.

3. The automatic document feeder according to claim 1 or 2, wherein the output transfer path is configured to guide the document through a branching point twice.

4. The automatic document feeder according to claim 1, 2 or 3, wherein the intermediate transfer path is configured to guide the document through the branching point twice.

5. The automatic document transfer feeder according to claim 3 or 4, wherein the document is scanned when passing the scanning point in the input and intermediate transfer paths.

6. The automatic document feeder according to any preceding claim, wherein the transfer elements include transfer rollers.

7. The automatic document feeder according to any preceding claim, wherein the output tray is positioned above the input tray.

8. The automatic document feeder according to claim 7, wherein the output tray is positioned above the end point.

9. The automatic document feeder according to any preceding claim, wherein the end point is positioned above the input tray and the output tray.

10. The automatic document feeder according to any preceding claim, wherein the transfer elements include a reversible transfer roller and the automatic document feeder further includes a transfer motor configured to drive the reversible transfer roller in two separate directions, one opposite the other at separate times.

11. The automatic document feeder according to claim 10, wherein in the input transfer path, the reversible transfer roller is driven in one direction and in the output transfer path the reversible transfer roller is driven in the opposite direction.

12. The automatic document feeder according to claim 11, further comprising a sensor in the input transfer path for determining when the document passes the reversible transfer roller, and in response to the sensor determining the document passing the reversible transfert roller, the transfer motor drives the reversible transfer roller in the opposite direction.

13. The automatic document feeder according to claim 10, 11 or 12, wherein
in the input transfer path, the reversible transfer roller is driven in a first direction, and
in the output transfer path the document passes the reversible transfer roller twice, the reversible transfer roller is driven in a second direction opposite to the first direction the first time the document passes the reversible transfer roller and in the first direction the second time the document passes the reversible transfer roller.

14. The automatic document feeder according to any preceding claim, wherein a transfer element is configured to transfer the topmost document received in the input tray.

15. The automatic document feeder according to any preceding claim, wherein a transfer element is configured to transfer the bottommost document received in the input tray.

16. The automatic document feeder according to any preceding claim, further including a guide located along the input and output transfer paths for directing the document in a first direction to the end point in the input transfer path and in a second direction toward the output tray different from the first direction in the output transfer path.

17. The automatic document feeder according to claim 16, further including
the intermediate transfer path configured to guide the document during transfer from the end point passed the scanning point to the end point again, wherein the document is guided along the intermediate transfer path after being guided along the input transfer path and prior to being guided along the output transfer path, and
a sensor for detecting that the document is transferred to the end point in the intermediate transfer path, and for causing the guide to change positions to direct the document toward the output tray in the output transfer path in response to detecting that the document is transferred to the end point in the intermediate transfer path.

18. An automatic document feeder comprising:
an input tray configured to receive a document;
an output tray;
transfer elements for transferring a document from the input tray to the output tray;
an input transfer path configured to guide a document during transfer from the input tray passed a scanning point to a first end point positioned above the input tray;
an intermediate transfer path configured to guide the document during transfer from the first end point passed the scanning point to a second end point positioned above the input tray; and
an output transfer path configured to guide the document during transfer from the second end point passed the scanning point to the output tray.

19. The automatic document feeder according to claim 18, wherein the output tray is positioned above the input tray.

20. The automatic document feeder according to claim 18 or 19, wherein the intermediate transfer path and the output transfer path are configured to guide the document through a branching point twice.

21. The automatic document feeder according to claim 18, 19 or 20, wherein the second end point is positioned below the output tray.

22. The automatic document feeder according to any one of claims 18 to 21, wherein the second end point is positioned above the input tray.

23. The automatic document feeder according to any one of claims 18 to 22, wherein
the transfer elements include a first reversible transfer roller in the input transfer path and in the intermediate transfer path and a second reversible transfer roller in the intermediate transfer path and the output transfer path, and
the automatic document feeder further includes at least one transfer motor configured to drive the first reversible transfer roller in a first direction in the input transfer path and in a second direction opposite the first direction in the intermediate transfer path, and to drive the second reversible transfer roller in one direction in the intermediate transfer path and in the opposite direction in the output transfer path.

24. The automatic document feeder according to claim 23, wherein the first reversible transfer roller is in the output transfer path and the at least one transfer motor is configured to drive the first reversible transfer roller in the first direction in the output transfer path.

25. The automatic document feeder according to claim 23 or 24, further comprising:
a first sensor for determining when the document passes the first reversible transfer roller in the input and intermediate transfer paths, and in response to the first sensor determining when the document passes the first reversible transfer roller in the input and intermediate transfer paths, the transfer motor driving the first reversible transfer roller in the opposite direction; and
a second sensor for determining when the document passes the second reversible transfer roller in the intermediate transfer path, and in response to the second sensor determining when the document passes the second reversible transfer roller in the intermediate transfer path, the transfer motor driving the second reversible transfer roller in the opposite direction.

## Patentansprüche

1. Automatische Dokumentenvorschubvorrichtung mit:
einem Eingabetrog,
der zum Aufnehmen eines Dokumentes aufgebaut ist;
einem Ausgabetrog,
der über oder unter dem Eingabetrog positioniert ist;
Übertragungselementen zum Übertragen eines Dokumentes von dem Eingabetrog zu dem Ausgabetrog;
einem Eingabeübertragungspfad, der zum Führen eines Dokumentes während der Übertragung von dem Eingangstrog aufgebaut ist, das an einem Abtastpunkt vorbei gegangen ist, zu einem über dem Eingabetrog positionierten Endpunkt;
einem Ausgabeübertragungspfad, der zum Führen des Dokumentes während der Übertragung von dem Endpunkt aufgebaut ist, das an dem Abtastpunkt vorbei gegangen ist, zu dem Ausgabetrog;
einem Zwischenübertragungspfad, der zum Führen des Dokumentes während der Übertragung von dem Endpunkt aufgebaut ist, das an dem Abtastpunkt zu dem Endpunkt wieder vorbei gegangen ist, worin das Dokument entlang des Zwischenübertragungspfades geführt wird, nachdem es entlang des Eingabepfades geführt ist und bevor es entlang des Ausgabeübertragungspfades geführt wird.

2. Automatische Dokumentenvorschubvorrichtung nach Anspruch 1, bei der das Dokument nicht abgetastet wird, wenn es an dem Abtastpunkt während der Übertragung in dem Ausgabeübertragungspfad vorbei geht.

3. Automatische Dokumentenvorschubvorrichtung nach Anspruch 1 oder 2, bei der der Ausgabeübertragungspfad aufgebaut ist zum Führen des Dokumentes zweimal durch einen Verzweigungspunkt.

4. Automatische Dokumentenvorschubvorrichtung nach Anspruch 1, 2 oder 3, bei der der Zwischenübertragungspfad aufgebaut ist zum Führen des Dokumentes zweimal durch den Verzweigungspunkt.

5. Automatische Dokumentenübertragungsvorschubvorrichtung nach Anspruch 3 oder 4, bei der das Dokument abgetastet wird, wenn es an dem Abtastpunkt in dem Eingabe- und Zwischenübertragungspfad vorbei geht.

6. Automatische Dokumentenvorschubvorrichtung nach einem der vorhergehenden Ansprüche, bei der die Übertragungselemente Übertragungsrollen enthalten.

7. Automatische Dokumentenvorschubvorrichtung nach einem der vorhergehenden Ansprüche, bei der der Ausgabetrog über dem Eingabetrog positioniert ist.

8. Automatische Dokumentenvorschubvorrichtung nach Anspruch 7, bei der der Ausgabetrog über dem Endpunkt positioniert ist.

9. Automatische Dokumentenvorschubvorrichtung nach einem der vorhergehenden Ansprüche, bei der der Endpunkt über dem Eingabetrog und dem Ausgabetrog positioniert ist.

10. Automatische Dokumentenvorschubvorrichtung nach einem der vorhergehenden Ansprüche, bei der die Übertragungselemente eine umkehrbare Übertragungsrolle enthalten und die automatische Dokumentenvorschubvorrichtung weiter einen Übertragungsmotor enthält, der zum Antreiben der umkehrbarer Übertragungsrolle in zwei getrennte Richtungen aufgebaut ist, eine entgegengesetzt zu den anderen zu getrennten Zeiten.

11. Automatische Dokumentenvorschubvorrichtung nach Anspruch 10, bei der in dem Eingabeübertragungspfad die umkehrbare Übertragungsrolle in eine Richtung angetrieben wird und in dem Ausgabeübertragungspfad die umkehrbare Übertragungsrolle in der entgegengesetzten Richtung angetrieben wird.

12. Automatische Dokumentenvorschubvorrichtung nach Anspruch 11, weiter mit einem Sensor in dem Eingabeübertragungspfad zum Bestimmen, wann das Dokument an der umkehrbaren Übertragungsrolle vorbei geht, und als Reaktion des Sensors, der bestimmte, dass das Dokument an der umkehrbaren Übertragungsrolle vorbei geht, der Übertragungsmotor die umkehrbare Übertragungsrolle in der entgegengesetzten Richtung antreibt.

13. Automatische Dokumentenvorschubvorrichtung nach Anspruch 10, 11 oder 12, bei der
in dem Eingabeübertragungspfad die umkehrbare Übertragungsrolle in der ersten Richtung angetrieben wird und in dem Ausgabeübertragungspfad das Dokument an der umkehrbaren Übertragungsrolle zweimal vorbei geht, die umkehrbare Übertragungsrolle in einer zweiten Richtung entgegengesetzt zu der ersten Richtung angetrieben wird zu der ersten Zeit, zu der das Dokument an der umkehrbaren Übertragungsrolle vorbei geht, und in der ersten Richtung das zweite Mal, zu der das Dokument an der umkehrbaren Übertragungsrolle vorbei geht.

14. Automatische Dokumentenvorschubvorrichtung nach einem der vorhergehenden Ansprüche, bei der ein Übertragungselement zum Übertragen des obersten Dokumentes aufgebaut ist, das in dem Eingabetrog aufgenommen ist.

15. Automatische Dokumentenvorschubvorrichtung nach einem der vorhergehenden Ansprüche, bei der ein Übertragungselement zum Übertragen des untersten Dokumentes aufgebaut ist, das in dem Eingabetrog aufgenommen ist.

16. Automatische Dokumentenvorschubvorrichtung nach einem der vorhergehenden Ansprüche, weiter mit einer Führung, die entlang des Eingabe- und Ausgabepfades angeordnet ist, zum Führen des Dokumentes in einer ersten Richtung zu einem Endpunkt in dem Eingabeübertragungspfad und in einer zweiten Richtung zu dem Ausgabetrog unterschiedlich von der ersten Richtung in dem Ausgabeübertragungspfad.

17. Automatische Dokumentenvorschubvorrichtung nach Anspruch 16, weiter mit
dem Zwischenübertragungspfad, der aufgebaut ist zum Führen des Dokumentes während der Übertragung von dem Endpunkt, das an dem Abtastpunkt vorbei gegangen ist, wieder zu dem Endpunkt, worin das Dokument entlang des Zwischenübertragungspfades geführt wird, nachdem es entlang des Eingabeübertragungspfades geführt ist und bevor es entlang des Ausgabeübertragungspfades geführt wird, und
einem Sensor zum Erfassen, dass das Dokument zu dem Endpunkt in dem Zwischenübertragungspfad übertragen ist, und zum Bewirken, dass die Führung Positionen ändert zum Führen des Dokumentes zu dem Ausgabetrog in dem Ausgabeübertragungspfad als Reaktion auf das Erfassen, dass das Dokument zu dem Endpunkt in dem Zwischenübertragungspfad übertragen ist.

18. Automatische Dokumentenvorschubvorrichtung mit:
einem Eingabetrog, der zum Aufnehmen eines Dokumentes aufgebaut ist;
einem Ausgabetrog;
Übertragungselementen zum Übertragen eines Dokumentes von dem Eingabetrog zu dem Ausgabetrog;
einem Eingabeübertragungspfad, der zum Führen eines Dokumentes während der Übertragung von dem Eingabetrog aufgebaut ist, das an einem Abtastpunkt vorbei gegangen ist, zu einer ersten Endposition, die über dem Eingabetrog positionier ist;
einem Zwischenübertragungspfad, der zum Führen des Dokumentes während der Übertragung von dem ersten Endpunkt aufgebaut ist, das an dem Abtastpunkt vorbei gegangen ist, zu einem zweiten Endpunkt, der über dem Eingabetrog positioniert ist;
einem Ausgabeübertragungspfad, der zum Führen des Dokumentes während der Übertragung von dem zweiten Endpunkt aufgebaut ist, das an dem Abtastpunkt vorbei gegangen ist, zu dem Ausgabetrog.

19. Automatische Dokumentenübertragungsvorrichtung nach Anspruch 18, bei der der Ausgabetrog über dem Eingabetrog positioniert ist.

20. Automatische Dokumentenvorschubvorrichtung nach Anspruch 18 oder 19, bei der der Zwischenübertragungspfad und der Ausgabepfad aufgebaut sind zum Führen des Dokumentes zweimal durch einen Verzweigungspunkt.

21. Automatische Dokumentenvorschubvorrichtung nach Anspruch 18, 19 oder 20, bei der der zweite Endpunkt unter dem Ausgabetrog positioniert ist.

22. Automatische Dokumentenvorschubvorrichtung nach einem der Ansprüche 18 bis 21, bei der der zweite Endpunkt über dem Eingabetrog positioniert ist.

23. Automatische Dokumentenvorschubvorrichtung nach einem der Ansprüche 18 bis 22, bei der
die Übertragungselemente eine erste umkehrbare Übertragungsrolle in dem Eingabeübertragungspfad und in dem Zwischenübertragungspfad und eine zweite umkehrbare Übertragungsrolle in dem Zwischenübertragungspfad und dem Ausgabeübertragungspfad enthalten und
die automatische Dokumentenvorschubvorrichtung weiter mindestens einen Übertragungsmotor enthält, der zum Antreiben der ersten umkehrbaren Übertragungsrolle in eine ersten Richtung in dem Eingabeübertragungspfad und in eine zweiten Richtung entgegengesetzt zu der ersten Richtung in dem Zwischenübertragungspfad und zum Antreiben der zweiten umkehrbaren Übertragungsrolle in einer Richtung in den Zwischenübertragungspfad und in der entgegengesetzten Richtung in dem Ausgabeübertragungspfad aufgebaut ist.

24. Automatische Dokumentenvorschubvorrichtung nach Anspruch 23, bei der die erste umkehrbare Übertragungsrolle in dem Ausgabeübertragungspfad ist und der mindestens eine Übertragungsmotor aufgebaut ist zum Antreiben der ersten umkehrbaren Übertragungsrolle in der ersten Richtung in dem Ausgabeübertragungspfad.

25. Automatische Dokumentenvorschubvorrichtung in Anspruch 23 oder 24, weiter mit:
einem ersten Sensor zum Bestimmen, wann das Dokument an der ersten umkehrbaren Übertragungsrolle in dem Eingabe- und Zwischenübertragungspfad vorbei geht, und als Reaktion auf den ersten Sensor, der bestimmt, wann das Dokument an der ersten umkehrbaren Übertragungsrolle in dem Eingabe- und Zwischenübertragungspfad vorbei geht, der Übertragungsmotor die erste umkehrbare Übertragungsrolle und der entgegengesetzten Richtung antreibt;
einem zweiten Sensor zum Bestimmen, wann das Dokument an der zweiten umkehrbaren Übertragungsrolle in dem Zwischenübertragungspfad vorbei geht, und als Reaktion, dass der zweite Sensor bestimmt, wann das Dokument an der zweiten umkehrbaren Übertragungsrolle in dem Zwischenübertragungspfad vorbei geht, der Übertragungsmotor die zweite umkehrbare Übertragungsrolle in der entgegengesetzten Richtung antreibt.

## Revendications

1. Dispositif d'alimentation de documents automatique comprenant:
un bac d'entrée configuré pour recevoir un document;
un bac de sortie positionné l'un de au dessus et au dessous du bac d'entrée;
des éléments de transfert pour transférer un document du bac d'entrée au bac de sortie;
un chemin de transfert d'entrée configuré pour guider un document pendant un transfert du bac d'entrée après un point de balayage jusqu'à un point final positionné au dessus du bac d'entrée;
un chemin de transfert de sortie configuré pour guider le document pendant un transfert du point final après le point de balayage jusqu'au bac de sortie; et
un chemin de transfert intermédiaire configuré pour guider le document pendant un transfert du point final après le point de balayage jusqu'au point final à nouveau, où le document est guidé le long du chemin de transfert intermédiaire après avoir été guidé le long du chemin d'entrée et avant d'être guidé le long du chemin de transfert de sortie.

2. Dispositif d'alimentation de documents automatique selon la revendication 1, dans lequel le document n'est pas balayé lorsqu'il passe par le point de balayage pendant un transfert dans le chemin de transfert de sortie.

3. Dispositif d'alimentation de documents automatique selon la revendication 1 ou 2, dans lequel le chemin de transfert de sortie est configuré pour guider le document deux fois à travers un point de branchement.

4. Dispositif d'alimentation de documents automatique selon la revendication 1, 2 ou 3, dans lequel le chemin de transfert intermédiaire est configuré pour guider le document deux fois à travers le point de branchement.

5. Dispositif d'alimentation de documents automatique selon la revendication 3 ou 4, dans lequel le document est balayé lorsqu'il passe par le point de balayage dans les chemins de transfert d'entrée et intermédiaire.

6. Dispositif d'alimentation de documents automatique selon l'une quelconque des revendications précédentes, dans lequel les éléments de transfert incluent des rouleaux de transfert.

7. Dispositif d'alimentation de documents automatique selon l'une quelconque des revendications précédentes, dans lequel le bac de sortie est positionné au dessus du bac d'entrée.

8. Dispositif d'alimentation de documents automatique selon la revendication 7, dans lequel le bac de sortie est positionné au dessus du point final.

9. Dispositif d'alimentation de documents automatique selon l'une quelconque des revendications précédentes, dans lequel le point final est positionné au dessus du bac d'entrée et du bac de sortie.

10. Dispositif d'alimentation de documents automatique selon l'une quelconque des revendications précédentes, dans lequel les éléments de transfert incluent un rouleau de transfert réversible et le dispositif d'alimentation de documents automatique inclut en plus un moteur de transfert configuré pour entraîner le rouleau de transfert réversible dans deux directions séparées, l'une opposée à l'autre, à des moments distincts.

11. Dispositif d'alimentation de documents automatique selon la revendication 10, dans lequel dans le chemin de transfert d'entrée, le rouleau de transfert réversible est entraîné dans une direction et dans le chemin de transfert de sortie le rouleau de transfert réversible est entraîné dans la direction opposée.

12. Dispositif d'alimentation de documents automatique selon la revendication 11, comprenant en plus un capteur dans le chemin de transfert d'entrée pour déterminer à quel moment le document franchit le rouleau de transfert réversible, et en réponse au fait que le capteur détermine que le document franchit le rouleau de transfert réversible, le moteur de transfert entraîne le rouleau de transfert réversible dans la direction opposée.

13. Dispositif d'alimentation de documents automatique selon la revendication 10, 11 ou 12, dans lequel
dans le chemin de transfert d'entrée, le rouleau de transfert réversible est entraîné dans une première direction, et
dans le chemin de transfert de sortie le document franchit deux fois le rouleau de transfert réversible, le rouleau de transfert réversible est entraîné dans une deuxième direction opposée à la première direction lorsque le document franchit le rouleau de transfert réversible la première fois et dans la première direction lorsque le document franchit le rouleau de transfert réversible la deuxième fois.

14. Dispositif d'alimentation de documents automatique selon l'une quelconque des revendications précédentes, dans lequel un élément de transfert est configuré pour transférer le document le plus haut reçu dans le bac d'entrée.

15. Dispositif d'alimentation de documents automatique selon l'une quelconque des revendications précédentes, dans lequel un élément de transfert est configuré pour transférer le document le plus bas reçu dans le bac d'entrée.

16. Dispositif d'alimentation de documents automatique selon l'une quelconque des revendications précédentes, incluant en plus un guide situé le long des chemins de transfert d'entrée et de sortie pour diriger le document dans une première direction au point final dans le chemin de transfert d'entrée et dans une deuxième direction vers le bac de sortie différente de la première direction dans le chemin de transfert de sortie.

17. Dispositif d'alimentation de documents automatique selon la revendication 16, incluant en plus
le chemin de transfert intermédiaire configuré pour guider le document pendant un transfert du point final après le point de balayage à nouveau jusqu'au point final, où le document est guidé le long du chemin de transfert intermédiaire après avoir été guidé le long du chemin de transfert d'entrée et avant d'être guidé le long du chemin de transfert de sortie, et
un capteur pour détecter que le document est transféré au point final dans le chemin de transfert intermédiaire, et pour amener le guide à changer des positions pour diriger le document vers le bac de sortie dans le chemin de transfert de sortie en réponse au fait de détecter que le document est transféré au point final dans le chemin de transfert intermédiaire.

18. Dispositif d'alimentation de documents automatique comprenant:
un bac d'entrée configuré pour recevoir un document;
un bac de sortie;
des éléments de transfert pour transférer un document du bac d'entrée au bac de sortie;
un chemin de transfert d'entrée configuré pour guider un document pendant un transfert du bac d'entrée après un point de balayage jusqu'à un premier point final positionné au dessus du bac d'entrée;
un chemin de transfert intermédiaire configuré pour guider le document pendant un transfert du premier point final après le point de balayage jusqu'à un deuxième point final positionné au dessus du bac d'entrée; et
un chemin de transfert de sortie configuré pour guider le document pendant un transfert du deuxième point final après le point de balayage jusqu'au bac de sortie.

19. Dispositif d'alimentation de documents automatique selon la revendication 18, dans lequel le bac de sortie est positionné au dessus du bac d'entrée.

20. Dispositif d'alimentation de documents automatique selon la revendication 18 ou 19, dans lequel le chemin de transfert intermédiaire et le chemin de transfert de sortie sont configurés pour guider le document deux fois à travers un point de branchement.

21. Dispositif d'alimentation de documents automatique selon la revendication 18, 19 ou 20, dans lequel le deuxième point final est positionné au dessous du bac de sortie.

22. Dispositif d'alimentation de documents automatique selon l'une quelconque des revendications 18 à 21, dans lequel le deuxième point final est positionné au dessus du bac d'entrée.

23. Dispositif d'alimentation de documents automatique selon l'une quelconque des revendications 18 à 22, dans lequel
les éléments de transfert incluent un premier rouleau de transfert réversible dans le chemin de transfert d'entrée et dans le chemin de transfert intermédiaire et un deuxième rouleau de transfert réversible dans le chemin de transfert intermédiaire et le chemin de transfert de sortie, et
le dispositif d'alimentation de documents automatique inclut en plus au moins un moteur de transfert configuré pour entraîner le premier rouleau de transfert réversible dans une première direction dans le chemin de transfert d'entrée et dans une deuxième direction opposée à la première direction dans le chemin de transfert intermédiaire, et pour entraîner le deuxième rouleau de transfert réversible dans une direction dans le chemin de transfert intermédiaire et dans la direction opposée dans le chemin de transfert de sortie.

24. Dispositif d'alimentation de documents automatique selon la revendication 23, dans lequel le premier rouleau de transfert réversible est dans le chemin de transfert de sortie et le au moins un moteur de transfert est configuré pour entraîner le premier rouleau de transfert réversible dans la première direction dans le chemin de transfert de sortie.

25. Dispositif d'alimentation de documents automatique selon la revendication 23 ou 24, comprenant en plus:
un premier capteur pour déterminer à quel moment le document franchit le premier rouleau de transfert réversible dans les chemins de transfert d'entrée et intermédiaire, et en réponse au fait que le premier capteur détermine le moment auquel le document franchit le premier rouleau de transfert réversible dans les chemins de transfert d'entrée et intermédiaire, le moteur de transfert entraîne le premier rouleau de transfert réversible dans la direction opposée; et
un deuxième capteur pour déterminer à quel moment le document franchit le deuxième rouleau de transfert réversible dans le chemin de transfert intermédiaire, et en réponse au fait que le deuxième capteur détermine le moment auquel le document franchit le deuxième rouleau de transfert réversible dans le chemin de transfert intermédiaire, le moteur de transfert entraîne le deuxième rouleau de transfert réversible dans la direction opposée.
